(19) Europäisches Patentamt
European Patent Office
Office européen des brevets

(11) EP 3 573 472 B1

(12) EUROPEAN PATENT SPECIFICATION

(45) Date of publication and mention of the grant of the patent:
**06.11.2024 Bulletin 2024/45**

(21) Application number: **18705039.8**

(22) Date of filing: **24.01.2018**

(51) International Patent Classification (IPC):
***A23K 20/00*** *(2016.01)* ***A23K 20/163*** *(2016.01)*
***A23K 20/10*** *(2016.01)* ***A23K 20/28*** *(2016.01)*

(52) Cooperative Patent Classification (CPC):
**A23K 20/163; A23K 20/00; A23K 20/10; A23K 20/28**

(86) International application number:
**PCT/US2018/014978**

(87) International publication number:
**WO 2018/140450 (02.08.2018 Gazette 2018/31)**

# (54) GRANULATED FEED SUPPLEMENT AND METHODS FOR MAKING AND USING

GRANULIERTER FUTTERZUSATZ UND VERFAHREN ZUR HERSTELLUNG UND VERWENDUNG

COMPLÉMENT ALIMENTAIRE EN GRANULÉS ET SES PROCÉDÉS DE FABRICATION ET D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2017 US 201762449959 P**

(43) Date of publication of application:
**04.12.2019 Bulletin 2019/49**

(73) Proprietor: **Omnigen Research, L.L.C.**
**Corvallis OR 97330 (US)**

(72) Inventors:
- **COSTIGAN, Timothy, E.**
  **Quincy, IL 62305 (US)**
- **MCLEAN, Derek, J.**
  **Corvallis, OR 97333 (US)**
- **MITCHELL, Gordon, R.**
  **Quincy, IL 62305 (US)**
- **JACOBSEN, Erich, M.**
  **Quincy, IL 62305 (US)**
- **WALKER, Elvin, D.**
  **Quincy, IL 62305 (US)**
- **DESKINS, Gregory, A.**
  **Quincy, IL 62305 (US)**
- **BEAIRSTO, Taylor, D.**
  **Quincy, IL 62305 (US)**

(74) Representative: **J A Kemp LLP**
**80 Turnmill Street**
**London EC1M 5QU (GB)**

(56) References cited:
**WO-A1-2007/021262** **WO-A1-2015/017336**
**WO-A1-2015/123456** **US-A1- 2014 004 195**

EP 3 573 472 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

This invention concerns a low dust, homogenous granular feed supplement composition for animals, and methods for its administration. Methods for manufacture of the composition are also disclosed herein but not defined in the claims. The invention is as defined in the appended set of claims.

### BACKGROUND

Powdered animal feed supplements can present difficulties during manufacture and use because the very fine particles that are often present in such compositions can behave quite differently in the normal ranges of operating conditions. These difficulties may include a dusty work environment, segregation, flood (surge) feeding and bridging. The tendency of a material to experience a triboelectric effect is one of the primary causes of these difficulties. Electrostatic charges can accumulate on particles during conveyance and blending. These charges are particularly problematic when they are carried by very fine particles (dusts).

Dust created during the handling of materials or escaping from manufacturing systems may remain suspended in the air for up to multiple hours. In locations where these activities occur indoors, the dust can affect the ability to maintain sanitary conditions, the comfort and health of workers, and has the potential to create an explosion hazard. This may force the use of collection systems to control fugitive dust.

In addition, the dust particles may contain significant and unequal quantities of the supplement ingredients as a result of the different electrostatic properties of each individual ingredient. Charged dust particles are more likely to become fugitive dust, which can result in effectively removing a proportion of a desire ingredients from the blended product. Charged dust particles can also adhere to conveyance and other processing equipment resulting in the accumulation and release of a portion of one or more of the ingredients, causing a higher degree of variation in the final product.

The dust itself may therefore cause a lack of uniformity in the concentration of each ingredient within the supplement. Additionally, recycling the by-product streams and materials from dust collection may cause the feed mixtures to have a higher or lower concentration of a specific supplement ingredient. And this problem can be magnified over multiple batches.

WO 2015/017336 A1 discloses a combination of a polyphenol-containing plant material, a plant extract derived from the polyphenol-containing plant material and a composition that comprises glucan, silica, mineral clay and mannans.

WO 2015/123456 A1 discloses a composition comprising a glucan, silica, mineral clay, mannan, and optionally an endoglucanohydrolase and may be administered to an animal.

WO 2007/021262 A1 discloses a combination of β-1,3-(4)-endoglucanohydrolase, β-1,3-(4)-glucan, diatomaceous earth, mineral clay and glucomannan, which may be incorporated into feeds or foods.

### SUMMARY

According to the invention, there is provided a granular composition comprising silica, mineral clay, glucan and mannans, the granular composition having a dispersion value of 20% or less at 2 minutes, wherein the dispersion value is calculated by spraying the granular composition with water using a mechanical spray head positioned over a 500 mesh (0.025 mm) sieve and measuring a percentage of material that remains on the sieve after 2 minutes,
wherein at least 40% by weight of particles in the granular composition are granules having a particle size of from greater than 0.15 mm (100 mesh) to 4.8 mm (4 mesh),
further wherein the particle size is measured according to ANSI/ASAE Standard S319.4.

Also provided is the granular composition of the invention for use for administration to an animal to have a beneficial effect on the animal, wherein the beneficial effect comprises augmenting the animal's innate immune system, increasing the animal's milk production, treating or preventing an infectious disease, treating or preventing a non-infectious disease, treating or preventing stress, treating or preventing a stress-related condition or disease, helping increase longevity of the animal, and/or improve the animal's feed conversion rate.

Disclosed herein is a composition, comprising silica, mineral clay, glucan, mannans or any combination thereof. In certain embodiments of the invention, the composition comprises silica, mineral clay, glucan and mannans. The composition maybe a granular composition and/or may have a bulk loose density of from 640.7 kg/$m^3$ (40 lb/$ft^3$) to 2402.8 kg/$m^3$ (150 lb/$ft^3$). In some embodiments, each granule in the granular composition comprises silica, mineral clay, glucan and/or mannans, and optionally endoglucanohydrolase, in relative amounts substantially the same as a relative amount of each ingredient in the composition as whole. Each granule in the granular composition may comprise, consist essentially of, or consist of, silica, mineral clay, glucan, mannans and endoglucanohydrolase. Alternatively, or additionally, each granule may comprise a substantially homogenous blend of silica, mineral clay, glucan and mannans, and optionally

endoglucanohydrolase. The composition comprises greater than 40% by weight granules having at least one dimension between 0.15 mm (100 mesh, U.S. standard mesh size) and 4.8 mm (4 mesh), and in some embodiments, the composition comprises greater than 90% by weight granules having at least one dimension between 0.15 mm (100 mesh) and 2 mm (10 mesh). And/or the composition may comprise from greater than 0% to 100% granules by weight and from 0% to no more than 60%, such as no more than 10%, particles by weight, the granules having at least one dimension between 10 mesh (2 mm) and 100 mesh (0.15 mm), and the particles having at least one dimension of less than (i.e., smaller than) 100 mesh (0.15 mm). In any embodiments, the granular composition comprises at least one granules, and may comprise plural granules. Each granule may comprise silica, mineral clay, glucan and mannans, the granules having a size that when administered to an animal increases expression of interleukin 10 receptor β (IL10RB) for a time period subsequent to administration, such as subsequent to the onset of administration, relative to an animal that does not receive the composition. In some embodiments the time period may be from the start of administration to from 28 days to at least 42 days. And/or the composition may have a mineral coefficient of variation of from 0% to 10%, or a proximate coefficient of variation of from 0% to 20%, or both.

In any embodiments, the composition may further comprise an endoglucanohydrolase, such as from 0.05 wt% to 5 wt% endoglucanohydrolase, or from 0.1 wt% to 3 wt% endoglucanohydrolase. In some embodiments, the weight% for endoglucanohydrolase is based on an endoglucanohydrolase product having about 70,000 units/gram endoglucanohydrolase. However, a person of ordinary skill in the art will understand that the present disclosure also contemplates using an endoglucanohydrolase product having a greater or smaller units/gram amount than about 70,000 units/gram, and using an amount of such a product sufficient to provide substantially the same amount of enzyme in the composition as the above disclosed ranges for the 70,000 units/gram product. In any embodiments, the endoglucanohydrolase may be β-1,3 (4)-endoglucanohydrolase.

The composition may comprise 1-40 wt% silica, 0.5-25 wt% glucan and mannans, and 40-92 wt% mineral clay, in amounts relative to each other; 5-40 wt% silica, 0.5-15 wt% glucan and mannans, and 40-80 wt% mineral clay, in amounts relative to each other; 20-40 wt% silica, 0.5-10 wt% glucan and mannans, and 50-70 wt% mineral clay, in amounts relative to each other; 20-30 wt% silica, 0.5-3.5 wt% glucans, 0.5-6.0 wt% mannans, and 60-70 wt% mineral clay, in amounts relative to each other; 0.1-3 wt% β-1,3 (4)-endoglucanohydrolase, 1-40 wt% silica, 1-30 wt% yeast cell wall or an extract thereof and 40-92 wt% mineral clay, in amounts relative to each other; 0.1-3 wt% β-1,3 (4)-endoglucanohydrolase, 10-40 wt% silica, 5-20 wt% yeast cell wall or an extract thereof, and 40-80 wt% mineral clay, in amounts relative to each other; or 0.1-3 wt% β-1,3 (4)-endoglucanohydrolase, 15-30 wt% silica, 5-15 wt% yeast cell wall or an extract thereof, and 50-70 wt% mineral clay, in amounts relative to each other.

In some embodiments of a granular composition, at least 90% of the granules have at least one dimension of from 0.15 mm (100 mesh) to 1.7 mm (12 mesh). Additionally, or alternatively, at least 85% of the granules may have at least one dimension of from 0.25 mm (60 mesh) to 1.7 mm (12 mesh). And/or at least 60% of the granules may have at least one dimension of from 0.595 mm (30 mesh) to 1.7 mm (12 mesh).

Additionally, or alternatively, the composition may have one or more of: a bulk density difference between a bulk density of a loose packed sample and a bulk density of a tapped or agitated sample of less than 240.3 $kg/m^3$ (15 $lb/ft^3$); a dispersion value of 20% or less at 2 minutes; a dispersion value of 15% or less at 5 minutes; or a dispersion value of 10% or less at 10 minutes. And/or each granule in the composition may have a specific density of from 800.9 $kg/m^3$ (50 $lb/ft^3$) to 2402.8 $kg/m^3$ (150 $lb/ft^3$).

In particular embodiments of the granular composition, each granule comprises a substantially homogenous blend of silica, mineral clay, glucan and mannans, the composition comprising from greater than 0% to 100% granules by weight and from 0% to no more than 20% particles by weight, the granules having at least one dimension between 0.15 mm (100 mesh) and 2 mm (10 mesh), and the particles having at least one dimension of less than 0.15 mm (100 mesh), the granules having a size that when administered to an animal increases expression of interleukin 10 receptor β for a time period subsequent to the start of administration, such as from the start of administration to from 28 days to 42 days subsequent, relative to an animal that does not receive the composition, wherein the composition has a mineral coefficient of variation of from 0% to 10% and a proximate coefficient of variation of from 0% to 20%. The granular composition may comprise 0.1-3 wt% β-1,3 (4)-endoglucanohydrolase, 15-30 wt% silica, 0.5-3.5 wt% glucans, 0.5-6.0 wt% mannans, and 50-70 wt% mineral clay, in amounts relative to each other, and/or at least 85% of the granules may have a size of from 0.25 mm (60 mesh) to 1.7 mm (12 mesh).

The composition may further comprise one or more additional components, such as from greater than zero to 40% additional components, selected from a metal salt, such as a metal carbonate, a copper species that provides a copper ion, a trace mineral, a bulking agent, yeast, a carrier, a colorant, a taste enhancer, a preservative, an oil, a vitamin, yucca, quillaja, a probiotic, allicin, alliin, allinase, algae, a polyphenol or plant material comprising polyphenol, or a sorbic acid or a salt thereof. The additional components may comprise micro tracers, mineral oil, vitamins, potassium sorbate, active yeast, wheat fiber, calcium carbonate, or a combination thereof. And/or the additional components may further comprise corn, flaked corn, soybean meal, wheat, wheat fiber, barley, rye, rice hulls, alfalfa, canola, limestone, salt, distillers dried grains with solubles (DDGS), dicalcium phosphate, sodium sesquicarbonate, methionine source,

lysine source, L-threonine, biotin, folic acid, kelp, menadione dimethylpyrimidinol bisulfite, calcium aluminosilicate, yucca species, such as *Yucca schidigera*, quillaja species, such as *Quillaja saponaria*, a probiotic, such as a Bacillus species such as *Bacillus coagulans,* or any combination thereof.

Also disclosed is a composition comprising a granular composition disclosed herein and a feed. In particular embodiments, the feed comprises a copper species, such as a copper species that provides a copper ion, particularly copper sulfate.

A composition comprising silica, mineral clay, glucan and mannans, and having a specific density of from 800.9 $kg/m^3$ (50 $lb/ft^3$) to 2402.8 $kg/m^3$ (150 $lb/ft^3$) is also disclosed herein. The composition may be a briquette, ribbon, sheet, flake, bar, pencil, granule having at least one dimension greater than 0.15 mm, or combination thereof. In some embodiments, the composition is a briquette, ribbon, sheet, flake, bar having at least one dimension greater than 4.8 mm. In other embodiments, the composition is a granule having at least one dimension of from greater than 0.177 mm to 1.7 mm.

Also disclosed is a method, comprising administering to an animal a composition disclosed herein. The animal may be a land animal, an aquatic animal, an avian, or an amphibian, and in some embodiments, the animal is a non-human mammal, and may be a bovine, ovine, equine, porcine, or caprine. In some embodiments, the animal is a sheep, goat, cow, bull, bullock, heifer, calf, ox, deer, bison, buffalo, elk, alpaca, camel, llama, horse, donkey, or pig. Alternatively, the animal may be an avian, such as a chicken, turkey, goose, duck, Cornish game hen, quail, partridge, pheasant, guinea-fowl, ostrich, emu, swan, or pigeon.

According to the invention, administering to the animal may comprise administering an amount of the composition of from greater than zero to 500 grams per animal per day; administering an amount of the composition of from greater than zero to 1000 mgs per kilogram of the animal's bodyweight per day; and/or administering in an amount of from greater than zero to 0.165 kg per kg of feed (150 kg per ton (2000 pounds) of feed).

According to the invention, administering the composition comprises administering an amount of the composition sufficient to have a beneficial effect on the animal, wherein the beneficial effect comprises augmenting the animal's innate immune system, increasing the animal's milk production, treating or preventing an infectious disease, treating or preventing a non-infectious disease, treating or preventing stress, treating or preventing a stress-related condition or disease, increasing longevity of the animal, and/or improving the animal's feed conversion rate. In certain embodiments, administering the composition comprises administering an amount of the composition sufficient to augment the animal's innate immune system. Augmenting the animal's innate immune system may comprise increasing expression of IL10RB relative to an animal not administered the composition. And/or the composition may be administered substantially continuously, but in certain embodiments the composition is administered at least daily for at least 28 days, and may be administered for at least 42 days. The method may comprise admixing the composition with a feed to form an admixed composition, prior to administration.

Also disclosed herein is a method for augmenting function of an animal's innate immune system. The method may comprise administering substantially continuously or at least daily for at least 28 days, such as at least 42 days, the disclosed composition to an animal selected from a mammal or avian species, thereby increasing expression of an immune biomarker, such as IL10RB, during the first 28 or 42 days, relative to an animal not administered the composition, and augmenting the animal's innate immune system.

A method for making the composition also is disclosed herein. The method may comprise providing a mixture comprising silica, mineral clay, glucan and mannans; compacting the composition to form agglomerates; milling the agglomerates to form particles; and screening the particles to select a first portion of the particles having a particle size of less than 4 mesh, and such that less than 20% of the first portion of the particles have a particle size of less than 100 mesh. The method may also comprise recycling a second portion of the particles having either a particle size of 4 mesh or greater, or a particle size of less than 100 mesh. Recycling may comprise adding the second portion of the particles to the mixture prior to compacting.

In any embodiments, providing the mixture may comprise providing a pre-blended mixture comprising silica, mineral clay, glucan and mannans. Or alternatively, providing the mixture may comprise providing silica, mineral clay, glucan and mannans, and mixing to form an intimate mixture.

The foregoing and other objects, features, and advantages of the invention will become more apparent from the following detailed description, which proceeds with reference to the accompanying figures.

## BRIEF DESCRIPTION OF THE DRAWINGS

FIG. 1 is a photograph illustrating the difference in volume between a sample of a powdered composition made according to method 1, as disclosed herein, and a sample of equal weight of an exemplary granular composition made according to method 3, as disclosed herein.

FIG. 2 is a photograph illustrating the different rates of dispersion in water after 10 seconds agitation between a

powdered sample and an exemplary granular composition as disclosed herein.

FIG. 3 is a flow chart of an exemplary method for making the disclosed granular feed composition.

FIG. 4 is a schematic diagram of a full-scale granulation plant.

FIG. 5 is a schematic diagram of the Nip Region and Nip Angle in a Vertically Fed Roll Compactor from FIG. 4.

FIG. 6 is a graph of briquette density versus hydraulic pressure, illustrating the simulated density distribution for a range of hydraulic pressures.

FIG. 7 is a graph of pressure versus time, illustrating step changes in pressure during Matlab simulations in Example 2.

FIG. 8 is a graph of density versus time, illustrating the changes in density associated with the changes in pressure shown in FIG. 7.

FIG. 9 is a graph of gap width versus time, illustrating the changes in gap width associated with the pressure changes shown in FIG. 7.

FIG. 10 is a graph of roll speed versus time, illustrating step changes in roll speed during Matlab simulations in Example 2.

FIG. 11 is a graph of density versus time, illustrating the changes in density associated with the changes in roll speed shown in FIG. 10.

FIG. 12 is a graph of gap width versus time, illustrating the change in gap width associated with the changes in roll speed shown in FIG. 10.

FIG. 13 is a graph of feed speed versus time, illustrating step changes in feed speed during Matlab simulations in Example 2.

FIG. 14 is a graph of density versus time, illustrating the changes in density associated with the changes in feed speed shown in FIG. 13.

FIG. 15 is a graph of gap width versus time, illustrating the changes in gap width associated with the changes in feed speed shown in FIG. 13.

FIG. 16 is a graph of feed speed versus time, illustrating step changes in feed speed over time.

FIG. 17 is a graph of roll speed versus time, illustrating changes in roll speed concurrent with the changes in feed speed shown in FIG. 16.

FIG. 18 is a graph of gap width versus time, illustrating the simulated gap width during the concurrent feed speed and roll speed changes shown in FIGS. 16 and 17.

FIG. 19 is a graph of density versus time, illustrating the simulated density during the concurrent feed speed and roll speed changes shown in FIGS. 16 and 17.

FIG. 20 is a graph of gap width versus nip angle, illustrating the predicted values and linear fit results of the nip angle as a function of gap width.

FIG. 21 provides Western blot results demonstrating the effect of exemplary embodiments of the combination on the expression of neutrophil L-selectin as described in Example 3.

FIG. 22 provides Western blot results demonstrating the effects of a disclosed embodiment of the combination in unheated and heated (pelleted) forms on the expression of neutrophil L-selectin as described in Example 4.

FIG. 23 is a graph summarizing the effects of a disclosed embodiment of the combination on the expression of mRNA encoding L-selectin in rat neutrophils as described in Example 5.

FIG. 24 provides Western blot results demonstrating the effects of a disclosed embodiment of the combination on the expression of neutrophil interleukin-1β (Il-1β) as described in Example 6.

FIG. 25 is a graph summarizing the effects of different compositions on the ability of rat neutrophils to affect the viability of *Staphylococcus aureus* bacteria as described in Example 10.

FIG. 26 is a graph summarizing the effects of different embodiments of the combination on the expression of mRNA encoding interleukin-8 receptor in rat neutrophils as described in Example 10.

FIG. 27 is a graph summarizing the effects of different embodiments of the combination on the expression of mRNA encoding L-selectin in rat neutrophils as described in Example 10.

FIG. 28 is a table of data illustrating the percentage by weight of particles of various sizes for samples made by each of Methods 1-8.

FIG. 29 is a graph of amount versus mesh size, illustrating the size profile of particles in samples produced each of Methods 1-8.

FIG. 30 is a graph of amount versus Method, illustrating the percentage of -100 mesh material in a sample made by each method.

FIG. 31 is a table of data providing the loose bulk density and tapped bulk density (in $lb/ft^3$) and bulk density difference (in $lb/ft^3$) for a sample made by each method.

FIG. 32 is a graph of bulk density versus method, illustrating the loose density (in $lb/ft^3$) of a sample made by each method.

FIG. 33 is a graph of bulk density versus method, illustrating the tapped bulk density (in $lb/ft^3$) of a sample made by each method.

FIG. 34 is a graph of bulk density versus method, illustrating the bulk density difference (in $lb/ft^3$) between the loose and tapped bulk densities of a sample made by each method.

FIG. 35 is a table providing attrition and dispersion data for a sample made by each method.

FIG. 36 is a graph of attrition versus composition, illustrating the amount of each granulated sample that remained on a 50 mesh screen after rotating for 5 minutes with ball bearings.

FIG. 37 is a graph of dispersion versus composition, illustrating the different amount of dispersion after 2 minutes on a -500 wet sieve for a sample made by each method.

FIG. 38 is a graph of dispersion versus composition, illustrating the different amount of dispersion after 5 minutes on a -500 wet sieve for a sample made by each method.

FIG. 39 is a graph of dispersion versus composition, illustrating the different amount of dispersion after 10 minutes on a -500 wet sieve for a sample made by each method.

FIG. 40 is a table of data illustrating the mineral and proximate coefficients of variation (C.V.) between particles of different sizes for samples produced by each method.

FIG. 41 is a graph of percentage versus method, illustrating the mineral coefficient of variation for samples made by each method.

FIG. 42 is a graph of percentage versus method, illustrating the proximate coefficient of variation for samples made by each method.

FIG. 43 is a graph of relative gene expression versus day of supplementation, illustrating the CXCR2 gene expression in circulating immune cells from animals fed no supplement (control), powdered composition, and granular composition.

FIG. 44 is a graph of relative gene expression versus day of supplementation, illustrating the IL10RB gene expression in circulating immune cells from animals fed no supplement (control), powdered composition, and granular composition.

FIG. 45 is a graph of dry matter intake (DMI) versus day of supplementation, illustrating the dry matter intake for animals fed control, a powdered composition supplement and a granular composition supplement for 42 days.

FIG. 46 is a graph of copies of total RNA versus days, illustrating the level of IL10RB gene expression (copies/ng total RNA) in circulating immune cells from animals fed a powdered composition, and the disclosed granular composition for the first 42 days.

FIG. 47 is a graph of copies of total RNA versus days, illustrating the level of IL10RB gene expression (copies/ng total RNA) in circulating immune cells from animals fed a powdered composition, and the disclosed granular composition for 63 days.

To convert from Psi to MPa, divide the value by 145. To convert from ft. to m, divide the value by 3.281. To convert from Pcf or $lb/ft^3$ to $kg/m^3$, multiply the value by 16.018. To convert from in. to mm, multiply the value by 25.4. To convert from °F to °C, subtract 32 from the value, then multiply by 5/9.

## DETAILED DESCRIPTION

### I. Definitions

The following explanations of terms and abbreviations are provided to better describe the present disclosure and to guide those of ordinary skill in the art in the practice of the present disclosure. As used herein, "comprising" means "including" and the singular forms "a" or "an" or "the" include plural references unless the context clearly dictates otherwise. The term "or" refers to a single element of stated alternative elements or a combination of two or more elements, unless the context clearly indicates otherwise.

Unless explained otherwise, all technical and scientific terms used herein have the same meaning as commonly understood to one of ordinary skill in the art to which this disclosure belongs. Although methods and materials similar or equivalent to those described herein can be used in the practice or testing of the present disclosure, suitable methods and materials are described below. The materials, methods, and examples are illustrative only and not intended to be limiting. Other features of the disclosure are apparent from the following detailed description and the claims.

Unless otherwise indicated, all numbers expressing quantities of components, molecular weights, percentages, temperatures, times, and so forth, as used in the specification or claims are to be understood as being modified by the term "about." Accordingly, unless otherwise indicated, implicitly or explicitly, the numerical parameters set forth are approximations that may depend on the desired properties sought and/or limits of detection under standard test conditions/methods. When directly and explicitly distinguishing embodiments from discussed prior art, the embodiment numbers are not approximates unless the word "about" is recited.

As used herein, mesh sizes refer to standard U.S. mesh sizes.

**Administering:** Administration by any route to a subject. As used herein, administration typically but not necessarily refers to oral administration.

**Binding agent or binder:** A material or substance that is used to hold or draw together other materials to form a cohesive unit.

**Dispersion:** A measure of how much of a compacted composition returns to its original, non-compacted form when exposed to liquid.

**Durability:** A measure of a granule's resistance to being ground up or broken when being handled, conveyed and/or packaged.

**Dustiness:** As used herein, the "dustiness" of a material refers to the amount of dust particles that the material comprises, typically measured as -100 mesh particles (less than 0.15 mm). In some embodiments, a dust particle has at least one dimension, such as one dimension, two dimensions, or three dimensions, less than -100 mesh (less than 0.15 mm).

**Feed efficiency:** A measure of an animal's efficiency in converting feed mass into the desired output, *e.g.*, weight gain, milk production. Feed efficiency also may be referred to as feed conversion ratio, feed conversion rate, or feed conversion efficiency.

**Feed:** As used herein, the term "feed" refers to solid and liquid animal feeds (*e.g.*, a feed ration), supplements (*e.g.*, a mineral supplement, a protein supplement), a premix, water, feed additive carriers (*e.g.*, molasses), and combinations thereof.

**Mannans:** A class of polysaccharides including the sugar mannose. The mannan family includes pure mannans (*i.e.*, the polymer backbone consists of mannose monomers), glucomannans (the polymer backbone comprises mannose and glucose), and galactomannans (mannans or glucomannans in which single galactose residues are linked to the polymer backbone). Mannans are found in cell walls of some plant species and yeasts.

**Mineral Clay:** According to the AIPEA (Association Internationale pour l'Etude des Argiles (International Association for the Study of Clays)) and CMS (Clay Minerals Study) nomenclature committees, the term "mineral clay" refers to a mineral that imparts plasticity to a clay and hardens upon drying or firing. Mineral clays include aluminum silicates, such as aluminum phyllosilicates. Mineral clays usually include minor amounts of impurities, such as potassium, sodium, calcium, magnesium, and/or iron.

**Granule:** A granule is a particle that has a mean diameter of greater than -100 mesh, i.e. typically larger than 0.15 mm. In some embodiments, a granule has at least one dimension, such as one dimension, two dimensions, or three dimensions, greater than -100 mesh (0.15 mm) and less than 4 mesh (4.8 mm).

**Pharmaceutically acceptable:** The term "pharmaceutically acceptable" refers to a substance that can be taken into a subject without significant adverse toxicological effects on the subj ect.

**Polyphenols:** A class of natural, synthetic, or semisynthetic organic chemicals characterized by the presence of plural phenolic

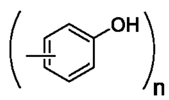

structural units.

**Segregation:** As used herein, segregation refers to the separation of different components in a composition or mixture, resulting in different samples of the composition or mixture having different relative amounts of the components. Segregation may occur between particles of different sizes, where during conveyance or handling separation may occur between smaller particles and larger particles. Segregation therefore may occur in a mixture of granular feed supplement particles and feed, when the particles of feed and supplement have substantially different sizes. Segregation may also occur in certain compaction processes where some components have a greater tendency to stick together than to stick to the other components of the composition. This can result in particles having different relative amounts of the components, and thus an animal administered the supplement may not ingest the components in the correct relative amounts sufficient to produce the beneficial effect in the animal.

**Loose density:** As used herein, loose density refers to the density of a sample that has not experienced tapping or other agitation or pressure to remove trapped air and/or compact the particles in the sample.

**Tapped density:** As used herein, tapped density refers to the density of a sample that is agitated, such as by tapping, to remove trapped air and/or produce closer packing of the particles. The agitation is continued for a sufficient amount of time such that there is substantially no further change in the sample's volume.

Additional disclosure is provided by U.S. Patent No. 7,598,061, U.S. Patent No. 7,939,066, U.S. Patent No. 8,568,715, U.S. Patent No. 8,663,644, U.S. Patent No. 9,497,981, and Australian Patent No. 2011201420.

**II. Overview**

Compositions comprising silica, mineral clay, glucan, and/or mannans, and optionally endoglucanohydrolase, have been formulated as a powder. However, such powders can cause problems during manufacture and use. The finely divided particles present in a powder often become electrostatically charged, such as by rubbing against each other and/or the sides of a container. Such an electrostatic charge often causes the particles to repel each other. This repulsion can result in dusting in the air, such as where particles appear to be suspended in the atmosphere; difficulty pouring the powder into a container, as particles will tend to be attracted to the outside of a container; and air entrapment, where the particles that are in a container have a low bulk density due to the air trapped between particles, resulting in relatively large volumes. FIG. 1 illustrates the difference in loose bulk density between a sample of a powdered composition 2, made by providing powdered components and mixing them with a paddle mixer to form the composition, and a sample of equal weight of a granular composition 4, made according to the dry compaction method disclosed herein. The only difference between the two samples is the powdered or granular formulation; both compositions comprise the same components in the same relative amounts. As can be clearly seen in FIG. 1, the granular composition 4 occupies a much smaller volume than the powdered composition 2, and therefore can be packed into smaller bags, resulting in a significant reduction in the likelihood of damage during transportation.

Also, if some components of the composition are more prone to electrostatic repulsion than others, the electrostatic repulsion and dusting may change the relative amounts of the components in the composition. For example, if a first component is more prone to electrostatic repulsion than a second component, then the amount of the first component lost to dusting may be larger than the amount of the second component that is lost. This can cause a lack of uniformity in the relative amounts of the components in different batches.

Therefore, there is a need to produce a non-powdered composition, such as a granular composition, that will address the issues with the powder composition while still providing at least the same benefits to the animals as the powder composition. Additionally, the non-powdered composition should be sufficiently durable such that when it is transported, such as from manufacturing to packaging, the particles substantially do not disintegrate and re-form the dust. However, neither can the particles be too hard, such that they do not disperse once they are ingested in an animal, and thus do not provide the benefits associated with the composition. A non-powdered composition, such as a granulated composition, may have several benefits over a powder composition comprising the same components in the same relative amounts. Such benefits may include, but are not limited to:

More even distribution in animal feed, such that a) separation of individual composition component is limited with compaction, such as granulation, of the powdered composition, b) segregation in supplements and animal feed is reduced with particles, such as granules, that are more similar to the particle sizes of feed and feed ingredients, and c) the particles substantially fully disperse when exposed to moisture in the feed or liquid in the animal's digestive tract;

Reduced dustiness limits the amount of dust created when handling the composition and therefore limits human exposure and equipment contamination;

Improved and reliable flow characteristics compared to the powder composition, allow the granular product to be accurately measured in automated weighing systems;

Improved handling characteristics of the granular feed supplement with reduced surface charges and surface area, leading to reduced air entrainment that, in turn, a) improves the ability to blend the non-powder composition at higher inclusion rates in subsequent feed and/or supplement blends, b) reduces product loss in blending and handling systems by significantly reducing fugitive dust, c) reduces the likelihood of flood-feeding and leaking from mechanical systems and allows for more accurate weighments from automated systems, d) allows for more efficient packaging in air/water impermeable bags, e) allows for the use of more durable packaging, and f) improves the accuracy of package weight and packaging rates; and

Reduced package size resulting in improved stacking on pallets and less damage during transportation and handling.

Additionally, certain components stick together better than other components do. Therefore, the process should provide particles, such as granules, such that each particle has a correct relative amount of each component. However, it is preferable not to add a separate binder to the composition. Addition of a binder can dilute the product, and can complicate product registration in different countries. Also, certain typical binders, such as starch, may increase the likelihood of mold during storage.

Furthermore, particle size may be important. As disclosed herein, an average size of the granular particles is selected to limit segregation in animal feed supplements, to inhibit or substantially prevent separation of the granular feed supplement with other feed supplements during handling and/or conveyance; limit segregation in animal feed, to inhibit or substantially prevent separation of the granular feed supplement with the feed particles; aid distribution in animal feed; enable the particles to substantially disperse fully when exposed to moisture in the feed, such as in a liquid

feed, or in the liquid in an animal's digestive tract; limit the amount of dust created when handling the product; and/or to ensure reliable flow characteristics, such that the product can flow freely in a controlled manner, such as to allow it to be accurately measured in an automated weighing system. Particles having a particle size of less than 149 microns (-100 U.S. standard mesh sieve) may form a dust. In some embodiments, the granular product comprises less than 60% by weight dust particles having a particle size of less than 0.15 mm (-100 mesh), such as less than 50%, less than 40%, less than 30%, less than 25%, less than 20%, less than 15%, less than 10%, less than 5%, less than 3% or less than 2% by weight particles of 0.15 mm (-100 mesh) particle size. -100 mesh indicated that the particles will pass through a 100 mesh (0.15 mm) sieve.

Additionally, particles having a size of greater than 4.75 mm (4 mesh) may be substantially larger than the particle size of typical animal feeds, such as cattle or sheep feed. And feed and/or feed supplements with which the present granular feed supplement might be combined may have particles, such as macro ingredients, that are typically no larger than 2 mm (10 mesh). And the granule size may also be selected to result in a composition that flows more evenly and freely than a powder or large-sized particles, such as through processing, packaging and/or delivery equipment. Fine particles, such as dust particles and fine powders, may "surge flow" or "bridge over" during conveyance and/or pouring. "Surge flow" is where the powder does not flow evenly, but rather flows in waves where an amount of the powder will build up and then surge or flood along the flow path. "Bridging over" typically occurs when a powder does not pass through an opening, such as an outlet or inlet in a container, but instead appears to jump or bridge over the opening. Bridging over may be caused, at least in part, by electrical charges on the particles resulting in mutual repulsion of each other and/or attraction to the container's walls and sides of the opening. Bridging over can be limited through altering the steric hindrance (preventing particles from entering each other's attractive fields) and/or reducing the electrical charges.

Therefore, particle sizes are selected to minimize dust and minimize segregation of the particles in the animal feed, and/or to facilitate metering of the granular feed supplement, such as during mixing with the feed. At least 40% by weight of the particles in the composition, such as at least 50%, at least 60%, at least 70%, at least 80%, at least 85%, at least 90%, at least 95%, or at least 97% of the particles, are granules having a particle size of from greater than 0.15 mm (100 mesh) to 4.8 mm (4 mesh), such as from greater than 0.15 mm (100 mesh) to 2 mm (10 mesh), greater than 0.18 mm (80 mesh) to 2 mm (10 mesh), from greater than 0.15 mm (100 mesh) to 1.7 mm (12 mesh), greater than 0.18 mm (80 mesh) to 1.7 mm (12 mesh), greater than 0.25 mm (60 mesh) to 1.7 mm (12 mesh), greater than 0.4 mm (40 mesh) to 1.7 mm (12 mesh), or greater than 0.6 mm (30 mesh) to 1.7 mm (12 mesh). In some embodiments, at least 90% by weight, such as at least 95% or at least 97%, of the particles in the composition are granules having a particle size of from greater than 0.15 mm (100 mesh) to 1.7 mm (12 mesh). In other embodiments, at least 90% by weight, such as at least 95% or at least 97%, of the particles in the composition are granules having a particle size of from greater than 0.18 mm (80 mesh) to 1.7 mm (12 mesh). In further embodiments, at least 85% by weight, such as at least 90%, at least 95% or at least 97%, of the particles in the composition are granules having a particle size of from greater than 0.25 mm (60 mesh) to 1.7 mm (12 mesh). In certain embodiments, at least 85% by weight, such as at least 90%, at least 95% or at least 97%, of the particles in the composition are granules having a particle size of from greater than 0.4 mm (40 mesh) to 1.7 mm (12 mesh). And in particular embodiments, at least 60% by weight, such as at least 70%, at least 80%, at least 85%, at least 90%, at least 95% or at least 97%, of the particles in the composition are granules having a particle size of from greater than 0.6 mm (30 mesh) to 1.7 mm (12 mesh).

### III. Feed Supplement Compositions

Certain disclosed embodiments of the composition comprise glucan (*e.g.*, β-1,3 (4)glucan), silica, mineral clay, mannans, or a combination thereof. Particular embodiments of the composition comprise glucan (*e.g.*, β-1,3 (4)glucan), silica, mineral clay, and mannans. In any embodiments, the composition may further comprise an endoglucanohydrolase, such as β-1,3 (4)-endoglucanohydrolase, either endogenously or as an affirmatively added ingredient.

In any embodiments disclosed herein, the composition may comprise, consist essentially of, or consist of, glucan *(e.g.,* β-1,3 (4)glucan), silica, mineral clay and mannans. In some embodiments, the composition comprises, consists essentially of, or consists of, glucan *(e.g.,* β-1,3 (4)glucan), silica, mineral clay, mannans and endoglucanohydrolase. In any embodiments disclosed herein, the glucan and mannans may be provided, at least in part, by yeast cell wall or an extract thereof. Thus, in some embodiments, the composition may comprise, consist essentially of, or consist of, silica, mineral clay and yeast cell wall or an extract thereof, or the composition may comprise, consist essentially of, or consist of, silica, mineral clay, yeast cell wall or an extract thereof, and endoglucanohydrolase.

Suitable sources of silica include, but are not limited to, sand, diatomaceous earth, and synthetic silica. In one embodiment, quartz may be used. In certain embodiments, the mannans comprise glucomannan.

The components of the composition are prepared by methods commonly known in the art and can be obtained from commercial sources. B-1,3 (4)-endoglucanohydrolase may be produced from submerged fermentation of a strain of *Trichoderma longibrachiatum.* Diatomaceous earth is available as a commercially-available product with from 70%

to 95% silica ($SiO_2$) and with its remaining components not assayed but primarily ash (minerals) as defined by the Association of Analytical Chemists (AOAC, 2002). The mineral clays (*e.g.*, aluminosilicates) used in this composition may be any of a variety of commercially-available clays including, but not limited to, montmorillonite clay, bentonite and zeolite. Glucan, mannans, and/or endoglucanohydrolase can be obtained from plant cell walls, yeast or yeast cell wall or an extract thereof (*e.g.*, *Saccharomyces cerevisiae*, *Candida utilis*), certain fungi *(e.g.,* mushrooms), algae, and bacteria. In certain embodiments, yeast can be administered affirmatively to provide glucan, mannans and/or endoglucanohydrolase endogenously.

In one embodiment of the invention, the composition comprises, consists essentially of, or consists of, 1-40 wt% silica, 0.5-25 wt% glucan and mannans, and 40-92 wt% mineral clay, in amounts relative to each other. In another embodiment, the composition comprises, consists essentially of, or consists of, 5-40 wt% silica, 0.5-15 wt% glucan and mannans, and 40-80 wt% mineral clay, in amounts relative to each other. In another embodiment, the composition comprises, consists essentially of, or consists of, 20-40 wt% silica, 0.5-10 wt% glucan and mannans, and 50-70 wt% mineral clay, in amounts relative to each other. In another embodiment, the composition comprises, consists essentially of, or consists of, 15-40 wt% silica, greater than zero to 15 wt% glucans, greater than zero to 10 wt% mannans, and 50-81 wt% mineral clay, in amounts relative to each other. In another embodiment, the composition comprises, consists essentially of, or consists of, 15-40 wt% silica, 0.5-5.0 wt% glucans, 0.5-8.0 wt% mannans, and 50-81 wt% mineral clay, in amounts relative to each other. In another embodiment, the composition comprises, consists essentially of, or consists of, 20-30 wt% silica, 0.5-3.5 wt% glucans, 0.5-6.0 wt% mannans, and 60-70 wt% mineral clay, in amounts relative to each other.

In some embodiments, β-glucans and mannans are obtained from yeast or yeast cell wall or an extract thereof. The yeast or yeast cell wall or an extract thereof may further comprise endoglucanohydrolase. The composition may comprise, consist essentially of, or consist of, 1-40 wt% silica, 1-30 wt% yeast cell wall or an extract thereof, and 40-92 wt% mineral clay, in amounts relative to each other. In one embodiment, the composition comprises, consists essentially of, or consists of, 10-40 wt% silica, 5-20 wt% yeast cell wall or an extract thereof, and 40-80 wt% mineral clay, in amounts relative to each other. In another embodiment, the composition comprises, consists essentially of, or consists of, 15-30 wt% silica, 5-15 wt% yeast cell wall or an extract thereof, and 50-70 wt% mineral clay, in amounts relative to each other.

In any of the above embodiments, the composition may further comprise an endoglucanohydrolase, such as β-1,3 (4)-endoglucanohydrolase. The composition may include from 0.025 wt% endoglucanohydrolase to 5 wt% endoglucanohydrolase or more, such as from 0.05 wt% to 3 wt% β-1,3 (4)-endoglucanohydrolase, relative to the amounts of silica, mineral clay, glucan, mannans, and/or yeast, yeast cell wall, or yeast cell wall extract present in the composition. In one embodiment of the invention, the composition comprises, consists essentially of, or consists of, 0.1-3 wt% β-1,3 (4)-endoglucanohydrolase, 20-40 wt% silica, 0.5-20 wt% glucan and mannans, and 50-70 wt% mineral clay, in amounts relative to each other. In another embodiment, the composition comprises, consists essentially of, or consists of, 0.1-3 wt%, β-1,3 (4)-endoglucanohydrolase, 20-40 wt% silica, 0.5-10 wt% glucan and mannans, and 50-70 wt% mineral clay, in amounts relative to each other. Alternatively, in another embodiment, the composition may comprise, consist essentially of, or consist of, 0.1-3 wt% β-1,3 (4)-endoglucanohydrolase, 1-40 wt% silica, 5-30 wt% yeast cell wall or an extract thereof, and 40-92 wt% mineral clay, in amounts relative to each other. In one embodiment, the composition comprises, consists essentially of, or consists of, 0.1-3 wt% β-1,3 (4)-endoglucanohydrolase, 10-40 wt% silica, 5-20 wt% yeast cell wall or an extract thereof, and 40-80 wt% mineral clay, in amounts relative to each other. In another embodiment, the composition comprises, consists essentially of, or consists of, 0.1-3 wt% β-1,3 (4)-endoglucanohydrolase, 15-30 wt% silica, 5-15 wt% yeast cell wall or an extract thereof, and 50-70 wt% mineral clay, in amounts relative to each other.

In any of the disclosed embodiments, the silica may be provided by diatomaceous earth. In any of the disclosed embodiments, the glucans may be β-glucans. In some embodiments, the β-glucans can be obtained from yeast, or other materials, such as fungi, algae, bacteria, or the like. In any of the disclosed embodiments, the mannans may comprise glucomannan. In some embodiments, the composition does not comprise a separate binder in addition to the components of the composition.

The glucan and mannans (or yeast or yeast cell wall or an extract thereof) can be prepared by a method known to a person of ordinary skill in the art. Yeast cell wall or an extract thereof may have a composition comprising 0-15% moisture and 85-100% dry matter. The dry matter may comprise 10-65 % protein, 0-25 % fats, 0-3% phosphorus, 5-30% β-glucan, 5-35% mannans, and 0-15% ash. A commercial source of β-1,3 (4) glucan and glucomannan derived from primary inactivated yeast (*Saccharomyces cerevisiae*) with the following chemical composition can be used: moisture 2-5%; proteins 40-50%; fats 3-8%; phosphorus 0-2%; mannans 10-16%; β-1,3-(4) glucan 10-20%; and ash 2-12%.

The yeast cell wall or an extract thereof comprises moisture 1-7% and dry matter 93-99%, and the dry matter may comprise proteins 18-28%, fats 10-17%, phosphorus 0-2%, mannans 20-30%, β-1,3-(4) glucan 18-28%, and ash 2-5%.

In an independent embodiment of the composition, silica, glucan and mannans, and mineral clay are combined at 1-40%, 0.5-25% and 40-92% by weight, respectively. In an independent embodiment of the composition and/or combination, β-1,3 (4)-endoglucanohydrolase, silica, such as diatomaceous earth, yeast cell wall or an extract thereof,

and mineral clay are combined at 0.05-3%, 1-40%, 1-20% and 40-92% by weight, respectively. In an independent composition and/or combination, β-1,3 (4)-endoglucanohydrolase, silica, such as diatomaceous earth, yeast cell wall or an extract thereof, and mineral clay are combined at 0.1-3%, 5-40%, 2-15% and 40-80% by weight, respectively. In another independent embodiment of the composition and/or combination, β-1,3 (4)-endoglucanohydrolase, silica, such as diatomaceous earth, yeast cell wall or an extract thereof, and mineral clay are combined at 0.1-3%, 30-40%, 4-15% and 50-65% by weight, respectively.

The granular feed supplement composition may include one or more additional components. In some embodiments, each granule comprises a substantially homogenous blend of silica, mineral clay, glucan, mannans, one or more additional components, and optionally endoglucanohydrolase. Additional components may be used for any desired purpose, such as a substantially biologically inert material added, for example, as a filler, or to provide a desired beneficial effect. For example, the composition may include a carbonate (including a metal carbonate such as calcium carbonate); a sulfate, including a metal sulfate, such as, but not limited to, copper sulfate, zinc sulfate, sodium sulfate, and/or potassium sulfate; a copper species, such as a copper species that provides a copper ion, for example, a copper salt, including, but not limited to, copper sulfate, copper fluoride, copper chloride, copper bromide, copper iodide, copper oxide, copper carbonate, or a combination thereof; a trace mineral, such as, but not limited to, chloride, fluoride, iodide, chromium, copper, zinc, iron, magnesium, manganese, molybdenum, phosphorus, potassium, sodium, sulfur, selenium, or a combination thereof; a bulking agent; a micro tracer, such as iron particles coated with a dye; yeast; a carrier; a colorant; a taste enhancer; a preservative; an oil; a vitamin; yucca; quillaja; a probiotic; allicin; alliin; allinase; algae; a polyphenol or plant material comprising polyphenol; a sorbic acid or a salt thereof; or a combination thereof. The yeast may be yeast culture, active yeast, a live yeast, a dead yeast, yeast extract, or a combination thereof. The yeast may be a baker's yeast, a brewer's yeast, a distiller's yeast, a probiotic yeast or a combination thereof. Exemplary yeasts include, but are not limited to, *Saccharomyces cerevisiae, Saccharomyces boulardii, Saccharomyces pastorianus, Brettanomyces bruxellensis, Brettanomyces anomalus, Brettanomyces custersianus, Brettanomyces naardenensis,* and *Brettanomyces nanus, Candida utilis, Candida stellate, Schizosaccharomyces pombe, Torulaspora delbrueckii,* or *Zygosaccharomyces bailii.*

The preservative may be benzoic acid or a salt thereof, *e.g.* sodium benzoate; lactic acid or a salt thereof, *e.g.* sodium lactate, potassium lactate or calcium lactate; propionic acid or a salt thereof, *e.g.* sodium propionate; ascorbic acid or a salt thereof, *e.g.* sodium ascorbate; gallic acid or a salt thereof *e.g.* sodium gallate; sulfur dioxide and/or sulfites; nitrites; nitrates; choline, or a salt thereof, such as an anion salt of choline, *e.g.* choline halide, such as chloride, bromide, iodide, fluoride, or choline hydroxide; or any combination thereof. The oil may be mineral oil, corn oil, soybean oil, or a combination thereof. The yucca may be one or more of *Yucca aloifolia, Yucca angustissima, Yucca arkansana, Yucca baccata, Yucca baileyi, Yucca brevifolia, Yucca campestris, Yucca capensis, Yucca carnerosana, Yucca cernua, Yucca coahuilensis, Yucca constricta, Yucca decipiens, Yucca declinata, Yucca de-smetiana, Yucca elata, Yucca endlichiana, Yucca faxoniana, Yucca filamentosa, Yucca filifera, Yucca flaccida, Yucca gigantean, Yucca glauca, Yucca gloriosa, Yucca grandiflora, Yucca harrimaniae, Yucca intermedia, Yucca jaliscensis, Yucca lacandonica, Yucca linearifolia, Yucca luminosa, Yucca madrensis, Yucca mixtecana, Yucca necopina, Yucca neomexicana, Yucca pallida, Yucca periculosa, Yucca potosina, Yucca queretaroensis, Yucca reverchonii, Yucca rostrata, Yucca rupicola, Yucca schidigera, Yucca schottii, Yucca sterilis, Yucca tenuistyla, Yucca thompsoniana, Yucca treculeana, Yucca utahensis,* or *Yucca valida,* typically comprising *Yucca schidigera.* The quillaja may be one or more of *Quillaja brasiliensis, Quillaja lanceolate, Quillaja lancifolia, Quillaja molinae, Quillaja petiolaris, Quillaja poeppigii, Quillaja saponaria, Quillaja sellowiana,* or *Quillaja smegmadermos,* typically comprising *Quillaja saponaria.*

The probiotic may be a *Bacillus* species, such as *Bacillus alcalophilus, Bacillus alvei, Bacillus aminovorans, Bacillus amyloliquefaciens, Bacillus aneurinolyticus, Bacillus anthracis, Bacillus aquaemaris, Bacillus atrophaeus, Bacillus boroniphilus, Bacillus brevis, Bacillus caldolyticus, Bacillus centrosporus, Bacillus cereus, Bacillus circulans, Bacillus coagulans, Bacillus firmus, Bacillus flavothermus, Bacillus fusiformis, Bacillus galliciensis, Bacillus globigii, Bacillus infernus, Bacillus larvae, Bacillus laterosporus, Bacillus lentus, Bacillus licheniformis, Bacillus megaterium, Bacillus mesentericus, Bacillus mucilaginosus, Bacillus mycoides, Bacillus natto, Bacillus pantothenticus, Bacillus polymyxa, Bacillus pseudoanthracis, Bacillus pumilus, Bacillus schlegelii, Bacillus sphaericus, Bacillus sporothermodurans, Bacillus stearothermophilus, Bacillus subtilis, Bacillus thermoglucosidasius, Bacillus thuringiensis, Bacillus vulgatis,* or *Bacillus weihenstephanensis,* or combinations thereof. In some embodiments, the probiotic is, or comprises *Bacillus coagulans.* In some embodiments, the probiotic is, or comprises *Bacillus subtillus.* In some embodiments, the probiotic is, or comprises *Bacillus amyloliquefaciens.* In some embodiments, the probiotic is, or comprises *Bacillus licheniformis.* In certain embodiments, the probiotic is, or comprises, a combination of *Bacillus subtillus, Bacillus amyloliquefaciens,* and *Bacillus licheniformis.* In other embodiments, the probiotic is or comprises *Bacillus subtillus, Bacillus amyloliquefaciens, Bacillus licheniformis* and *Bacillus coagulans.*

Allicin (diallyl thiosulfate; 2-Propene-1-sulfinothioic acid S-2-propenyl ester) is a compound found in garlic, such as raw garlic. Allicin is typically produced from alliin ((2R)-2-amino-3-[(*S*)-prop-2-enylsulfinyl]propanoic acid) in damaged garlic cells by the action of the enzyme alliinase. Allicin, alliin, and/or alliinase may be provided as whole garlic cloves

or bulbs; crushed, mashed, or chopped garlic; a garlic extract; and/or as a synthesized or isolated compound.

The sorbic acid or salt thereof may be potassium sorbate, sodium sorbate, ammonium sorbate, or a combination thereof. The vitamin may be vitamin A; vitamin $B_1$, such as thiamine mononitrate; vitamin $B_2$, such as riboflavin-5-phosphate; vitamin $B_3$, such as niacin or niacinamide; vitamin $B_5$, such as pantothenic acid or d-calcium pantothenate; vitamin $B_6$, such as pyridoxine or pyridoxine hydrochloride; vitamin $B_{12}$; vitamin C, such as ascorbic acid, sodium ascorbate, or calcium sorbate; vitamin D; vitamin E; vitamin K, or a combination thereof. Vitamin D may comprise vitamin $D_1$, vitamin $D_2$, vitamin $D_3$, vitamin $D_4$, vitamin $D_5$, 25-hydroxy vitamin $D_3$, 25-dihydroxy vitamin $D_3$, or combinations thereof.

The algae may be a blue-green algae (cyanobacteria), a diatom (bacillariophyta), a stonewort algae (charophyta), a green algae (chlorophyta), a golden algae (chrysophyta), a dinoflagellate (dinophyta), a brown algae (phaeophyta) or a red algae (rhodophyta). In some embodiments, the algae is a chlorophyta, and may be an algae from the genus *Chlorella*, including, but not limited to, *Chlorella vulgaris, Chlorella angustoellipsoidea, Chlorella botryoides, Chlorella capsulata, Chlorella ellipsoidea, Chlorella emersonii, Chlorella fusca, Chlorella homosphaera, Chlorella luteo-v iridis, Chlorella marina, Chlorella miniata, Chlorella minutissima, Chlorella mirabilis, Chlorella ovalis, Chlorella parasitica, Chlorella peruviana, Chlorella rugose, Chlorella saccharophila, Chlorella salina, Chlorella spaerckii, Chlorella sphaerica, Chlorella stigmatophora, Chlorella subsphaerica, Chlorella trebouxioides,* or a combination thereof. In other embodiments, the algae is a cyanobacteria, such as *Arthrospira platensis* or *Arthrospira maxima* (spirulina). Other algae include, but are not limited to, algae of the genus *Pediastrum,* such as *Pediastrum dupl, Pediastrum boryanum,* or a combination thereof; algae of the genus *Botryococcus,* such as *Botryococcus braunii;* algae of the genus *Porphyra,* such as *Porphyra dioica*, *Porphyra linearis, Porphyra lucasii, Porphyra mumfordii*, *Porphyra purpurea, Porphyra umbilicalis*, or a combination thereof.

The polyphenol may be provided by a plant extract from a polyphenol-containing plant material. The plant material also may include non-polyphenol compounds, including polyphenol degradation products, such as gallic acid and trans-caftaric acid. Degradation can occur, for example, through oxidative and/or biological processes. Both the polyphenols and the non-polyphenol compounds may have biological activity. The plant extract may be prepared from a single plant material or from a combination of plant materials. Suitable plant materials from which a plant extract can be obtained include, but are not limited to, apples, blackberries, black chokeberries, black currants, black elderberries, blueberries, cherries, cranberries, grapes, green tea, hops, onions, quillaja, plums, pomegranates, raspberries, strawberries, and yucca.

In some embodiments, the plant extract is prepared from a pressed plant material, such as grape pomace, a dried plant material, such as tea, or a combination thereof. Pomace may be obtained substantially immediately post-pressing or as an ensiled product, *i.e.,* pomace collected and stored for up to several months post-pressing. Suitable plants have a plurality of polyphenols and/or other non-polyphenolic compounds including, but not limited to, non-polyphenolic organic acids (such as gallic acid and/or trans-caftaric acid), flavanols, gallate esters, flavanodiols, phloroglucinol, pyrogallol, and catechol. In some embodiments, the plant extract is prepared from Pinot noir pomace, Pinot gris pomace, or green tea.

In some embodiments, pressed or dried plant material is ground to a powder prior to, or during, extraction. Pressed plant materials may be frozen to facilitate grinding. Polyphenols and other non-polyphenolic compounds may be extracted for administration. For example, polyphenols and other non-polyphenolic compounds may be extracted from the powder using a solution comprising a polar solvent, such as water, an alcohol, an ester, or a combination thereof. In some embodiments, the solution comprises a water-miscible alcohol, ester, or combination thereof, such as a lower alkyl alcohol, lower alkyl ester, or a combination thereof. In some embodiments, the solution is water or an aqueous solution comprising 25-99% solvent, such as 25-95% solvent, 30-80% solvent, or 50-75% solvent, and water. In certain embodiments, the solution is an aqueous solution comprising methanol, ethanol, isopropanol, ethyl acetate, or a combination thereof. The solution may be acidified by addition of an acid. The acid may prevent or minimize oxidative degradation of biologically-active polyphenols and other non-polyphenolic compounds in the extract. The acid may be any suitable acid, such as a mineral acid (e.g., hydrochloric acid), or an organic acid such as citric acid or acetic acid. In some embodiments, the solution comprises from 0.01% to 1% acid, such as 0.02-0.5%, 0.025-0.25%, or 0.05-0.15%. In some examples, the solution includes 0.1% hydrochloric acid.

Extraction may be performed at a temperature ranging from 0-100 °C. In some embodiments, extraction is performed at a temperature ranging from 20-70 °C, or at ambient temperature. Extraction may be performed for a duration ranging from several minutes to several days. To increase extraction efficiency, the plant material and solution may be mixed or agitated during extraction, such as by grinding the plant material during extraction, stirring the mixture, shaking the mixture, or homogenizing the mixture. In some embodiments, the extraction may be repeated one or more times with fresh solution to increase recovery of polyphenols and other non-polyphenolic compounds from the plant material. The liquid phases from each extraction cycle are then combined for further processing.

The liquid phase can be recovered, and the residual solids, or pulp, discarded. Recovering the liquid phase may comprise decanting the liquid from the remaining solids and/or filtering the liquid phase to remove residual solids. The solvent (alcohol, ether, or combination thereof) can be removed from the liquid solution by any suitable means,

such as evaporation (e.g., roto-evaporation), to produce an aqueous extract containing the biologically-active components in a mildly acidic solution.

In certain embodiments where the plant material includes a significant amount of oils, or lipids, an initial extraction of nonpolar components may be performed before extracting the polyphenols and other polar, non-polyphenolic compounds. Nonpolar components may be extracted by homogenizing the plant material in a nonpolar solvent, *e.g.,* alkanes, such as hexanes, heptanes, or a combination thereof. The solvent layer including the extracted nonpolar components is separated from the plant material and discarded.

The aqueous plant extract may be further purified by suitable means, *e.g.,* extraction, chromatographic methods, distillation, etc., to remove non-polyphenolic compounds and/or to increase the concentration of polyphenols relative to other compounds in the extract.

The aqueous plant extract may be dried, for example by freeze-drying or other low-temperature drying methods, and ground to a desired size, such as a powder, to provide a dried plant extract. In some embodiments, the dried plant extract comprises 0.01 wt% to 25 wt% total polyphenols, such as 0.01 wt% to 10 wt%, 0.01 wt% to 5 wt%, 0.01 wt% to 2.5 wt%, 0.01 wt% to 1 wt%, 0.01 wt% to 0.5 wt%, 0.02 to 0.25 wt%, or 0.03-0.1 wt% total polyphenols. In certain embodiments, the dried plant extract further comprises non-polyphenolic compounds. For example, the dried plant extract may comprise 0.01-1 mg/g gallic acid, such as 0.05-0.5 mg/g or 0.09-0.25 mg/g gallic acid, and/or 0.001-0.1 mg/g trans-caftaric acid, such as 0.005-0.05 mg/g or 0.01-0.025 mg/g trans-caftaric acid.

The aqueous plant extract may be concentrated to a smaller volume, *e.g.*, by evaporation, and used as an aqueous plant extract. In other embodiments, the aqueous plant extract is mixed with a carrier before drying and grinding. Suitable carriers include, for example, diatomaceous earth, silica, maltodextrin, ground grain (*e.g.,* corn), meals (*e.g.*, soybean or cottonseed meal) byproducts (*e.g.*, distiller's dried grains, rice hulls, wheat mill run), clays (*e.g.*, bentonite), and combination thereof. The plant extract may be combined with a carrier in a ratio ranging from 10:1 to 1:10 by weight, such as from 5:1 to 1:5. For example, the plant extract may be mixed with diatomaceous earth in a ratio of 3:1 by weight.

Additionally, or alternatively, the additional components may comprise grains, corn, flaked corn, soybean meal, wheat, wheat fiber, barley, rye, rice hulls, alfalfa, canola, limestone, salt, distillers dried grains with solubles (DDGS), dicalcium phosphate, sodium sesquicarbonate, methionine source, lysine source, L-threonine, biotin, folic acid, kelp, menadione dimethylpyrimidinol bisulfite, calcium aluminosilicate, or any combination thereof.

Additional information concerning additional components can be found in PCT application No. PCT/US2015/053439, and U.S. application Nos. 15/359,342, 14/699,740, and 14/606,862.

In some embodiments, the composition does not comprise additional components. In other embodiments, the composition comprises from greater than zero to 40% or more by weight additional components, such as from 0.1% to 40% by weight, or from 0.2% to 35% by weight additional components. In certain embodiments, the composition comprises from 0.1% to 5% by weight additional components, such as from 0.2% to 3% by weight. In other embodiments, the composition comprises from 5% to 20% by weight additional components, such as from 10% to 15% by weight. And in further embodiments, the composition comprises from 20% to 40% by weight additional components, such as from 30% to 35% by weight additional components.

In some embodiments, the composition and/or each granule in the granular composition, comprises, consists essentially of, or consists of, silica, mineral clay, glucan, mannans, and endoglucanohydrolase; silica, mineral clay, glucan, mannans, endoglucanohydrolase, micro tracers and mineral oil; silica, mineral clay, glucan, mannans, endoglucanohydrolase, micro tracers, mineral oil, and vitamins; silica, mineral clay, glucan, mannans, endoglucanohydrolase, micro tracers, mineral oil, vitamins, and potassium sorbate; silica, mineral clay, glucan, mannans, endoglucanohydrolase, vitamins, and active yeast; silica, mineral clay, glucan, mannans, endoglucanohydrolase, micro tracers, mineral oil, and active yeast; silica, mineral clay, glucan, mannans, endoglucanohydrolase, and mineral oil; silica, mineral clay, glucan, mannans, endoglucanohydrolase, vitamins, and calcium carbonate; silica, mineral clay, glucan, mannans, endoglucanohydrolase, micro tracers, and wheat fiber; or silica, mineral clay, glucan, mannans, endoglucanohydrolase, and micro tracers. In any of these embodiments, the glucan and mannans may be provided by yeast, yeast cell wall, or yeast cell wall extract.

In some embodiments, the composition does not comprise a binder, such as a starch binder, as an affirmatively added ingredient.

In some embodiments, the composition does not comprise water as an affirmatively added ingredient.

In some embodiments, the composition does not comprise water and a starch binder as affirmatively added ingredients.

In some embodiments, the composition does not comprise a peroxide compound.

In some embodiments, the composition does not comprise hydrogen peroxide.

In some embodiments, the composition does not comprise carbamide peroxide.

In some embodiments, the composition does not comprise urea.

In some embodiments, the composition does not comprise hydrogen peroxide and urea.

In some embodiments, the granules in the granular composition do not comprise a feed.

In any of the above embodiments, substantially every particle in the granular feed supplement includes each component of the composition, including silica, mineral clay, glucan and mannans optionally provided by yeast cell wall or an extract thereof, endoglucanohydrolase, and any additional components, and may comprise a substantially homogeneous blend of the components. And in any of the above embodiments, the relative amount of each component in each granule is substantially the same as the relative amount of the same component in the granular feed supplement as a whole. The coefficient of variation (C.V.) of the granular feed supplement is a measure of the variation in composition between different particles, such as between particles of different sizes. The C.V. is a measure of the segregation of the components across the different sizes of particles. The lower the C.V. value, the more homogenized the granular feed supplement is between different-sized particles. The C.V. may be measured for different components of the composition. In some embodiments, the C.V. for mineral content in the disclosed composition, optionally measured by measuring the calcium content, is 10% or less. That is, the mineral content of the particles varies by 10% or less in a sample of the granular feed supplement. The proximate content is a measure of the amounts of moisture, crude protein, ether extract, crude fiber, crude ash and nitrogen free extracts in the composition. In some embodiments, the C.V. for proximate content, optionally measured by measuring the protein content, is 20% or less, such as 15% or less, for particles in a sample of the granular feed supplement. For comparison, the C.V. for mineral content in a powdered composition comprising silica, mineral clay, glucan and mannans typically is about 15%, and the C.V. for proximate content in such a powdered composition is about 56%.

The granules in the granular feed supplement may have an average particle size selected to be suitable for direct inclusion into a feed, such as a commercially-available feed, food product, or as a supplement to a total mixed ration or diet. The average particle size may be selected to be compatible with the feed to which the granular feed supplement may be admixed. The term "compatible" as used herein means that the particle size is sufficiently similar to reduce or eliminate particle size segregation when the granules are admixed with the feed. For example, if the granular composition is admixed with a feed having an average particle size of 20 × 60 mesh (0.841 mm to 0.250 mm), the granules in the granular composition may have a similar average particle size, e.g., from 80-120% of the feed particle size with which the granules are admixed. Exemplary feed material sizes include, but are not limited to, corn silage 30%-40% by weight minus 12 mesh (less than 1.7 mm), haylage 40%-50% by weight minus 12 mesh, total mixed ration (TMR) 40%-60% by weight minus 12 mesh. In some embodiments, the average particle size of the granular feed supplement is selected to overlap with the minus 12 mesh-sized feed material, thereby minimizing segregation with such feed. The granules may be mixed with either solid or liquid feed or with water.

The particles in the granular feed supplement may be selected to a size of less than 4.8 mm (-4 mesh), such as less than 2 mm (-10 mesh), and may have a size of less than 1.7 mm (-12 mesh). That is, the particles can pass through a sieve of 4.8 mm (4 mesh), 2 mm (10 mesh) or 1.7 mm (12 mesh), respectively. In some embodiments, at least one dimension, and optionally two or three dimensions, of the particles are less than the desired size. In some embodiments, the particles are selected such that the amount of dust in the composition, as measured by the amount of the composition that can pass through a 100 mesh (0.15 mm) sieve, is less than 60% by weight, such as less than as less than 50%, less than 40%, less than 30%, less than 25%, less than 20%, less than 15%, less than 10%, less than 5%, less than 3% or less than 2% by weight. In some embodiments, less than 20% by weight of the particles, such as less than 15%, less than 10%, less than 7%, less than 5%, less than 3%, less than 2%, or less than 1% by weight have at least one dimension, and optionally two or three dimensions, less than 100 mesh (less than 0.15 mm size). In some embodiments, the composition is formulated as granules having a size of from smaller than 4 mesh to larger than 100 mesh size, such as 10 × 100 mesh, 10 × 80 mesh, 12 × 100 mesh, 12 × 80 mesh, 12 × 60 mesh, 12 × 40 mesh, or 12 × 30 mesh. In other embodiments, the granules have a size of from greater than 0.15 mm to less than 4.8 mm, such as from 0.15 mm to 2 mm, 0.177 mm to 2 mm, from 0.15 mm to 1.7 mm, from 0.177 mm to 1.7 mm, from 0.25 mm to 1.7 mm, from 0.42 mm to 1.7 mm, or from 0.595 mm to 1.7 mm. In any of the above embodiments, at least 40% by weight, such as at least 50%, at least 60%, at least 70%, at least 80%, at least 85%, at least 90%, at least 95%, or at least 97% by weight of the granules have a size within the stated size range. In any embodiments disclosed herein, at least one dimension, and optionally two or three dimensions of the granule is within the stated range, and in some embodiments, two or three dimensions of the granule or particle are within the stated range. According to the invention, at least 40% by weight of particles in the granular composition are granules having a particle size of from greater than 0.15 mm (100 mesh) to 4.8 mm (4 mesh).

The bulk density difference of the granular feed supplement is the difference in bulk density between a loose-packed sample, and a sample that is agitated, such as tapped or shaken, to release some of the trapped air and/or provide closer packing of the particles in the sample. In some embodiments, the bulk density difference is less than 240.3 $kg/m^3$ (15 $lb/ft^3$), such as less than 160.2 $kg/m^3$ (10 $lb/ft^3$), or less than 128.1 $kg/m^3$ (8 $lb/ft^3$).

Dispersion is a measure of the particle's ability to return to its original, non-compacted form on contact with liquid. It is measured by spraying the particles with water using a mechanical spray head positioned over a 500 mesh sieve and measuring the percentage of material that remains on the sieve after a predetermined length of time. Dispersion typically is measured at certain time points, such as 2 minutes, 5 minutes and/or 10 minutes. In some embodiments,

the granular feed supplement has a dispersion value of 20% or less, such as 15% or less, at 2 minutes; a dispersion value of 15% or less, such as 12% or less, or 10% or less, at 5 minutes; and a dispersion value of 10% or less at 10 minutes.

FIG. 2 provides a photograph illustrating the dispersion in water of a powdered composition 6 and a granular composition 8, about 10 seconds after addition and stirring. Surprisingly, a granular composition 8, made by the dry compaction method disclosed herein, dispersed more quickly and thoroughly that the powdered composition 6. FIG. 2 clearly shows the powdered composition 6 formed clumps 10 in the water. In contrast, the granular composition 8 has formed a more even suspension in the water, indicating that the composition is more dispersed than the powdered composition 6. This indicated that the granular composition may disperse more quickly that the powdered composition upon ingestion by an animal, and therefore provide an enhanced benefit to the animal. Additionally, if the composition is mixed with a liquid, such as water, for administration to animals, the granular composition may easily and quickly produce a uniform suspension of the composition. Whereas a suspension of a powdered composition, comprising clumps of the powder, will not be uniform and thus two animals drinking from the same container may ingest different amounts of the composition, and therefore, may not gain a benefit associated with ingestion of the composition.

## IV. Use of the Composition

### *A. Beneficial Results*

The disclosed composition can be administered to animals to obtain one or more beneficial results. Such benefits may include, but are not limited to: prevention and/or treatment of certain diseases or conditions, such as infectious diseases, non-infectious diseases, stress and stress-related conditions and diseases; a beneficial effect on the animal's immune system; increased milk production; or increased longevity of the animal. An animal may be affirmatively selected to receive compositions based on one or more factors that include the animal's age, decreased immunity, exposure to stressors or stress events (*e.g.*, heat stress, crowding, exposure to a toxic environment, such as ammonia toxicity, work load, chemotherapy, anti-inflammatory therapy), gastrointestinal disturbances (*e.g.*, diarrheal diseases), or combinations thereof.

Additionally, or alternatively, the composition may improve the feed conversion rate of an animal, such as an animal raised for consumption. A feed conversion rate, also known as a feed conversion ratio, is a measure of an animal's efficiency in converting feed mass into increased body mass. Animals with low feed conversion rates are considered efficient, as they require less feed to reach a desired weight. Feed conversion rates vary from species-to-species. In some embodiments, the feed conversion rate may be enhanced by from 0.5% to 20% or more, such as from 1% to 20 %, preferably from 2% to 10%, and in certain embodiments, from 3% to 5%.

Without wishing to be bound by any particular theory, the granular feed supplement composition may enhance the animal's immune system, such as the innate system or the adaptive immune system, or both. When administered to an animal, the composition may produce a concomitant change in a level of, for example, an immune system biomarker or an inflammation biomarker in the animal by at least 5%, at least 10%, at least 20%, at least 30%, at least 50%, at least 75%, at least 100%, at least 200%, or at least 500%, such as from 5-600%, from 10-500%, from 10-200%, or from 10-100%, compared to an average level of the biomarker in an animal that has not received the composition. The change may be an increase or a decrease, depending on the particular biomarker. For example, the granular feed supplement composition may affect levels of immune biomarkers including, but not limited to, neutrophil L-selectin, IL-1$\beta$ and/or gene expression of IL10RB, Crp, Mbl2, Apcs, Il5, Ifna1, Ccl12, Csf2, Il13, Il10, Gata3, Stat3, C3, Tlr3, Ccl5, Mx2, Nfkb1, Nfkbia, Tlr9, Cxcl10, Cd4, Il6, Ccl3, Ccr6, Cd40, Ddx58, Il18, Jun, Tnf, Traf6, Stall, Ifnb1, Cd80, Tlr1, Tlr6, Mapk8, Nod2, Ccr8, Irak1, Cd1d1, Stat4, I1r1, Faslg, Irf3, Ifnar1, Slc11a1, Tlr4, Cd86, Casp1, Ccr5, Icam1, Camp, Tlr7, Irf7, Rorc, Cd40lg, Tbx21, Casp8, Il23a, Cd14, Cd8a, Cxcr3, Foxp3, Lbp, Mapk1, Myd88, Stat6, Agrin and/or IL33.

Administration to an animal of the granular feed supplement may change the level of one or more biomarkers in the animal, compared to an animal not fed the granular composition. The amount of the change may be greater in the animal administered the granular feed supplement than the amount of change, if any, in level of the one or more biomarkers in an animal administered the same amount of a powdered feed supplement of the same composition. That is, there may be an increased benefit to the animal that is administered the feed supplement in a granular form compared to an animal that is administered the feed supplement in a powdered form, and to an animal not fed the feed supplement in either form. In certain embodiments, administration of the granular composition to an animal produces a concomitant change in a level of a biomarker, for example, an immune system biomarker, such as IL10RB, in the animal by at least 5%, at least 10%, at least 20%, at least 30%, at least 50%, at least 75%, at least 100%, at least 200%, or at least 500%, such as from 5-600%, from 10-500%, from 10-200%, or from 10-100%, compared to an average level of the biomarker in an animal that has not received the granular composition.

The change may be during a particular time period, such as during the first 28 to 42 days of administration. In some embodiments, expression of interleukin 10 receptor subunit beta (IL10RB) was increased rapidly in animals administered the granular feed supplement during the first 28 days, compared to animals not fed the granular feed supplement (the control animals). In other embodiments, expression of interleukin 10 receptor subunit beta (IL10RB) was increased rapidly in animals administered the granular feed supplement during the first 42 days, compared to animals not fed the granular feed supplement (the control animals). Animals fed a powdered composition comprising the same components in the same relative amounts had the same IL10RB expression rate as the control animals during the same time period. That is, the animals fed the powdered composition did not experience the rapid increase in IL10RB expression that was experienced by the animals administered the granular feed composition. Subsequent to the time period, the levels of expression of IL10RB in all groups converged, suggesting that that administration of the granular feed supplement increased the rate of expression of IL10RB, compared to the control and powder-fed animals, rather than increasing the final amount of expression. IL10RB is a protein that is part of the receptor complex that mediates the cellular signaling following IL10 binding to the complex. IL10 is an anti-inflammatory cytokine and is associated with other immunoregulation such as enhancing B cell survival and antibody production. Therefore, supplementation with the granular composition comprising silica, mineral clay, glucan and mannans may enhance anti-inflammatory mechanisms and immune cell regulation, compared to supplementation with a powdered composition that comprises the same relative amounts of silica, mineral clay, glucan and mannans.

As disclosed in U.S. Patent No. 8,142,798, the granular feed supplement composition may also augment an animal's adaptive immune system, *e.g.*, by increasing response to a vaccine; antibody levels, such as IgG levels, may be increased, relative to an animal that has received a vaccine but has not been administered the granular feed supplement composition. The granular feed supplement composition also may reduce the effects of stress in the animal, potentially by ameliorating the effects of stress (*e.g.*, heat stress, pregnancy stress, parturition stress, etc.) on the animal's immune system. The granular feed supplement composition may affect levels of inflammation biomarkers, *e.g.*, COX-2, IL-1$\beta$, tumor necrosis factor alpha (TNF-$\alpha$), interleukin-8 receptor (IL8R), and/or L-selectin.

In some embodiments, the milk yield of an animal that is administered the composition will be increased, compared to yields from animals that are not administered the composition. For example, the milk yield may increase by 1 kg, 2 kg, 3 kg, 4 kg, up to 10 kg per animal per day using the disclosed composition. In particular disclosed embodiments, animals that are provided the composition will produce milk having lower milk fat and/or milk protein (in terms of percentage). For example, milk fat may be reduced from 0.2% to 1%, or from 0.2% to 0.8%, or from 0.2% to 0.6%, with exemplary embodiments including a 0.4% reduction. In some embodiments, the animal, such as a dairy cow, is administered the composition for a period of time effective to increase the milk yield of the cow. In certain embodiments, a dairy cow may be fed the composition during the drying off period between lactation periods, optionally starting administration before the drying off period and/or continuing into the subsequent lactation period. Such a cow may have an increased milk yield compared to a cow that that was not fed the composition during a similar time period.

*B. Animals*

Embodiments of the disclosed granular feed supplement composition are fed and/or administered to an animal, such as a human or non-human animal. The animal may be a land animal, an aquatic animal, an avian, or an amphibian. The animal may be a mammal, or a non-mammal. In some embodiment, the mammal is a bovine, equine, ovine, porcine, or caprine. A bovine may be a dairy animal or an animal raised for beef. The non-human animal can be an animal raised for human consumption or a domesticated animal. Examples of animals that can be fed and/or administered the disclosed combination include, but are not limited to, ruminant species, such as a sheep, goat, cow, heifer, bull, bullock, calf, ox, deer, bison, buffalo, elk, alpaca, camel or llama; ungulates, such as a horse, donkey, or pig; avians, such as chickens, including laying hens and broilers, turkey, goose, duck, Cornish game hen, quail, partridge, pheasant, guinea-fowl, ostrich, emu, swan, or pigeon; aquatic animals, such as an aquaculture species, such as fish (*e.g.*, salmon, trout, tilapia, sea bream, carp, cod, halibut, snapper, herring, catfish, flounder, hake, smelt, anchovy, lingcod, moi, perch, orange roughy, bass, tuna, mahi mahi, mackerel, eel, barracuda, marlin, Atlantic ocean perch, Nile perch, Arctic char, haddock, hoki, Alaskan Pollock, turbot, freshwater drum, walleye, skate, sturgeon, Dover sole, common sole, wolfish, sablefish, American shad, John Dory, grouper, monkfish, pompano, lake whitefish, tilefish, wahoo, cusk, bowfin, kingklip, opah, mako shark, swordfish, cobia, croaker, or hybrids thereof, and the like), crustaceans (*e.g.*, lobster, shrimp, prawns, crab, krill, crayfish, barnacles, copepods, and the like), or mollusks (*e.g.*, squid, octopus, abalone, conchs, rock snails, whelk, clams, oysters, mussels, cockles, and the like). Additionally, or alternatively, the animal may be a companion animal, such as canines; felines; rabbits; rodents, such as a rat, mouse, hamster, gerbil, guinea pig or chinchilla; birds, such as parrots, canaries, parakeets, finches, cockatoos, macaws, parakeets or cockatiel; reptiles, such as snakes, lizards, tortoises or turtles; fish; crustaceans; and amphibians, such as frogs, toads and newts.

*C. Administration*

The disclosed composition may be administered individually, or it may be administered in combination with one or more additional compositions, including, but not limited to, a feed, an additional feed supplement, a medication,

a vaccine, a probiotic, or a combination thereof. When the disclosed composition is administered in combination, the composition and additional composition(s) may be administered substantially simultaneously, or sequentially, in any order. When administered sequentially, the disclosed composition and any additional compositions may be administered such that an effective time period of the disclosed composition overlaps with the effective time periods of all additional compositions administered in combination with the disclosed composition, the effective time periods being the periods of time during which the animal receives an effect, such as a beneficial effect, from the respective compositions.

The antimicrobial may be an antibiotic, an antifungal, an antiparasitic, an antiviral, or a combination thereof. An antibiotic may be a tetracycline, a penicillin, a cephalosporin, a polyether antibiotic, a glycopeptide, an orthosomycin, or a combination thereof. The antibiotic may be selected from, by way of example, and without limitation, virginiamycin, Bacitracin MD, Zinc Bacitracin, Tylosin, Lincomycin, Flavomycin, bambermycins, Terramycin, Neo-Terramycin, florfenicol, oxolinic acid, oxytetracycline, hydrogen peroxide (Perox-Aid® 35%), bronopol (2-bromo-2-nitro-1,3-propanediol, Pyceze®), sulfadimethozine, ormetoprim, Sulfadiazine, Trimethoprim, or a combination thereof. In some embodiments, the antibiotic is not, or does not comprise, hydrogen peroxide. In some embodiments, the antibiotic is virginiamycin, Bacitracin MD, Zinc Bacitracin, Tylosin, Lincomycin, Flavomycin, bambermycins, Terramycin, Neo-Terramycin, florfenicol, oxolinic acid, oxytetracycline, bronopol (2-bromo-2-nitro-1,3-propanediol, Pyceze®), sulfadimethozine, ormetoprim, Sulfadiazine, Trimethoprim, or a combination thereof.

An antifungal may be selected from, by way of example, formalin, formalin-F, bronopol (2-bromo-2-nitro-1,3-propanediol, Pyceze®), or a combination thereof. Exemplary antiparasitics may be selected from an anticoccidal, copper sulfate, fenbendazole, formalin, formalin-F, hyposalinity, hadaclean A, praziquantel, emamectin benzoate (SLICE®), or a combination thereof.

Suitable anticoccidial agents include, but are not limited to, ionophores and chemical anticoccidial products. Ionophores can include, but are not limited to, Monensin, Salinomycin, Lasalocid, Narasin, Maduramicin, Semduramicin, or combinations thereof.

Chemical anticoccidial products can include, but are not limited to, Nicarbazin, Maxiban, Diclazuril, Toltrazuril, Robenidine, Stenorol, Clopidol, Decoquinate, DOT (zoalene), Amprolium, or combinations thereof.

Suitable vaccines can be selected from live coccidiosis vaccines, such as COCCIVAC (*e.g.*, a composition comprising live oocysts of *Eimeria acervulina*, *Eimeria mivati, Eimeria maxima, Eimeria mitis, Eimeria tenella, Eimeria necatrix, Eimeria praecox, Eimeria brunetti*, *Eimeria hagani,* or combinations thereof), LivaCox (a composition comprising 300 - 500 live sporulated oocysts of each attenuated line of *Eimeria acervulina*, *E. maxima and E. tenella* in a 1% w/v aqueous solution of Chloramine B); ParaCox (a composition comprising live sporulated oocysts derived from E. *acervulina* HP, E. *brunetti* HP, E. *maxima* CP, E. *maxima* MFP, E *mitis* HP, E. *necatrix* HP, E. *praecox HP,* E. *tenella* HP, and combinations thereof); Hatch Pack Cocci III (a composition comprising oocysts derived from *Eimeria acervulina*, *Eimeria maxima, Eimeria tenella,* or combinations thereof); INOVOCOX (a composition comprising oocysts derived from *Eimeria acervulina, Eimeria maxima, Eimeria tenella,* and a sodium chloride solution); IMMUCOX (a composition comprising live oocysts derived from *Eimeria acervulina, Eimeria maxima, Eimeria necatrix, Eimeria tenella,* and combinations thereof), Advent, or combinations thereof. Vaccines may also comprise live oocysts of the *Eimeria* genus, for example, *Eimeria aurati, Eimeria baueri, Eimeria lepidosirenis, Eimeria leucisci, Eimeria rutile, Eimeria carpelli, Eimeria subepithelialis, Eimeria funduli* and/or *Eimeria vanasi.* Vaccines may also comprise oocysts from the genus *Epeimeria,* a new genus of coccidia infecting fishes.

Other suitable vaccines include, but are not limited to, ALPHA DIP® 2000, ALPHA DIP® Vibrio, ALPHA MARINE® Vibrio, ALPHA DIP® ERM Salar, ALPHA JECT micro® 1 ILA, ALPHA JECT micro® 7ILA, ALPHA JECT® Panga, ALPHA JECT® 1000, ALHPA JECT® 2000, ALPHA JECT® 3000, ALPHA JECT® 3-3, ALPHA JECT® 4000, ALPHA JECT® 4-1, ALPHA JECT® 5-1, ALPHA JECT® 5-3, ALPHA JECT® 6-2, ALPHA JECT® micro 1 ISA, ALPHA JECT® micro 2, ALPHA JECT® micro 4, Apex®-IHN, AQUAVAC® ERM Oral, AQUAVAC® ERM immersion, AQUAVAC® FNM Injectable, AQUAVAC® IPN Oral, AQUAVAC® RELERA™, AQUAVAC® Vibrio Oral, AQUAVAC® Vibrio Pasteurella injection, AQUAVAC® Vibrio immersion and injectable, AQUAVAC-COL™ immersion, AQUAVAC-ESC™ immersion, Birnagen Forte 2, Ermogen, Forte Micro, Forte V II, Forte V1, Fry Vacc 1, Furogen Dip, ICTHIOVAC JG injection, ICTHIOVAC® PD immersion, Lipogen DUO, Lipogen Forte, Microvib, Norvax® Compact PD injection, Norvax® Minova 4WD, Norvax® Minova 6 injection, Norvax® STREP Si immersion and injection, Premium Forte Plus, Premium Forte Plus ILA, Renogen, Vibrogen 2, or a combination thereof.

Additional feed supplements include any suitable feed supplement. The additional feed supplement may include yucca, quillaja, or a combination thereof, as previously described. In certain embodiments, the feed supplement comprises *Yucca schidigera* and *Quillaja saponaria.* The probiotic may be any suitable probiotic known to a person of ordinary skill in the art. In some embodiments, the probiotic is a *Bacillus* species as previously described. And in certain embodiments, the probiotic comprises *Bacillus coagulans.*

In some embodiments, the disclosed composition is administered with feed. The composition may be mixed with the feed, such as in an admixture, to form a feed composition. The feed may comprise one or more of carbonate (including a metal carbonate such as calcium carbonate); a sulfate, including a metal sulfate, such as, but not limited

to, copper sulfate, zinc sulfate, sodium sulfate, and/or potassium sulfate; a copper species, such as a copper species that provides a copper ion, for example, a copper salt, including, but not limited to, copper sulfate, copper fluoride, copper chloride, copper bromide, copper iodide, copper oxide, copper carbonate, or a combination thereof; a trace mineral, such as, but not limited to, chloride, fluoride, iodide, chromium, copper, zinc, iron, magnesium, manganese, molybdenum, phosphorus, potassium, sodium, sulfur, selenium, or a combination thereof; a bulking agent; a micro tracer, such as iron particles coated with a dye; yeast; a carrier; a colorant; a taste enhancer; a preservative; an oil; a vitamin; yucca; quillaja; a probiotic; allicin; alliin; allinase; algae; a polyphenol or plant material comprising polyphenol; a sorbic acid or a salt thereof; or a combination thereof, as previously described.

In some embodiments, the composition is administered daily to the animal at time intervals believed or determined to be effective for achieving a desired result, such as beneficial result. The composition may be administered in a single dose daily or in divided doses throughout the day.

According to the invention, the amount may be from greater than zero to 500 grams per animal per day, such as from 0.5 grams to 250 grams, from 5 grams to 200 grams, or from 10 grams to 70 grams per animal per day. Alternatively, the combination may be fed or administered in an amount of from greater than zero to 1000 mgs or more per kilogram of the animal's body weight per day, such as from greater than zero to 500 mgs per kilogram body weight. In other embodiments, the combination is fed or administered per weight of animal feed. The combination may be fed or administered in an amount of from greater than zero to 0.165 kg per kg (150 kg per ton (2000 pounds)) of feed, such as from $1.10\times10^{-4}$ to 0.11 kg per kg (0.1 kg to 100 kg per ton) of feed. Alternatively, the combination may be fed or administered in an amount of from greater than zero to 20 grams per kilogram of feed, such as from greater than zero to 10 grams of feed.

In one embodiment, when incorporated directly into feeds, the granular feed supplement composition may be added in amounts ranging from $1.10\times10^{-4}$ to 0.11 kg per kg (0.1 to 100 kg per ton (2000 pounds)) of feed. In some embodiments, the granular feed supplement composition is added in amounts ranging from $1.10\times10^{-4}$ to 0.06 kg per kg (0.1 to 50 kg per ton) or from $1.10\times10^{-4}$ to 0.02 kg per kg (0.1 to 20 kg per ton) of feed. In other embodiments, the granular feed supplement composition is added to animal feed in amounts from $5.5\times10^{-4}$ to 0.01 kg per kg (0.5 kg to 10 kg per ton) of feed. In certain embodiments, the granular feed supplement composition may be added to feeds in amounts ranging from $1.1\times10^{-3}$ to $5.5\times10^{-3}$ kg per kg (1 to 5 kg per ton) of feed.

When expressed as a percentage of dry matter of feed, the granular feed supplement composition may be added to animal feed in amounts ranging from 0.01 to 2.5% by weight, such as from 0.0125% to 2% by weight. In one instance, the granular feed supplement composition is added to animal feed in amounts from 0.05 to 1.5% by weight, such as from 0.06% to 1% by weight. In another instance, the granular feed supplement composition is added in amounts from 0.1 to 0.7% by weight, such as from 0.125% to 0.5% by weight of feed.

Alternatively, the granular feed supplement composition may be fed directly to animals as a supplement in amounts of from greater than 0.01 gram to 20 grams per kilogram of live body weight, such as from 0.01 gram to 10 grams per kilogram of live body weight, from 0.01 gram to 1 gram per kilogram of live body weight, from 0.01 gram to 0.5 gram per kilogram of live body weight, or from 0.02 gram to 0.4 gram per kilogram of live body weight per day. In some embodiments, the granular feed supplement composition may be provided for use with many mammalian species in amounts of from 0.05 grams to 0.20 grams per kilogram of live body weight per day.

For cattle, the granular feed supplement composition may be provided in the range of from 10 grams per head per day to 70 grams per head per day, such as from 45 grams per head per day to 70 grams per head per day, or from 50 grams per head per day to 60 grams per head per day. A person of ordinary skill in the art will appreciate that the amount of the granular feed supplement composition fed to the animal can vary depending upon a number of factors, including the animal species, size of the animal and type of the feed to which the granular feed supplement composition is added.

Typically, the granular feed supplement composition is administered daily to the animal at time intervals believed or determined to be effective for achieving a beneficial result. The granular feed supplement composition may be administered in a single dose daily or in divided doses throughout the day. In some instances, one or more individual components of the granular feed supplement composition may be administered to the animal at a first time, and remaining components may be administered individually or in combination at one or more subsequent times during the same day.

## V. Method for Making the Feed Supplement

### *A. Background*

Attempts at producing a suitable granulated feed supplement comprising silica, mineral clay, glucan and mannans have been underway for several years. Several different methods were attempted, as discussed in more detail below, but those methods did not produce granules that were suitable to replace the powdered composition. The powdered composition is sufficiently mixed such that any two samples will have substantially the same composition, and an animal

receives a substantially consistent dosage of the components of the composition with each administration. Additionally, the powdered composition needs minimal, if any, processing after mixing, such as drying and granulating, which reduces the operating expenses.

One attempt was to blend granular ingredients together in a manner similar to the way the powdered ingredients are blended. However, a composition made by this method comprises granules of different materials with different particle sizes and densities. This can lead to segregation of the ingredients, such that individual weighments of the product may not provide uniform composition to subsequent blended feed.

Moisture activated compaction was also tried. In this method, water was added to bind the ingredients together before they were compacted. However, this resulted in a drying step being required, which substantially increased the operating costs.

Another attempt used moisture activated agglomeration. This method used a starch binder and added moisture to bind the ingredients together. Although granules were made and sold, the addition of the starch binder resulted in issues with mold growing on the product, leading to a shortened shelf-life, and potential health issues for both animals and humans. Additionally, the addition of the binder may lead to regulatory complications in different countries, as it changes the formulation. Furthermore, the granules had problems with dispersion. Dispersion is the composition's ability to return to its original, powdered form on contact with a liquid, such as once it is ingested by the animal. As described in Example 14 with reference to Method 6, a composition made by moisture activated agglomeration disperses slowly on contact with a liquid. For example, after being sprayed with water for 2 minutes, 64 wt% of a composition made by moisture activated agglomeration still remained on a 500 mesh (25 micron) sieve. This compares to only 16 wt% of the powdered composition, and 13 wt% for the disclosed granular composition made by a dry compaction process.

Additionally, the moisture activated agglomeration had issues with segregation, in that the process produced granules having substantially different compositions. This was also an issue for the low/high shear mixing process, another process that was tried. For example, with both processes, finer granules were observed to have a different composition from larger granules and from the powdered product. Without being bound to a particular theory, this might be due to the fact that some components of the composition stick together better than others during the compaction process, leading to certain granules being rich in those particular components, compared to other, typically smaller granules.

Dry compaction was also tried. This method simply compacts the powder together to form agglomerates that can subsequently be milled to the desired size. No binder or moisture is added. Initially, this method did not work well because powder flow issues prevented the uniform introduction to the compaction rollers. Instead it was just rolled around by the rollers, without entering the nip zone. This might be due, in part, to the electrical charge that can build up on the powder particles, causing repulsion of other particles and of surfaces. This issue was addressed by introducing a feed mechanism, such as a screw or auger, that helped remove entrained air and pushed the powder into the compaction zone. The screw or auger may have a continuous pitch, or the pitch may vary, such as increase, along the length of the screw or auger toward the compaction zone to de-aerate the powder and/or pre-compact the material before the compaction zone. The screw or auger also may help prevent the different ingredients from separating while rolling around before entering the compaction zone, thus ensuring that each granule has substantially the same composition.

The dry compaction method resulted in granules that were sufficiently resilient to substantially not break apart and/or reform dust during conveyance or handling, but also that were able to easily disperse upon ingestion by an animal, thereby ensuring that the animal received the full beneficial effects of the composition. As discussed herein, upon administration to an animal, a granular feed supplement made by the dry compaction method provided an increased benefit to the animal, compared to an animal administered a powdered feed supplement, or an animal not administered a feed supplement. The increased benefit may be for a particular time period, such as from the first 28 days of administration to at least the first 42 days of administration, and/or may be a beneficial change to one or more biomarkers, such as IL10RB. In some embodiments of the invention, the time period is for the first 28 days of administration, and in other embodiments, the time period is for the first 42 days of administration.

Additionally, because no binders or moisture in addition to the components of the composition were added, the dry compaction method did not lead to registration issues concerning labeling and/or composition, or to a reduced shelf-life due to an increased risk of mold formation.

*B. Method of Making*

A general method for making the granular feed supplement of the disclosure comprises compacting a composition comprising silica, mineral clay, glucan and mannans to form agglomerates, and milling and screening the agglomerates to produce granules of a desired size or range of sizes, where each granule comprises silica, mineral clay, glucan and mannans. In some embodiments, no binder and/or moisture is added to the components of the composition to form the agglomerates. FIG. 3 provides a flow chart of a general process for making the granular feed supplement. In FIG. 3, optional premixing and recycling processes are indicated by dashed arrows. These additional processes may help

achieve an optimum final product particle size. And FIG. 4 provides a schematic diagram of a granulation plant.

Typically, the components of the composition are premixed before the compaction in their desired relative amounts. The components of the composition may be sourced and/or prepared to be substantially the same size, such as powdered components, before the premixing. Without being bound to a particular theory, having components of substantially the same size may help the premixing process to form an intimate mixture of the components. This, in turn, may help the disclosed granulation process to form granules that each comprise the composition components in substantially the same relative amounts. The premixing may be performed by any suitable mixing device, such as a drum mixer, ribbon mixer or paddle mixer, configured in batch or continuous mode. Premixing may be performed onsite, or it may be performed at a separate location, and the premixed composition may be transported to the compactor by a suitable technique, such as belt conveyer, bucket elevator, pneumatic system, auger, or lift.

FIG. 4 provides a schematic diagram of a granulation plant suitable for producing the disclosed granular feed supplement. With reference to FIG. 4, the components, such as a premixed, un-compacted mixture of ingredients are conveyed to a receiving container 12, as indicated by arrow 14. The ingredients can be transported by any suitable technique, such as a belt conveyer, bucket elevator, and/or pneumatic system. The receiving container can be any suitable receiving container, such as a hopper or filter receiver. Alternatively, the components may be added to the receiving container 12 separately, and mixed therein, by a suitable method (not shown). The ingredients are conveyed from the receiving container 12 to a hopper 16, as indicated by arrow 18. The ingredients optionally may be mixed, such as by a paddle mixer and/or screw, with recycled material from container 20, as indicated by arrow 22. The combined ingredients and optional recycled material may be de-aerated and/or densified by a suitable technique, such as by vacuum, one or more compaction screws 24, or a combination thereof. The material is then conveyed to a compactor 26. Compaction screw 24 may also help to provide a substantially constant flow of non-compacted mixture to the compactor 26, and/or help prevent separation of the ingredients prior to compaction. In some instances, a dual screw compaction apparatus is used. And in alternative instances, the non-compacted mixture may be introduced to the compactor 26 using a gravity feed.

Compactor 26 may be any compactor suitable to compact the mixture into a compacted form. Suitable compactors include, but are not limited to a roll-press, tablet press or block press. In certain instances, compactor 26 is a roll-press compactor, typically comprising two or more rollers 28 that compact the mixture into agglomerates as it passes between them. The shape of the agglomerates typically depends on the type of compactor and/or the shape of the rollers. The shape of the agglomerates may be, but is not limited to, a briquette, ribbon, sheet, flake, bar, pencil or a combination thereof. In some instances, an individual agglomerate has a specific density of from 961.1 kg/$m^3$ (60 lb/$ft^3$) to 2402.8 kg/$m^3$ (150 lb/$ft^3$) or more, such as from 1201.4 kg/$m^3$ (75 lb/$ft^3$) to 1922.2 kg/$m^3$ (120 lb/$ft^3$), from 1441.7 kg/$m^3$ (90 lb/$ft^3$) to 1841.1 kg/$m^3$ (115 lb/$ft^3$), or from 1521.8 kg/$m^3$ (95 lb/$ft^3$) to 1762.0 kg/$m^3$ (110 lb/$ft^3$). In contrast, the starting powdered composition may have a bulk density of from greater than zero to 961.1 kg/$m^3$ (60 lb/$ft^3$), such as from 240.3 kg/$m^3$ (15 lb/$ft^3$), to 881.0 kg/$m^3$ (55 lb/$ft^3$), from 320.4 kg/$m^3$ (20 lb/$ft^3$) to 640.7 kg/$m^3$ (40 lb/$ft^3$), or from 400.5 kg/$m^3$ (25 lb/$ft^3$) to 720.8 kg/$m^3$ (45 lb/$ft^3$), to yield an overall bulk density of 720.8 kg/$m^3$ (45 lb/$ft^3$).

FIG. 5 provides a schematic diagram of a compactor 26, illustrating the nip region 50 between two rollers 28 in a roll-press compactor. With reference to FIG. 5, nip region 50 is located between the two rollers 28 in the region where the distance between the rollers approaches a minimum distance 52. Arrows 54 indicate the respective directions of rotation of the rollers 28. Above the nip region 50 is slip region 56. Particles in slip region 56 may roll around between the rollers 28 without being compacted. However, once they descend into the nip region 50, the action of the rollers 28 compacts particles together to form agglomerates of the composition. As the rollers 28 continue to turn, the compacted composition is moved through the nip region 50 and released as the distance between the sides of the rollers increases from the minimum distance 52.

In some instances, a mechanical delivery system, such as the compaction screw 24 in FIG. 4, agitates the non-compacted particles to release at least a portion of the trapped air and/or exerts a pressure on the non-compacted particles (indicated by arrows 60 in FIG. 5) that pushed the particles from slip region 56 into nip region 50.

The non-compacted particles are compacted into agglomerates, such as briquettes, in the nip region 50. The specific density of the agglomerates is dependent, at least in part, on the gap width, which in turn is determined by the speed of the rollers (roll speed), the speed at which the non-compacted particles are fed into the nip region 50 (feed speed), and the pressure set point (roll pressure). The gap width and roll speed may be adjusted to achieve a desired specific density. And in some instances, the feed speed and roll speed are adjusted concurrently to substantially maintain a selected ratio, thereby substantially maintaining the density of the agglomerates.

Again with reference to FIG. 4, the agglomerates are conveyed from compactor 26 to a mill 30, as indicated by arrows 32 and 34. The conveyance may be performed by any suitable apparatus 36, such as a conveyer belt, bucket elevator, or a combination thereof. The agglomerates, such as briquettes or sheets, are cracked and/or broken, such as by a rotating shaft, and then further milled to form granules. The mill 30 can be any suitable mill 30, such as an impact mill, attrition mill, shear mill, compression mill, or a combination thereof. The mill 30 may be a hammer mill, pulverizer or fluid energy mill, tower mill, tumbling mill, mechanical impact mill, cone mill, compression crusher mill, such as a jaw

crusher, gyratory crusher, or roller crusher, or a combination thereof. In some instances, a 3-stage roll mill is used, with progressively tighter gap widths that reduce the particle size to a desired size range.

The milled product is then screened in a screening apparatus 38 to select granules that have a size within a desired size range. Typically, the screening apparatus 38 comprises at least a double screen that substantially removes both the oversized and undersized particles. Suitable screening apparatuses 38 include a flat vibrating screener, although other types of screening systems, such as roll screening, vibratory screening, gyratory screening or air classification, could be used. In some embodiments, the milled product is first passed through a large meshed screen or sieve, to remove granules that are larger than the upper limit of the size range. Then the granules are exposed to a small meshed screen or sieve that allows particles that are smaller than the lower limit of the desired size range to pass. In other instances, the milled product is first exposed to the small meshed screen or sieve, to remove the undersized particles. Then the remaining granules are passed through a larger meshed screen or sieve, to remove the oversized particles. In either instances, the remaining granules have the desired size range. Typically, the screening apparatus 38 results in a composition where about 95% of the granules, such as 97% or 99% of the granules, have a size within the desired size range. Granule sizes may be measured according to ANSI/ASAE Standard 5319.4, "Method of Determining and Expressing Fineness of Feed Material by Sieving,". The selected particles are conveyed to a product container (not shown), such as a hopper, as indicated by arrow 40, for example, to be packaged for transport and/or sale. Oversized and undersized material may optionally be conveyed back to the container 20 for recycling, as indicated by arrow 42, by a suitable technique, such as a conveyer belt, bucket elevator, pneumatically under reduced pressure, or a combination thereof. Such recycling minimizes waste from the process and helps reduce costs. Alternately, the oversized material is separated from the fines, passed through a mill, such as mill 30, and returned to the screen system for reprocessing. And/or the agglomerates from compactor 26 may be separated from the fines in a screening apparatus (not shown) to reduce fines loading on the screening system 38.

## VI. Examples

The following examples are provided to illustrate an exemplary method of production of the disclosed granular composition, and to illustrate certain beneficial effects of administering to an animal a combination comprising silica, glucan, mannans and mineral clay. A person of ordinary skill in the art will appreciate that the scope of the disclosed embodiments is not limited to the features exemplified by these working embodiments.

### Example 1

**Pilot-Scale Granulation Trial**

**Introduction**

A granular feed supplement was achieved through use of a roll-press compactor to create agglomerates that were subsequently milled and screened to size. This process was developed from results gleaned using successively larger roll compactors, milling machines, and screeners to achieve a full-scale process, such as the exemplary full-scale apparatus illustrated in FIG. 4.

**Research Pilot-Scale Trials**

A pilot level study was conducted wherein a powdered composition comprising silica, mineral clay, glucan and mannans was compacted in briquettes. The powdered composition had a bulk density of 640.7 kg/$m^3$ (40 lb/$ft^3$) and each briquette had a density of approximately 1650.0 kg/$m^3$ (103 lb/$ft^3$). Compaction was achieved with a Komarek B220 roll press and a horizontal "pre-compaction" screw. The compacted briquettes were "gently crushed", such as avoiding the use of high speed, high sheer grinders, to achieve 42% by weight 12 × 20 U.S. standard mesh size (1.7 mm to 0.841 mm) after screening.

Important operating parameters are outlined in Table 1.

**Table 1.** Principal B220 Roll Press Operating Parameters

| Parameter | Product | |
|---|---|---|
| | Ribbon | Briquette |
| Lower roll | 5.1 cm wide × 30.5 cm diameter wave (2 in., × 12 in.) | 5.1 cm wide × 30.5 cm diameter standard pocket (2 in. × 12 in.) |

(continued)

| Parameter | Product | |
|---|---|---|
| | Ribbon | Briquette |
| Upper roll | 5.1 cm wide × 30.5 cm diameter wave (2 in. × 12 in.) | 5.1 cm wide × 30.5 cm diameter smooth (2 in. × 12 in.) |
| Roll gap set, mm | 4.06 (0.16 in.) | 0.76 (0.03 in.) |
| Feed screw | Constant pitch | Constant pitch |
| Accumulator pressure | 4137 kPa (600 psi) | 4137 kPa (600 psi) |
| Roll motor drive speed, Hz | 12 | 7 |
| Screw motor drive speed, Hz | 30 | 18 |
| Roll power, kW | 0.61 | 0.40 |
| Screw power, kW | 0.70 | 0.50 |
| Ram hydraulic pressure, kPa | 2068 (300 psi) | 5171 (750 psi) |
| Unitary roll power, kWh/tonne | 6.3 (5.7 kWh/ton) | 7.4 (6.7 kWh/ton) |
| Unitary screw power, kWh/tonne | 7.2 (6.5 kWh/ton) | 9.3 (8.4 kWh/ton) |
| Unitary closing force, tonne/cm roll width | 0.6 (1.8 ton/in.) | 1.6 (4.4 ton/in.) |
| Operating roll gap, mm | 7.11 (0.28 in.) | 2.54 (0.1 in.), estimated |
| Feed temperature, °C | 15 (59 °F) | 12.8 (55 °F) |
| Product temperature, °C | 25 (77 °F) | 25 (77 °F) |
| Production, kg/h | 97.5 (215 lb/h) | 54.0 (119 lb/h) |

**Process Development**

In order to achieve dry compaction, sufficient force needed to be applied to overcome Van der Walls forces, specifically the repulsion due to electrostatic charges so that particles were forced to interact. This was achieved within the nip region (FIG. 5) in a roll compactor with adequate force. The pilot study was proof of concept that roll compaction worked, but it was initially unclear whether a compaction screw was necessary to achieve a constant feed pressure (FIG. 5). After testing by gravity feeding, it was concluded that the force applied at the nip region was important, but insufficient to compact the composition. The composition simply retained too much air to use roll compaction alone. A screw was added to achieve a more consistent feed pressure and briquettes were acquired using the parameters outlined in Table 2.

**Table 2.** Operating Parameters of 68 tonne (75 ton) Komarek MS Briquetter

| Parameter | |
|---|---|
| Roll Motor Drive Speed (Hz) | 25 |
| Roll Speed (RPM) | 2.2 |
| Feed Screw | Constant Pitch |
| Screw Motor Drive Speed (Hz) | 60 |
| Screw Speed (RPM) | 88.5 |
| Roll power (kW) | 12.5 |
| Unitary Closing Force (kg/cm) | 11.3 (4.5 st/in) |
| Operating Roll gap (mm) | 2.0 (0.08 in) |
| Feed Temperature (degree C) | 12.8 (55 degree F) |
| Product Temperature (degree C) | 38.9 (102 degree F) |
| Ram hydraulic pressure (kPa) | 12410.6 (1800 psi) |
| Unitary roll power (kWh/kg) | 1.4 (8.8 kWh/st) |

(continued)

| Parameter | |
|---|---|
| Unitary screw power (kWh/kg) | 2.6 (16.7 kWh/st) |
| Production kg/h | 1165.7 (2570 lb/h) |
| Briquette Density kg/$m^3$ | 1730.0 (108 lb/$ft^3$) |

The large temperature increase was likely due to rolls contacting, as the roll gap was uneven across the width of the rolls. At a unitary closing force above 1.6 tonne/cm (4.5 ton (2000 pounds)/in) briquettes slickenside stress fractures were evident indicating over-compaction and subsequent "rebounding" coming out of the nip zone.

The briquettes produced with this machine were tested with different milling and screening machines. Table 3 shows the distribution of product sizes produced by milling the briquettes with a roll-mill. The sieve analysis was carried out on a RoTap® shaker for 3 minutes.

**Table 3.** Sieve Analysis for Milled Briquettes

| Micron Size | Wt grams | % | % less than |
|---|---|---|---|
| 3,350 | 0 | 0.00% | 100.00% |
| 2,360 | 0.1 | 0.10% | 99.90% |
| 1,700 | 0.4 | 0.40% | 99.50% |
| 1,180 | 12.3 | 12.30% | 87.20% |
| 850 | 24.7 | 24.70% | 62.50% |
| 600 | 16.2 | 16.20% | 46.30% |
| 425 | 6.9 | 6.90% | 39.40% |
| 300 | 5.5 | 5.50% | 33.90% |
| 212 | 5.3 | 5.30% | 28.60% |
| 150 | 5.6 | 5.60% | 23.00% |
| 106 | 6.2 | 6.20% | 16.80% |
| 75 | 3.6 | 3.60% | 13.20% |
| 53 | 2.5 | 2.50% | 10.70% |
| 37 | 10.7 | 10.70% | 0.00% |
| Total | 100 | 100.0% | |

Using these results, a final product size of from 600 microns to 1,700 microns was selected as a target for the granular composition. Next, a vibratory screener was tested to determine if screening would be possible at a desired full production rate, such as 30 ton/hour throughput, with a 70% fines (having a particles size of less than 600 microns) load. The screening data for the screener selected shown in Tables 4-7. Any material that did not meet the 600 to 1,700 micron size requirement was recycled back to the compactor to be compacted and milled again.

**Table 4.** Screening data for a feed sample

| Opening (mm) | Weight (g) | percentage | accumulated |
|---|---|---|---|
| 3.350 | 0.1 | 0.1 | 0.1 |
| 2.360 | 1.0 | 0.7 | 0.7 |
| 2.000 | 1.1 | 0.7 | 1.5 |
| 1.700 | 0.9 | 0.6 | 2.1 |
| 1.400 | 2.1 | 1.4 | 3.5 |
| 1.180 | 10.5 | 7.0 | 10.4 |

(continued)

| Opening (mm) | Weight (g) | percentage | accumulated |
|---|---|---|---|
| 1.000 | 10.0 | 6.6 | 17.1 |
| 0.850 | 8.5 | 5.7 | 22.7 |
| 0.710 | 7.9 | 5.3 | 28.0 |
| 0.600 | 5.9 | 3.9 | 31.9 |
| 0.500 | 8.2 | 5.5 | 37.4 |
| 0.425 | 13.6 | 9.0 | 46.4 |
| 0.355 | 11.7 | 7.8 | 54.2 |
| 0.300 | 10.6 | 7.0 | 61.2 |
| 0.250 | 11.3 | 7.5 | 68.8 |
| 0.212 | 5.7 | 3.8 | 72.5 |
| 0.180 | 8.4 | 5.6 | 78.1 |
| 0.150 | 7.0 | 4.7 | 82.8 |
| | 25.9 | 17.2 | 100.0 |
| | 150.4 | | |

**Table 5.** Screening data for a compacted feed supplement

| Opening (mm) | Weight (g) | percentage | accumulated |
|---|---|---|---|
| 1.700 | 2.1 | 0.5 | 0.5 |
| 1.400 | 13.4 | 3.5 | 4.0 |
| 1.180 | 77.8 | 20.3 | 24.4 |
| 1.000 | 78.0 | 20.4 | 44.7 |
| 0.850 | 67.1 | 17.5 | 62.3 |
| 0.710 | 63.2 | 16.5 | 78.8 |
| 0.600 | 43.0 | 11.2 | 90.0 |
| 0.500 | 31.9 | 8.3 | 98.4 |
| 0.425 | 4.8 | 1.3 | 99.6 |
| 0.355 | 0.6 | 0.2 | 99.8 |
| 0.250 | 0.3 | 0.1 | 99.8 |
| 0.150 | 0.1 | 0.0 | 99.9 |
| | 0.5 | 0.1 | 100.0 |
| | 382.8 | | |

**Table 6.** Screening data for a compacted feed supplement after running through Texas Shaker five times to assess durability.

| Opening (mm) | Weight (g) | percentage | accumulated |
|---|---|---|---|
| 1.700 | 3.1 | 1.1 | 1.1 |
| 1.400 | 10.7 | 3.7 | 4.8 |

(continued)

| Opening (mm) | Weight (g) | percentage | accumulated |
|---|---|---|---|
| 1.180 | 63.2 | 22.0 | 26.8 |
| 1.000 | 63.2 | 22.0 | 48.9 |
| 0.850 | 54.0 | 18.8 | 67.7 |
| 0.710 | 50.6 | 17.6 | 85.3 |
| 0.600 | 32.6 | 11.4 | 96.7 |
| 0.500 | 9.2 | 3.2 | 99.9 |
| 0.425 | 0.1 | 0.0 | 99.9 |
| 0.355 | 0.0 | 0.0 | 99.9 |
| 0.250 | 0.0 | 0.0 | 99.9 |
| 0.150 | 0.0 | 0.0 | 99.9 |
| | 0.2 | 0.1 | 100.0 |
| | 286.9 | | |

**Table 7.** Summary of the screening data

| Test number: | Test 7 | Test 8 |
|---|---|---|
| Feed source: | original sample | undersize material from a previous compaction run |
| Screen cloth: | 0.055" cloth opening. | 0.0233" cloth opening |
| Simulated Capacity: | 3051.5 kg/($m^2$.hr) (625 lbs/($ft^2$·hr)) | 3002.7 kg/($m^2$·hr) (615 lbs/($ft^2$·hr)) |
| Simulated machine size for 22.7 tonne/hour (25 tph): | 7.4 $m^2$ (80 $ft^2$) | 7.4 $m^2$ (80 $ft^2$) |
| Oversize: | 0.4 kg (0.8 lbs) | 6.6 kg (14.5 lbs) |
| Fines (undersize): | 20.6 kg (45.5 lbs) | 13.2 kg (29 lbs) |
| Fines Percentage: | 98.3% | 66.7% |
| Screening Efficiency: | | 95.2% |
| | **Summary** | |
| **Oversize** | **0.4 kg (0.8 lbs)** | 1.8% |
| **Product (desired size range)** | **6.6 kg (14.5 lbs)** | 32.7% |
| **Fines (undersized)** | **13.2 kg (29 lbs)** | 65.5% |

**Compactor/Compaction Screw Scale-Up**

In order to achieve a desired production capacity of finished product with 60-70% recycle a larger compactor was necessary than the Komarek MS test machine. The Bollinger 230A was determined to have adequate unitary closing force (Table 8), and throughput (Table 9).

**Table 8.** Closing force at 12.4 MPa (1800 PSI) Hydraulic Pressure

| Hydraulic Cylinder Size (cm) | Compact Surface Area ($cm^2$) | Closing Force (tonne) | Unitary Closing Force per Unit Roll Width (tonne/cm) |
|---|---|---|---|
| 12.88 (5.07 in) | 520.97 (80.75 $in^2$) | 65.93 (72.68 ton) | 1.73 (4.84 ton/in) |

**Table 9.** Throughput of Bollinger 230A Roll Compactor

| Number of Briquettes per Roll | Number of Rows | Briquettes per Revolution | Briquette Volume ($cm^3$) | Max Roll Speed (RPM) | Compacted Density ($kg/m^3$) |
|---|---|---|---|---|---|
| 65 | 5 | 325 | 26.5 (1.62 $in^3$) | 35.6 | 1601.9 (100 $lb/ft^3$) |

Using the data acquired from pilot-testing and simulation (see Example 2), a compaction screw was designed in order to control the inlet pressure in to the nip region. The screw was designed to be able to displace at least 61.43 $m^3$/hour (2169.33 $ft^3$ /hour). A screw expected to double the density (typical in screw compaction) through de-aeration would need to displace double that volume.

## Example 2

### Introduction

A granular product was achievable through use of a roll-press to create agglomerates. The Johanson model for roller compaction was experimentally verified to predict stress distributions and compact density. Specifically, the Johanson model was applied to a composition comprising silica, mineral clay, glucan and mannans using information gleaned from material studies described in Example 1 as inputs for the model, to predict outputs such as compact density, throughput, and gap width. Using this information, briquettes of the composition were produced on subsequently larger machines. It was hypothesized that controlling compact density would yield compacted granules with the following tractable parameters:

- Size distribution
- Solubility in water
- Hardness/friability

In other words, compact density could be used to determine the quality of granules created in downstream unit operations. Density could be controlled directly by adjusting roll press parameters while the granule property of interests would depend on additional processing steps. Density, roll gap width, and roll speed determined the production rate. Once briquettes of a certain density were selected based on the aforementioned granule characteristics, the roll gap width and roll speed were adjusted to maximize output of the briquette type of interest.

### Roller Compaction Model

Using the Johanson Model for roller compaction and the operating parameters in Example 1, a simulation yielded briquettes that had compact densities within 1% of the briquettes created in Example 1 on the B220 roll press (Tables 10 and 11).

**Table 10.** Operating Conditions for B220 Roll Press

| Parameter | Value | Unit | Description |
|---|---|---|---|
| $\delta$ | 46 | degrees | Effective angle of internal friction (Solids Handling Report) |
| $\varphi$ | 29.06 | degrees | Angle of wall friction (Solids Handling Report) |
| **R** | 0.15 (0.5 ft.) | m | Radius of roller |

(continued)

| Parameter | Value | Unit | Description |
|---|---|---|---|
| **A** | 0.01 (0.13 ft.$^2$) | $m^2$ | Compact Surface Area |
| **W** | 0.05 (0.17 ft.) | m | Roller width |
| **h** | 6.10 (0.02 ft.) | mm | Roll gap set point |
| **C1** | $2.58\times10^{-13}$ ($8.46\times10^{-13}$(lb/ft$^2$)/(lb/ft$^3$)$^{9.2336}$) | kg/m$^2$/( kg/m$^3$)$^{9.2336}$ | Compaction constant related to density and pressure |
| **K** | 9.23 | | Compaction constant related to density and pressure |
| **$P_h$** | 5.17 (750 psi) | MPa | Hydraulic pressure |

**Table 11.** Compacted Density from Experiment and a Simulation Compactor

| Experimental Briquette Density (kg/m$^3$) | Simulated Briquette Density (kg/m$^3$) | Percent Difference |
|---|---|---|
| **1655.19 (103.33 lb/ft$^3$)** | 1634.84 (102.06 lb/ft$^3$) | 0.82% |

Using instead, the operating parameters (Table 12) for the Komarek Roll Press on site for pilot studies, the density distribution for a wide hydraulic pressure range was simulated (FIG. 6).

**Table 12.** Operating Parameters for Komarek Roll Press

| Parameter | Value | Unit | Description |
|---|---|---|---|
| $\delta$ | 46 | degrees | Effective angle of internal friction (Solids Handling Report) |
| $\varphi$ | 29 | degrees | Angle of wall friction (Solids Handling Report) |
| **R** | 0.26 (0.84 ft.) | m | Radius of roller |
| **A** | 0.080 (0.86 ft.$^2$) | $m^2$ | Compact Surface Area |
| **W** | 0.20 (0.65 ft.) | m | Roller width |
| **h** | 1.98 (0.078 in.) | mm | Roll gap (total) |
| **C1** | $2.58\times10^{-13}$ (8.46* $10^{-13}$(lb/ft$^2$)/(lb/ft$^3$)$^{9.2336}$) | (kg/m$^2$)/( kg/m$^3$)$^{9.2336}$ | Compaction constant related to density and pressure |
| **K** | 9.23 | | Compaction constant related to density and pressure |
| **$P_h$** | 5.17-20.7 (750-3000 psi) | MPa | Hydraulic pressure |
| $\omega$ | 2 | RPM | Roll speed |
| **$u_{in}$** | 0.57 (1.87 ft/min) | m/min | Linear Screw speed (estimated) |

Table 13 shows how closely the simulated briquette density matched experimental results at nominal pressures of 13.8 MPa (2000 PSI) and 10.3 MPa (1500 PSI).

**Table 13.** Compacted Density from Experiment and Simulation Komarek Compactor

| Experimental Briquette Density (kg/m$^3$) | Simulated Briquette Density (kg/m$^3$) | Percent Difference | Pressure (MPa) |
|---|---|---|---|
| **1821.0 (113.68 lb/ft$^3$)** | 1783.3 (111.33 lb/ft$^3$) | 2.09% | 13.8 (2000 PSI) |

(continued)

| Experimental Briquette Density ($kg/m^3$) | Simulated Briquette Density ($kg/m^3$) | Percent Difference | Pressure (MPa) |
|---|---|---|---|
| **1715.6 (107.10 $lb/ft^3$)** | 1730.3 (108.02 $lb/ft^3$) | 0.85% | 10.3 (1500 PSI) |

As the results indicated that the theoretical model could be scaled up to effectively control briquette quality with the full-scale production roll press manufactured by Bollinger/Lewis Mechanical, the operating conditions in Table 14 were simulated and found to be satisfactory without significant modification to the machine. Results from the simulation and actual experimental density data are compared in Tables 15 and 16.

**Table 14.** Operating Parameters for Bollinger Roll Press

| Parameter | Value | Unit | Description |
|---|---|---|---|
| $\delta$ | 46 | degrees | Effective angle of internal friction (Solids Handling Report) |
| $\varphi$ | 29 | degrees | Angle of wall friction (Solids Handling Report) |
| **R** | 0.46 (1.5 ft.) | m | Radius of roller |
| **A** | 0.27 (2.94 $ft.^2$) | $m^2$ | Compact Surface Area |
| **W** | 0.38 (1.25 ft.) | m | Roller width |
| **h** | 1.55 (0.061 in.) | mm | Roll gap (total) |
| **C1** | $2.58\times10^{-13}$ ($8.46\times10^{-13}$ $(lb/ft^2)/(lb/ft^3)^{9.2336}$) | $(kg/m^2)/(kg/m^3)^{9.2336}$ | Compaction constant related to density and pressure |
| **K** | 9.23 | | Compaction constant related to density and pressure |
| $P_h$ | 12.4 (1800 psi) | MPa | Hydraulic pressure |
| $\omega$ | 7.72 | RPM | Roll speed |
| $u_{in}$ | 3.84 (12.6 ft./min) | m/min | Linear Screw speed |

**Table 15.** Compacted Density From Experiment and Simulation Bollinger Compactor

| Experimental Briquette Density ($kg/m^3$) | Simulated Briquette Density ($kg/m^3$) | Percent Difference |
|---|---|---|
| **1748.74 (109.17 $lb/ft^3$)** | 1807.84 (112.86 $lb/ft^3$) | 3.32% |

**Table 16.** Gap Width From Experiment and Simulation Bollinger Compactor

| Experimental Briquette Gap width (mm) | Simulated Briquette Gap Width (mm) |
|---|---|
| **29.9 (0.098 ft)** | 21.0 (0.069 ft) |

The simulations indicate that compact densities are more sensitive to pressure changes at the lower end of the 5.2-20.7 MPa (750-3000 psi) range simulated (FIG. 6). This nonlinearity is an important consideration for the control design. To further elucidate the dynamic response to changes in input a simulation was carried out that considered the material balance. Introducing the material balance (equations 1 and 2) allows us to include a time dependency in to the roller compaction model.

$$\rho_{exit}R\omega h_0 = \rho_{in}u_{in}(h_0 + 1 - \cos\theta_{in}) - \left[\int_0^{xin} \rho dx\right]\frac{dh_0}{dt} \quad \text{(Equation 1)}$$

or

$$\frac{d}{dt}\left(\frac{h_0}{R}\right) = \frac{\omega\left[\rho_{in}\cos\theta_{in}\left(\frac{u_{in}}{\omega R}\right)\left(\frac{h_0}{R}+1-\cos\theta_{in}\right)-\rho_{exit}\left(\frac{h_0}{R}\right)\right]}{\int_0^{\theta_{in}}\rho(\theta)\cos\theta d\theta} \quad \text{(Equation 2)}$$

Solving the differential equational iteratively it was possible to simulate the dynamic behavior of the compaction process. Note that every controllable variable (roll speed, pressure set point, and screw speed, which in turn affects the feed speed) affects the gap width and, thus briquette density non-linearly. Thus, it was important to determine how each affects the gap width and density independently. All simulations were carried out with nominal values to make visualizing the effects of the step changes easy.

FIGS. 7-9 illustrate the effect that a step change in pressure (FIG. 7) has on the briquette density (FIG. 8) and gap width (FIG. 9). As pressure was increased from 13.8 MPa (2,000 psi) to 27.6 MPa (4,000 psi) (line 1 in FIG. 7) the density increases (line 1 in FIG. 8) as the gap width is decreased (line 1 in FIG. 9). And lines 2 and 3 in FIGS. 7-9 illustrate the effect of increasing the pressure from 13.8 MPa (2,000 psi) to 20.7 MPa (3,000 psi), or decreasing the pressure from 13.8 MPa (2,000 psi) to below 10.3 MPa (1,500 psi), respectively.

FIGS. 10-12 illustrate the effect that step changes in roll speed (FIG. 10) has on density (FIG. 11) and gap width (FIG. 12). As roll speed is increased (lines 1 and 2 in FIG. 10) the density increased (lines 1 and 2 in FIG. 11) and the gap width decreased (lines 1 and 2 in FIG. 12). The opposite effect was observed for a decrease in roll speed (line 3 in FIGS. 10-12).

A step change in feed speed is shown in FIG. 13. And the related effects on density and gap width are shown in FIGS. 14 and 15, respectively. Density decreased with a step increase in feed speed (lines 1 and 2 in FIGS 13 and 14), whereas gap width increased (lines 1 and 2 in FIG. 15). The inverse affect was observed for a step decrease in feed speed (line 3 in FIGS. 13-15).

In order to determine a control scheme for briquette quality, two of these three parameters needed to be selected to reduce the degrees of freedom to zero and make the control problem determined. Proportionately, accounting for the magnitude of the change, roll pressure had the greatest impact on briquette density. All three of the variables affected the gap width, but feed speed had a less pronounced effect on density, proportionately, than the other two variables. Thus, feed speed and roll pressure were selected as the variables of interest. Furthermore, keeping a constant ratio of feed speed to roll speed enabled a given density and gap width to be maintained (FIGS. 16-19). This severely reduced the complexity of the simulation for a feed-forward control, and allowed adjustments to be made on the fly without severely affecting quality or through feedback control. Note that the initial spikes in the gap width and density graphs (FIGS. 18 and 19, respectively) were due to the initial guesses in the ODE solver being slightly off, as illustrated by the magnitude of the change in the y axis.

To further reduce the computational complexity, the non-linear equation for solving the nip angle in the Johanson compaction model could be approximated if it scales linearly (or nearly linearly) with gap width. FIG. 20 shows that this is the case with the disclosed composition, and thus the control problem was further simplified.

## Discussion

Through simulation and subsequent experimentation, the briquette quality and throughput of the compaction process was controlled. Controlling these parameters resulted in downstream product quality being effectively controlled, and helped to determine the set-points for other equipment, such as vibratory pans, screeners, mills etc.

The Matlab example code for simulation is included below:

```
%% Example Simulation for the Bollinger Compactor

%% Initialize

% Roll size
R= 18/12; % radius of rolls (ft)
A= 2.94; %compact surface area for roller (ft2)
W= 1.25; %width of roller (ft)
```

```
h0= 0.061; %gap width at pocket(ft)

% Angles of friction
d=46*(pi/180); %effective angle of friction (Solids Handling Report)
phi=29.0588*(pi/180); %angle of surface friction (Solids Handling Report)

% Geometric constants from Johanson compaction theory
v=(pi-asin(sin(phi)/sin(d))-phi)/2;
u=(pi/4)-(d/2);
thetain=(pi/2)-v;
xin=R*sin(thetain);
% Compaction constants(lb/ft2)/(lb/ft3)^9.2336 from Solids Handling report
C1=8.46*10^-13;
K=9.23;

% Hydraulic Pressure
Ph=1800*144;
%% Calculating Nip Angle

%x(1) is the stress gradiant and x(2) is the nip angle
f1 =@(x) [(x(1)-((4.*(pi./2-x(2)-v).*tan(d))./((cot(1./2.*...
 (pi./2+x(2)+v)-u))-(cot(1./2.*(pi./2+ x(2) +v)+u)))));
 (x(1)-((K.*tan(x(2)).*(2.*cos(x(2))-1-(h0./R)))./(cos(x(2)))))];
 guess1=[0.1 0.1];
 s_and_a=fsolve(f1,guess1);
 alpha=s_and_a(2);

 %% Calculating Separating Force per unit roll width and maximum stress

 % calculate integral
 f2 = @(x) (((h0./R)./((1+h0./R-cos(x)).*cos(x))).^K).*cos(x);
 int=quad(f2,0,alpha);

 % now solve nonlinear system of equations with fsolve x(1) is separating
 % force (lbf) per unit roll width and x(2)(lbf/ft2) is maximum stress
 f3 = @(x) [x(1) - (((x(2).*R)./(1 + sin(d))).*int);
 x(1) - (A./W.*Ph);];
 guess3=[30000 10000];
 f_and_ms=fsolve(f3,guess3);
 separating_force=f_and_ms(1);
 max_stress=f_and_ms(2);
 %% Calculating density of briquettes
 rho=(max_stress./C1).^(1./K);
 Ph_psi=Ph./144;

 %% Pre-allocating arrays

 tspan=linspace(0,60, 60);
 alpha_array=zeros(length(tspan),1);
 alpha_array(1)=alpha;
 maxStress_array=zeros(length(tspan),1);
 maxStress_array(1)=max_stress;
 rho_array=zeros(length(tspan),1);
 rho_array(1)=rho;
 h0_array=zeros(length(tspan), 1);
 h0_array(1)=h0;
 h0_out=zeros(length(tspan),1);
 Ph_array=repmat(Ph,length(tspan),1);
 Ph_array(1)=Ph;
 %% Operating Parameters
 w=7.72; %rot/min
 uin=12.6; %ft/min
 rhoin=25; %lb/ft3
```

```
%% Iteratively Solving

for i=2:length(tspan)

%function for gap width
f4= @(t,h,a,rho) (w*((rhoin*cos(thetain)*(uin/(w*R)))*((h/R)+1-(cos(thetain)))-rho*(h/R)))...
   /(rho*(h/R)*((2*(1+(h/R)))/(((h/R)*(2+(h/R)))^.5)*atan(((1+(2*R)/h)^.5)*tan(a/2))-
a)+rhoin*(cos(v)-sin(a)));
 [t h0_out]=ode23s(@(t,h) f4(t,h,alpha_array(i-1),rho_array(i-1)),tspan,h0_array(1));
 h0_array(i)=h0_out(i-1);
h0=h0_array(i);

%function for alpha
f5 =@(x) [(x(1)-((4.*(pi./2-x(2)-v).*tan(d))/((cot(1./2*...
   (pi./2+x(2)+v)-u))-(cot(1./2.*(pi./2+ x(2) +v)+u)))));
   (x(1)-((K.*tan(x(2)).*(2.*cos(x(2))-1-(h0./R)).)/(cos(x(2)))))];
s_and_a=fsolve(f5,guess1);
alpha=s_and_a(2);
alpha_array(i)=alpha;

%calculate separating force per unit roll width
f6 = @(x) (((h0./R)./((1+h0./R-cos(x)).*cos(x))).^K).*cos(x);
int=quad(f6,0,alpha);
f7 = @(x) [x(1) - (((x(2).*R)./(1 + sin(d))).*int);
   x(1) - (A./W.*Ph_array(i));];
guess3=[30000 10000];
f_and_ms=fsolve(f7,guess3);
max_stress=f_and _ms(2);
max_stress_array1 (i)=max_stress;

%calculate density
rho=(max_stress./C1).^(1./K);
rho_array(i)=rho;
end
```

## Example 3

An experiment was conducted with sheep with the goal of determining the ability of a composition comprising silica, mineral clay, glucan and mannans to increase expression of neutrophil L-selectin, a marker of the innate immune system, in immunosuppressed animals. Animals (six per group) were divided into two groups: Control and Experimental. The Control group received a high energy ration consisting of chopped hay available *ad libitum,* one pound (0.45 kg) of ground corn per head per day and one pound (0.45 kg) of baked wheat mill run per head per day for a period of 28 days. During this time, they also received twice daily injections of dexamethasone, an immunosuppressive drug. The Experimental group received daily intake of the composition (5 grams per head per day) for 28 days and received the same diet and dexamethasone injection protocol as the Control. This composition of the Experimental group was 65.8 weight percent of mineral clay, 0.20 weight percent of endoglucanohydrolase, 9.0 weight percent of glucans and glucomannan, and 25 weight percent of calcined diatomaceous earth. At the end of the study, blood samples were recovered and neutrophils were purified using Percoll gradient centrifugation. The amounts of L-selectin expression in neutrophils were assessed using Western blotting techniques and antibodies specific for L-selectin.

As shown in FIG. 21, top panel, animals that did not receive the composition had low and variable expression of L-selectin. As shown in FIG. 21, lower panel, animals that received the composition demonstrated a consistent increase in L-selectin expression. The top panel represents six Control, immunosuppressed animals. The lower panel represents six Experimental immunosuppressed animals which received the composition in their diet.

## Example 4

In this study, stimulation of the innate immune system in sheep was examined when the Experimental composition of Example 3 was provided in a pelleted diet. The basal diet consisted of 21.55% barley, 10.0% canola meal, 5% distillers grains, 40% ground corn, 1.50% limestone, 0.01% manganese sulfate, 0.01% microvitamin E, 4.0% molasses, 0.25% mono-cal, 0.25% potassium chloride, 0.60% sodium chloride, 0.03% sodium selenite, 15.79% wheat mill run,

0.01% zinc sulfate, 0.75% ammonium sulfate and 0.2 5% cobalt sulfate. When the Experimental composition was added to this diet, it was included at 0.6% replacing that portion of wheat mill run. Twenty-eight sheep were assigned to four treatments which consisted of a Control group, a group which received the Experimental composition in powdered form, a group which received the Experimental composition in pelleted form where pellets were formed at a temperature of 71.1 °C (160° F), and a group which received the Experimental composition in pelleted form where pellets were formed at 82.2 °C (180° F). All animals were immunosuppressed via daily injection of Dexamethasone. To form the pelleted form, moisture was added to the Experimental composition, and the resulting mixture was compressed and heated to form the pellets. Typically, pellets made by such a method have poor dispersion characteristics, similar to Method 6 in Example 14.

The study was conducted using methods identical to Example 3 except the composition was administered in pellets that were manufactured by forming the pellets at high temperatures. The rationale for conducting this study was to determine whether heating of the composition (as is required in pellet formation) might inactivate the ability of the composition to augment innate immunity. As shown in FIG. 22, sheep (Control) which did not receive the composition expressed very low levels of L-selectin in neutrophils. The provision of the Experimental composition even in a pelleted (heated) form still increased expression of neutrophil L-selectin markedly.

In FIG. 22, the uppermost panel represents neutrophil L-selectin expression in immunosuppressed animals fed a control diet without the composition. The second panel (Powder) represents L-selectin expression in immunosuppressed animals which received the Experimental composition in unheated freely-mixed form as in Example 3 (Experimental group). Panels 3 and 4 represent neutrophil L-selectin expression in immunosuppressed animals which received the Experimental composition in pelleted forms. The pellets used in Panel 3 were formed by heating to 71.1 °C (160°F) and Panel 4 pellets were heating to 82.2 °C (180°F) during manufacture of the feeds.

## Example 5

An experiment was performed with rats to investigate whether the composition had ability to augment innate immunity in a non-ruminant model. In this study, rats were assigned to one of two treatments: a Control group (unsupplemented diet) and an Experimental group where the composition of Example 3 was added to the diet at 1% of dry weight of feed. In this experiment, rats were fed a commercial ground rat chow with or without the Experimental composition. Immunosuppression using dexamethasone injection protocols were not utilized in this study. Following 14 days, blood samples were taken from anesthetized rats via cardiac puncture. Neutrophils were isolated from blood samples using Percoll gradient centrifugation and total RNA was isolated using TriZol®.

The concentration of the messenger RNA (mRNA) encoding rat L-selectin in the neutrophil RNA samples was then determined by quantitative reverse transcriptase polymerase chain reaction (QRT-PCR) using primers which were specifically developed for assay of rat L-selectin. The amounts of L-selectin mRNA were standardized by showing them as a proportion of β-actin mRNA, which is expressed in all cells at a fairly constant level. As shown in FIG. 23, and in agreement with the results in Examples 3 and 4, the composition increased expression of L-selectin mRNA by greater than 6-fold ($P<0.05$).

This study demonstrated that the increased expression of L-selectin protein as shown in by Western blotting in Examples 3 and 4 may be caused by an increase in the mRNA encoding this protein. This implies that the composition alters the rate of transcription of the gene encoding L-selectin.

## Example 6

Neutrophils, cells of the innate immune system, are able to signal and thereby up-regulate the production of antibodies by the acquired immune system through the secretion of interleukin-Iβ (IL-1β). To investigate the ability of the composition to induce neutrophils to increase synthesis of IL-1β, the concentration was assessed of IL-1β in neutrophils taken from the same sheep as described in Example 3. To complete this study, Western blotting and antibodies specific for IL-1β were used.

As shown in FIG. 24, animals which did not receive daily provision of the composition contained virtually undetectable levels of IL-1β; however, provision of the composition to animals caused a marked increase in the expression of IL-1β ($P < 0.05$). In FIG. 24, the top panel represents six Control-fed immunosuppressed animals. The lower panel represents six Experimental composition-fed immunosuppressed animals which received the composition. Concentrations of IL-1β were determined using Western blot analysis and an antibody specific for IL-1β.

These data indicate that the composition not only increases markers of innate immunity (e.g., L-selectin; Examples 3, 4 and 5) but also increases expression of the key signaling molecule (i.e., IL-1β) that up-regulates the adaptive immune system.

**Example 7**

The goal of this experiment was to determine which genes were differentially-expressed in neutrophils after feeding the composition to peri-parturient dairy cattle. In this study, the mechanism(s) by which the composition increased the expression of IL-1β in neutrophils was examined. Peri-parturient dairy cattle are a good model because the stress of pregnancy leads to immunosuppression, making the cows particularly susceptible to infection.

In this experiment, eight peri-parturient dairy cattle were assigned to a Control diet that did not have the Experimental composition and eight cattle were assigned to an Experimental group that received an embodiment of the composition in their diet (56 grams per day per head). Animals were fed the diets for approximately 28 days until parturition. At 12-15 hours following parturition, 500 ml samples of blood were recovered via jugular puncture and neutrophils were prepared via large-scale Percoll gradient centrifugation.

RNA was isolated from neutrophils using the TriZol® method and then reverse-transcribed into cDNA using reverse transcriptase. During reverse transcription, differently-colored nucleotide-based dyes (Cy3 and Cy5) were employed such that complementary DNAs (cDNAs) synthesized from the two different treatment (Control and Experimental) groups incorporated different colors. The cDNA samples from Experimental and Control groups were then applied to a BoTL-5 microarray slide. This microarray was prepared at the Center for Animal Functional Genomics at Michigan State University and contains 1500 genes (each arrayed in triplicate) upon a glass slide. The cDNAs generated from the Experimental and Control group samples were then allowed to compete for binding to the 1500 genes on the array and the relative expression of the genes was then assessed by comparing relative abundance of Cy3 and Cy5 signals on each spot on the array. Data were then statistically analyzed to identify those genes which were differentially-expressed (those genes where $P < 0.05$).

The results showed that greater than 20 genes were differentially expressed ($P < 0.05$) in bovine neutrophils taken from the Experimental group. Interleukin-converting enzyme (ICE) was one such up-regulated gene. This was confirmed using QRT-PCR and primers specific to the bovine ICE sequence. ICE is the rate-limiting enzyme in the conversion of inactive pro- IL-1β to the active, secreted IL-1β. Thus, the composition may up-regulate adaptive immunity (i.e., such as increasing antibody titer) through its ability to increase expression of neutrophil ICE activity and, consequently, secretion of IL-1β.

**Example 8**

A total of 60 cows on a commercial dairy were balanced for DIM, parity and milk production and assigned to 1 of 2 treatment groups fed (1) an embodiment of the composition comprising between 15% and 40% silica, between 50% and 81% mineral clay, between 1.0% and 5.0% β-glucans, between 0.05% and 3.0% β-1,3 (4)-endoglucanohydrolase and between 1% and 8.0% mannans (EX, 30 cows) or (2) control (CON, 30 cows) diets for 52 days post calving. At 52 days of lactation cows were randomly selected (n = 12) from both groups (6 EX and 6 CON) and housed in environmentally controlled modules for 21 days. The combination was top-dressed 2×/day with molasses as the carrier and the CON cows received the molasses carrier 2×/day. Both were mixed into the top one-third of the TMR. During the environmental room phase of the study cows fed the combination (EX) had higher feed intake than CON during heat stress (HS) (46.8 kg vs. 42.9 kg, $P < 0.0001$) and no difference during thermoneutral (TN). A temperature-humidity index (THI) threshold of 68 or greater was used to achieve HS. Feeding the composition maintained a numerical 1 kg milk yield advantage compared with CON (30.3 kg vs. 31.4 kg, $P = 0.26$) during HS but not during TN. Cows fed the composition had lower milk fat (%) (4.2% vs. 3.8%, $P = 0.02$) and milk protein (%) ($P = 0.04$). There was no difference in 3.5% FCM between treatments. Water consumption was lower (12.4 liter/day in the composition treated cows, $P < 0.01$) than control cows. Respiration rates were lower in treated cows at 1400 hours and 1700 hours (4.7 and 8.4 less respirations/minute, P = 0.05, < 0.001) and rectal temperatures were also lower (0.15 °Celsius and 0.25 °Celsius lower that CON, P = 0.05, < 0.001) in treated cows. Feeding the composition reduced physiological responses to heat stress in lactating dairy cows.

**Example 9**

A total of 30 cows on a commercial dairy were balanced for DIM, parity and milk production and assigned to 1 of 2 treatment groups fed the composition (EX, 15 cows) or control (CON, 15 cows) diets for 90 days post calving. At 90 days of lactation, cows were randomly selected (n = 12) from both groups (6 EX and 6 CON) and housed in environmentally controlled modules for 21 days. The composition was top-dressed 2×/day with molasses as the carrier. The CON cows received the molasses carrier 2×/day. Both were mixed into the top one-third of the TMR. During the environmental room phase of the study, cows fed the combination (EX) had higher feed intake than CON during heat stress (HS) (46.8 kg vs. 42.9 kg, $P < 0.0001$) and no difference during thermoneutral (TN). A temperature-humidity index (THI) threshold of 68 or greater was used to achieve HS. Feeding the composition maintained a numerical 1 kg milk yield advantage compared with CON (30.3 kg vs. 31.4 kg, $P = 0.26$) during HS but not during TN. Cows fed the composition

had lower milk fat (%) (4.2% vs. 3.8%, P = 0.02) and milk protein (%) (P = 0.04). There was no difference in 3.5% FCM between treatments. Water consumption was lower (12.4 liter/day in the composition treated cows, P < 0.01) than control cows. Respiration rates were lower in treated cows at 1400 hours and 1700 hours (4.7 and 8.4 less respirations/minute, P = 0.05, < 0.001) and rectal temperatures were also lower (0.15 °Celsius and 0.25 °Celsius lower that CON, P = 0.05, < 0.001) in treated cows. Feeding the composition reduced physiological responses to heat stress in lactating dairy cows.

***Experimental Design:*** The study consisted of two phases; 1) the commercial dairy, and 2) the controlled environmental chambers. During the commercial dairy phase, multiparous lactating Holstein cows (n=30) were balanced by DIM, milk production and parity (91 ± 5.9 DIM, 36.2 ± 2.5 kg/day, and 3.1 ± 1.4). Cows were separated into one of two groups. The control group received the base TMR with no supplement. The treatment group was fed the base diet plus 56 grams/ head/ day of the composition (EX) mixed into the TMR. Daily milk production was measured. The dairy phase lasted for 45 days. The dairy portion was used to meet the manufacture's recommended 45 days feeding for EX to function.

After the on-dairy portion was complete, 12 cows (6 control and 6 treatment) were housed in environmentally controlled rooms. Cows continued the ARC portion in the same treatment groups from the on-dairy portion.

The ARC portion lasted for 21 days. Cows were subjected to 7 days of TN conditions, 10 days of HS, and 4 days of recovery (TN). Feed intake, milk production, and milk composition were measured daily. Rectal temperatures and respiration rates were recorded 3×/day (600, 1400, and 1800 hours). Blood samples were taken on days 7 (TN), 8 (HS), 10 (HS), 17 (HS) and 18 (TN) during the ARC segment.

Statistical analyses were performed using the PROC MIXED procedure (version 9.3, SAS Institute, Cary, NC). Cow was the experimental unit (ARC portion). Data is presented in least square means with significance declared with a P-value ≤ 0.05. (See Table 17, below).

Feeding the disclosed composition to heat stressed dairy cows maintained feed intake during heat stress. Milk yield had a numeric (1 kg) advantage with the composition treatment but did not differ significantly. Respiration rate and rectal temperatures were lower in treated animals during heat stress. There was also a reduction in SCC with treatment. Serum cortisol levels were lower in on 8 days (the first day of heat stress) at 2000 hours in the composition supplemented cows (P=0.03).

**Table 17.**

| | Control | | | | component 1 (EX) | | | | |
|---|---|---|---|---|---|---|---|---|---|
| Item | TN | HS | Recovery | | TN | HS | Recovery | SEM | P-value |
| Feed intake (kg) | 46.1 | 42.9 | 47.5 | | 47.1 | 46.8* | 49.1 | 1.04 | 0.01 |
| Milk yield (kg) | 33.1 | 30.3 | 30.4 | | 33.9 | 31.4 | 31.3 | 1.02 | 0.23 |
| Resp/ min | | | | | | | | | |
| 600 | 26.9 | 31.9 | 28.3 | | 26.6 | 30.4 | 27.9 | 1.40 | 0.40 |
| 1400 | 343 | 63.1* | 35.3 | | 30.1 | 58.3 | 35.5 | 2.99 | 0.20 |
| 1800 | 34.9* | 60.8* | 32.1 | | 29.5 | 52.4 | 29.7 | 2.62 | 0.01 |
| Rectal Temp (°C) | | | | | | | | | |
| 600 | 38.2 | 38.0 | 37.9 | | 38.2 | 38.1 | 38.1 | 0.05 | 0.26 |
| 1400 | 38.0 | 38.7* | 38.0 | | 38.1 | 38.5 | 38.1 | 0.09 | 0.77 |
| 1800 | 38.2 | 39.1* | 38.2 | | 38.2 | 38.8 | 38.3 | 0.08 | 0.25 |
| FCM (kg/ d) | 35.0 | 33.7 | 33.7 | | 34.7 | 32.8 | 32.6 | 1.45 | 0.39 |
| Protein (%) | 2.95 | 2.98* | 2.86 | | 2.95 | 2.86 | 2.79 | 0.07 | 0.15 |
| Protein (kg) | 0.94 | 0.89 | 0.87 | | 0.97 | 0.89 | 0.86 | 0.3 | 0.13 |
| Lactose (%) | 4.87 | 4.85 | 4.99 | | 4.89 | 4.78 | 4.96 | 0.08 | 0.61 |
| SCC | 20.3 | 23.9 | 59.4* | | 19.6 | 22.9 | 26.3 | 9.12 | 0.03 |

## Example 10

Thirty-six male CD rats (ca. 225 grams) were randomly assigned to six treatment groups for a feeding trial. Animals were fed one of the following six diets *ad libitum* for 28 days:

A. Control diet (Teklad 8604 powdered diet).
B. Diet supplemented with yeast cell wall preparation (including β-glucans and glucomannan).
C. Diet supplemented with diatomaceous earth and β-1,3(4)-endoglucanohydrolase.
D. Diet supplemented with the yeast cell wall preparation of Composition B, diatomaceous earth, and β-1,3(4)-endoglucanohydrolase.

E. Diet supplemented with the yeast cell wall preparation of Composition B, diatomaceous earth, β-1,3(4)-endoglucanohydrolase, and mineral clay.

F. Diet supplemented with 0.5% w/w of a commercially available supplement, comprising 9 wt% Safmannan® yeast cell wall material (source of β-glucans and mannans), 25 wt% diatomaceous earth, 0.02 wt% *Trichoderma* extract (a source of β-1,3(4)-endoglucanohydrolase), 65.98 wt% AB20™ bentonite, and a mixture of B-vitamins.

The amounts of yeast cell wall extract, diatomaceous earth, β-1,3(4)-endoglucanohydrolase and mineral clay used to supplement the diet in Compositions B-E were selected to reflect the amounts that would be added if the diet were supplemented with the commercial supplement recited in Composition F.

On day 28, rats were anesthetized with a mixture of ketamine and xylazine and blood samples (6-10 mL) were taken via cardiac puncture. Neutrophils were isolated from blood samples via Percoll gradient centrifugation. RNA was isolated from a portion of neutrophils in all animals using the TriZol® method. This was then used to quantify concentrations of L-selectin, interleukin-8 receptor (IL-8R) and β-actin mRNAs. Another portion of neutrophils from all animals were used in a phagocytosis (cell killing assay). In this assay, neutrophils isolated from rats were combined with *Staphylococcus aureus* in a ratio of 30:1 *S. aureus* bacteria to neutrophil. Neutrophils were allowed to "react" with bacteria for 3 hours after which *S. aureus* viability was assessed spectrophotometrically.

The study found that Composition B (yeast cell wall preparation) and Composition C (diatomaceous earth and β-1,3(4)-endoglucanohydrolase) had no significant effect on any of the three tested markers of innate immunity, as compared to Composition A (control diet) (FIGS. 25-27).

While neither Composition B nor Composition C produced a significant effect on the ability of neutrophils to phagocytose *S. aureus,* Composition D, which represents a combination of Compositions B and C, unexpectedly improved phagocytosis by 20%, which is significant (FIG. 25). Furthermore, the addition of a mineral clay (Composition E) resulted in a significant improvement in the IL-8R marker, as compared to the control (Composition A) (FIG. 26). Composition E also caused a further significant reduction in *S. aureus* viability as compared to Composition D (FIG. 25). Composition F (commercially available supplement) was found to have the ability to regulate the three measured markers in innate immunity and substantially mimicked the results obtained with Composition E, indicating that the B vitamins included in the commercially available supplement do not significantly affect regulation of these markers of innate immunity (FIGS. 25-27).

## Example 11

A study was conducted to identify genes expressed by circulating immune cells that are regulated by a commercial embodiment of a composition comprising silica, mineral clay, glucan and mannans. Rats (n=6 per group) were randomly assigned to the composition and control groups. The composition was supplemented in the diet at 0.5% in the composition group. Total RNA was purified from whole blood and gene expression was analyzed with the use of the Rat Innate and Adaptive Immune Responses RT2 Profiler Polymerase Chain Reaction (PCR) Array (SABiosciences, Qiagen). A total of 84 target genes were present on the array. Gene expression of circulating immune cells was analyzed at seven, fourteen, twenty-one and twenty-eight days of the composition supplementation. The expression of 67 genes changed following the composition supplementation across the time points. Table 18 lists the genes with altered gene expression following composition supplementation and includes information indicating stimulation (+) or repression (-) of gene expression.

**Table 18.** List of genes having altered expression

| Gene | Repressed | Gene | Induced | Reference Genes | |
|---|---|---|---|---|---|
| **Crp** | - | **Ifnb1** | + | **Actb** | |
| **Mbl2** | - | **Cd80** | + | **Ldha** | |
| **Apes** | - | **Tlr1** | + | **Rplp1** | |
| **Il5** | - | **Tlr6** | + | | |
| **Ifna1** | - | **Mapk8** | + | | |
| **Cel12** | - | **Nod2** | + | | |
| **Csf2** | - | **Ccr8** | + | | |
| **Il13** | - | **Irak1** | + | | |

(continued)

| Gene | Repressed | Gene | Induced | Reference Genes | |
|---|---|---|---|---|---|
| **Il10** | - | **Cd1d1** | + | | |
| **Gata3** | - | **Stat4** | + | | |
| **Stat3** | - | **Il1r1** | + | | |
| **C3** | - | **Faslg** | + | | |
| **Tlr3** | - | **Irf3** | + | | |
| **Ccl5** | - | **Ifnar1** | + | | |
| **Mx2** | - | **Slc11a1** | + | | |
| **Nfkb1** | - | **Tlr4** | + | | |
| **Nfkbia** | - | **Cd86** | + | | |
| **Tlr9** | - | **Casp1** | + | | |
| **Cxcl10** | - | **Ccr5** | + | | |
| **Cd4** | - | **Icam1** | + | | |
| **Il6** | - | **Camp** | + | | |
| **Ccl3** | - | **Tlr7** | + | | |
| **Ccr6** | - | **Irf7** | + | | |
| **Cd40** | - | **Rorc** | + | | |
| **Ddx58** | - | **Cd40lg** | + | | |
| **Il18** | - | **Tbx21** | + | | |
| **Jun** | - | **Casp8** | + | | |
| **Tnf** | - | **Il23a** | + | | |
| **Traf6** | - | **Cd14** | + | | |
| **Stat1** | - | **Cd8a** | + | | |
| | | **Cxcr3** | + | | |
| | | **Foxp3** | + | | |
| | | **Lbp** | + | | |
| | | **Mapk1** | + | | |
| | | **Myd88** | + | | |
| | | **Stat6** | + | | |
| | | **Agrin** | + | | |
| | | **IL33** | + | | |

**Examples 12-15**

Granular products were made by different processes and compared against each other, and against the powdered composition. With respect to Examples 12-15:

Method 1 produced a powdered composition, made by providing powdered components and mixing them with a paddle mixer to form the composition;
Method 2 produced a mixture of granular ingredients, made by providing granular ingredients and mixing them together with a paddle mixer, without compression;
Method 3 was a dry compaction process using a roll-press compactor, and without any binder or moisture, such as

water, being added to the composition;

Method 4 was a moisture-activated compaction process comprising adding 1.5% by weight water to the composition and compacting using a roll-compactor.

Method 5 was a low/high shear mixing process using high intensity mixers;

Method 6 was a moisture activated agglomeration process, comprising adding 30% by weight water to the composition to aid binding;

Method 7 was a low/high shear mixing process using high intensity mixers and including the addition of 15% by weight lignin; and

Method 8 was a dry compaction process without the addition of a binder or water, but further comprising recycling the undersized and oversized particles back into the mixing and compaction steps, to minimize waste.

**Example 12**

The samples were assessed using a RoTap® sieve shaker, to determine their dustiness and sieve profile. The results obtained after the samples had been in the Ro-Tap® for 5 minutes are shown in the table in FIG. 28 and the graphs in FIGS. 29 and 30.

The sieve profiles for samples made by the methods are shown in FIG. 29. The objective was to minimize the +12 mesh (larger than 1.7 mm) and -100 mesh (smaller than 0.15 mm) fractions. An acceptable sieve profile was one that had a curve close to a normal distribution between a desired maximum and minimum, such as Method 3. As shown in FIG. 29, Methods 6 and 7 resulted in samples that had too many coarse particles, and Methods 1, 2, 5 and 7 produced samples that had too many fine particles.

Dustiness was defined as the amount of -100 mesh material, i.e. the material that passed through the 100 mesh (0.15 mm) screen. As expected, the powdered samples comprised large amounts of dust-sized material (FIG. 30). Surprisingly, Methods 5 and 7, the low/high shear process, also produced samples having large amounts of-100 mesh particles (FIG. 30). However, the samples made by Methods 3, 4, 6 and 8 all had acceptable dustiness levels.

**Example 13**

The densities of a loose packed sample and a sample that was agitated to release some of the trapped air, such as by tapping, shaking or stirring, was determined and a bulk density difference was calculated for samples many by the different methods. The objective was to have the highest loosed bulk density and the smallest bulk density difference. FIG. 31 provides a table of bulk densities and a bulk density difference for the various samples. FIGS. 32 and 33 provide graphs comparing the loose and compacted densities, respectively, and FIG. 34 provides a graph indicating the bulk density differences. As expected, the powder sample made by Method 1 had the largest bulk density difference. The sample made by Methods 3 and 6 had the lowest bulk density difference, but the samples made by Methods 4 and 8 were also acceptable.

**Example 14**

FIG. 35 provides a table of data illustrating the durability and dispersion characteristics of samples made by the different methods. Durability was measured by an attrition test. Samples were first scalped on a 40 mesh (0.42 mm) sieve and the +40 mesh fraction was used for the attrition test. The +40 mesh fraction is the fraction that did not pass through the 40 mesh sieve. The +40 mesh fraction was then placed on a 50 mesh (0.3 mm) screen in a Ro-tap® shaker along with 5 15.9 mm (5/8 inch) ball bearings. After spinning for 5 minutes, the amount of the composition that remained on the 50 mesh screen was assessed. The objective was to have the largest amount left on the 50 mesh screen. FIG. 36 provides the results.

However, the results from the attrition test needed to be considered in conjunction with the results from the dispersion test. To test dispersion, the samples were placed on a -500 mesh sieve and sprayed with a water jet for 2, 5 and 10 minutes. The amount that does not pass through the sieve is measured and reported as a percentage of the original weight. A 500 mesh sieve has openings of about 0.025 mm (25 microns). This test assesses the ability of each composition to disperse into very small particles on contact with moisture, such as when ingested by an animal. The objective was to have smaller columns for the granular products, made by Methods 2-8, than for a powder sample, made by Method 1. FIGS. 37-39 provide graphs illustrating the results from dispersion tests run for 2 minutes, 5 minutes and 10 minutes, respectively.

As can be seen in FIGS. 36-39, although Method 5 produced a very durable product, it did not disperse well on contact with water. And the samples made by Methods 2, 4, and 6 did not have acceptable durability or dispersion characteristics. However, samples made by Methods 3 and 8 (dry compaction methods) provided an acceptable tradeoff between durability (FIG. 36) and dispersion (FIGS. 37-39).

## Example 15

Segregation was assessed by determining the coefficient of variation (C.V.) for samples made by different methods. The C.V. is a measure of the variation in compositions between different particles, such as particles of different sizes in each sample. FIGS. 40-42 provides data for the mineral C.V. (FIG. 41) and proximate C.V. (FIG. 42) for samples made by Methods 1-8 that illustrate the variation in the amounts of mineral and protein content, respectively, between the different-sized particles in a sample. The objective was to have a low a C.V. value as possible. The lower the number, the more homogenous the blend of ingredients in the sample was. As shown in FIG. 40, a powdered composition made by Method 1 had a mineral C.V. of 15% and a proximate C.V. of 56%. A blend of granular ingredients made by Method 2 had C.V. values about double that of the powdered composition, illustrating that there was a large degree of segregation of the components in this blend. By comparison, the samples produced by the dry compaction processes of Methods 3a, 3b and 8 had mineral C.V. values of 10% or less (FIG. 41), and proximate C.V. values of 20% or less (FIG. 42). It can be seen that the sample produced by Method 6 had very low C.V. values. However, as previously discussed in Example 14, samples produced by this process did not have acceptable durability or dispersion characteristics (FIGS. 36-39).

After reviewing all of the comparative data, it was clear that the dry compaction processes of Methods 3 and 8 produced granules that had acceptable durability while still having acceptable dispersion, and had a desired bulk density difference, dustiness level, sieve profile, and coefficients of variation.

## Example 16

**Immune system regulation following inclusion of granular and powdered compositions in animal feed.**

**Objective:** Evaluate immune system response in sheep supplied two different feed supplements.

### Introduction

The focus of this project was to investigate the immune system response in a ruminant species following the inclusion of feed supplements comprising silica, mineral clay, glucan and mannans in the animal diet. The animals were separated into three groups: 1. Control; 2. Powered composition; and 3. Granular composition. The feed supplements were added directly to the animal feed daily for the supplement groups and no supplement was added to the control group. The same amount (6 oz per animal) was added to the feed for each animal each day. The animals were fed using the Calan Gate system that allowed an animal to eat only from its assigned fed bin. The Calan gate feeding system ensures animals eat their assigned supplement and no crossover feeding occurs.

The project was conducted for 42 days. Animals were weighed weekly and blood was collected on days 0, 14, 28, 35 and 42. Feed intake was collected daily for each animal. Blood was used as the source of circulating immune cell total RNA. Gene expression analysis was conducted using the total RNA as a template to determine if supplementation altered expression of genes known to regulate the function of circulating immune cells. The expression of CXCR2 (also known as IL8RB) and IL10RB were analyzed to evaluate immune cell function. The housekeeping gene beta-actin (BACTIN) was used as a reference gene to provide a reference point to determine the change in the expression of the immune system associated genes CXCR2 and IL10RB. The expression of CXCR2 is known to increase when compared to controls when the powered composition is included as a supplement in the animal feed.

### Methods

*I. Animals*

Sixteen polled Dorset ewes were obtained at approximately six months of age. The sheep were randomly assigned to pens with four sheep in each pen and four total pens. Small ruminant Calan gates (American Calan, NH USA) were used as the feeding system and the sheep were provided a total adaptation period of nine days. The sheep were randomly assigned to treatments within pens and all treatments were included in each pen.

*II. Diet*

Dietary treatments included negative control (Control, n=6), powered composition (T1), and granular composition (T2). All dietary treatments were administered in feed daily and sheep were offered assigned supplement (C- 0g supplement/head/day, T1- 6g supplement/head/day, T2- 6g supplement/head/day daily). Basal diet consisting of Grass Hay and Alfalfa was offered *ad libitum* to allow intake analysis.

*III. Sample Collection and RNA Purification*

Blood was collected from intravenous jugular puncture with a 21 gauge needle into a Tempus RNA blood tube (cat no 4342792, Thermo Fisher Scientific, Valencia, CA USA). Tubes were vigorously shaken for 15 seconds and stored at -20 °C until purification. RNA was purified according to Tempus Spin RNA kit (cat no 4380204, Thermo Fisher Scientific). Samples concentration was determined and RNA quality was assessed by the absorbance at 260 nm and the ratio of absorbance at 260 nm: 280 nm, respectively.

*IV. qRT-PCR and Data Handling*

Samples which provided sufficient RNA were evaluated for Interleukin-8 receptor (CXCR2; IL8Rβ), Interleukin 10 receptor β (IL10RB) and β-Actin (BACTIN) using TaqMan® primer/probe sets (Thermo Fisher Scientific). Quantitative real-time reverse transcriptase PCR (qRT-PCR) for each sample was conducted using 100 ng total RNA and in duplicate. Each plate incorporated a negative control for each primer set used and a positive control used for plate-to-plate correction. Sample amplification with the use of one-step qPCR was conducted on all samples. Samples which did not amplify are removed from analysis. Fold changes were calculated using the BACTIN reference genes without diet effect.

*V. Statistical Analysis*

Reference Gene Analysis

Raw Ct values were analyzed for outliers using the ROUT 0.2% procedure of GraphPad Prism 6.03 then checked for normality using the D'Agostino & Pearson omnibus normality test. Normally distributed data sets were analyzed with Ordinary One-WAY ANOVA procedure of GraphPad Prism 6.03.

Outlier Analysis

Target gene fold changes (IL10RB and CXCR2) were tested for outliers using the ROUT 0.2% procedure of GraphPad Prism 6.03. Outliers were removed from the final dataset.

**Results**

As can be seen in FIG. 43, the expression of CXCR2 is similar in all groups until day 35 when the expression is higher in the animals fed the powered composition and the granular composition. The higher expression of CXCR2 in the animals fed the powered composition and the granular composition compared to controls continues at day 42 of supplementation ($p < 0.01$). As stated in the introduction, the higher expression of CXCR2 in circulating immune cells in animals fed the powdered composition was expected. Higher expression of CXCR2 in circulating immune cells in animals fed the granular composition follows a similar pattern as the powered composition. CXCR2 is part of the dimerized IL8 receptor complex that is required for IL8 activation of neutrophil function.

As can be seen in FIG. 44, the expression of IL10RB is similar in all groups at day 0 of the project. The expression of IL10RB was similar in all animals at day 14, however, at day 28 the expression of IL10RB was higher ($p < 0.07$) in circulating immune cells in the animals fed the granular composition than samples from animals fed control and the powered supplement. The expression of IL10RB is similar in animals in all groups at days 35 and 42. This means the granular composition provides unique regulation of the immune system cellular response compared to the powered composition during the first 28 days of supplementation. IL10RB is a protein that is part of the receptor complex that mediates the cellular signaling following IL10 binding to the complex. IL10 is an anti-inflammatory cytokine and is associated with other immunoregulation such as enhancing B cell survival and antibody production. These data suggest that supplementation with the granular composition activates anti-inflammatory mechanisms and immune cell regulation.

Dry matter intake (DMI) was measured daily for all animals during the project. There is no difference in DMI between groups (FIG. 45). DMI increased over time as the animals were growing.

**Conclusion**

The objective of this project was to determine if inclusion of two feed supplements, a powdered composition and a granular composition, would regulate the expression of genes in circulating immune cells. The expression of two genes expressed by circulating immune cells were evaluated, CXCR2 and IL10RB. Animal intake of the powered composition and the granular composition resulted in higher expression of CXCR2 after 35 and 42 days of supplementation when compared to control. In contrast, the inclusion of the granular composition in the animal diet resulted in higher

expression of IL10RB in circulating immune cells at 28 days of supplementation when compared to the powdered composition diet and the control diet. Dry matter intake was not different between groups indicating that increased intake did not impact immune cell function.

## Example 17

Cows on a commercial dairy are selected based on DIM, parity and milk production and assigned to 1 of 2 treatment groups of from about 15 to about 20 cows per group. The number of cows in each treatment group is balanced based on DIM, parity and milk production. The groups are fed either (1) an embodiment of the granular composition comprising between 15% and 40% silica, between 50% and 81% mineral clay, between 1.0% and 5.0% β-glucans, between 0.05% and 3.0% β-1,3 (4)-endoglucanohydrolase and between 1% and 8.0% mannans (EX), or (2) control (CON) diets. The trial typically is performed for at least 90 days. The administration of the granular composition may start during the dry-off period and continue for at least 90 days, with milk production being measured for at least 30-45 days once lactation has started. The granular composition is top-dressed 2×/day and is mixed into the top one-third of the TMR. It is predicted that the cows in the EX group will have a higher milk yield than the CON cows, during the period of administration of the composition.

## Example 18

### Introduction

The focus of this project was to investigate the immune system response in cows following the inclusion of feed supplements in the animal diet. The animals were separated into three groups: 1) Control; 2) Powered composition and; 3) Granular composition. The feed supplements were added directly to the animal feed daily for the supplement groups and no supplement was added to the control group. The same amount (56 g per animal) was added to the feed for each animal each day. The animals were fed using the Calan Gate system that allowed an animal to eat only from its assigned fed bin. The Calan gate feeding system ensures animals eat their assigned supplement and no crossover feeding occurs.

The project was conducted for 63 days. Animals were weighed weekly and blood was collected on days 0, 7, 14, 21, 28, 42, 63. Feed intake was collected daily for each animal. Blood was used as the source of circulating immune cell total RNA. Gene expression analysis was conducted using the total RNA as a template to determine if supplementation altered expression of genes known to regulate the function of circulating immune cells. The expression of IL10RB was analyzed to evaluate immune cell function.

### Methods

#### Animals

Sixteen Holstein heifers were obtained at approximately six months of age. The heifers were randomly assigned to pens with eight heifers in each pen and two total pens. Calan gates (American Calan, NH USA) were used as the feeding system and the heifers were provided a total adaptation period of fourteen days. The heifers were randomly assigned to treatments within pens and all treatments were included in each pen.

#### Diet

Dietary treatments included negative control (Control), powered composition (T1), and the disclosed granular composition (T2). All dietary treatments were administered in feed daily and heifers were offered assigned supplement (C- 0g supplement/head/day, T1- 56g supplement/head/day, T2- 56g supplement/head/day daily). Basal diet consisting of grass hay, alfalfa, flaked corn, soy meal and mineral pack was offered *ad libitum* to allow intake analysis.

#### Sample Collection and RNA Purification

Blood was collected from intravenous jugular puncture with a 21 gauge needle into a Tempus RNA blood tube (cat no 4342792, Thermo Fisher Scientific, Valencia, CA USA). Tubes were vigorously shaken for 15 seconds and stored at -20 °C until purification. RNA was purified according to Tempus Spin RNA kit (cat no 4380204, Thermo Fisher Scientific). Samples concentration was determined and RNA quality was assessed by the absorbance at 260 nm and the ratio of absorbance at 260 nm: 280 nm, respectively.

qRT-PCR and Data Handling

Samples which provided sufficient RNA were evaluated for Interleukin 10 receptor β (IL10RB) using TaqMan® primer/probe sets (Thermo Fisher Scientific). Quantitative real-time reverse transcriptase PCR (qRT-PCR) for each sample was conducted using 100 ng total RNA and in duplicate. Each plate incorporated a negative control for each primer set used and a positive control used for plate-to-plate correction. Sample amplification with the use of one-step qPCR was conducted on all samples. Samples which did not amplify are removed from analysis. Total ng of amplimer generated was based on standard curve analysis. The IL10RB amplimer region was excised from pUC vector and diluted such that a six point standard curve of ng of DNA generated for each qPCR plate was used to determine the amount of amplimer in each sample. The control samples were used as a baseline for comparison of the treatment groups, T1 and T2 and data is presented after normalization from baseline.

**Statistical Analysis**

Reference Gene Analysis

Raw Ct values were analyzed for outliers using the ROUT 0.2% procedure of GraphPad Prism 6.03 then checked for normality using the D'Agostino & Pearson omnibus normality test. Normally distributed data sets were analyzed with Ordinary One-WAY ANOVA procedure of GraphPad Prism 6.03.

Outlier Analysis

Target gene fold changes for IL10RB were tested for outliers using the ROUT 0.2% procedure of GraphPad Prism 6.03. Outliers were removed from the final dataset.

Results

As can be seen in FIG. 46, the expression of IL10RB is similar in all groups at day 0 of the project. The expression of IL10RB was similar in all animals at days 7, 14, 21 and 28, however, at day 42 the expression of IL10RB was higher ($p < 0.1$) in circulating immune cells in the animals fed the granular composition than samples from animals fed the powered supplement. This indicated that the granular composition provided unique regulation of the immune system cellular response compared to the powered composition at 42 days of supplementation in heifers. IL10RB is a protein that is part of the receptor complex that mediates the cellular signaling following IL10 binding to the complex. IL10 is an anti-inflammatory cytokine and is associated with other immunoregulation such as enhancing B cell survival and antibody production. These data suggest that supplementation with the granular composition activates anti-inflammatory mechanisms and immune cell regulation. However, by day 63, the expression of IL10RB in the group fed the powdered composition was substantially the same as the level of IL10RB expression in the group fed the granular composition (FIG. 47). These results indicated that administration of the granular composition provided increases expression of IL10RB at 42 days, compared to the levels of IL20RB expression in cows that were fed the powdered composition.

Dry matter intake (DMI) was measured daily for all animals during the project. There was no difference in DMI between groups.

**Conclusion**

The objective of this example was to determine if inclusion of two feed supplements, a powdered composition and a granular composition, would regulate the expression of genes in circulating immune cells in heifers. The expression and IL10RB was evaluated. Feeding the granular composition in the animal diet resulted in higher expression of IL10RB in circulating immune cells at 42 days of feeding when compared to the powdered composition diet. Dry matter intake was not different between groups indicating that increased intake did not impact immune cell function.

**Claims**

1. A granular composition, comprising silica, mineral clay, glucan and mannans, the granular composition having a dispersion value of 20% or less at 2 minutes, wherein the dispersion value is calculated by spraying the granular composition with water using a mechanical spray head positioned over a 500 mesh (0.025 mm) sieve and measuring a percentage of material that remains on the sieve after 2 minutes,

wherein at least 40% by weight of particles in the granular composition are granules having a particle size of from greater than 0.15 mm (100 mesh) to 4.8 mm (4 mesh),
further wherein the particle size is measured according to ANSI/ASAE Standard S319.4.

**2.** The granular composition of claim 1, each granule comprising a substantially homogenous blend of silica, mineral clay, glucan and mannans.

**3.** The granular composition of any one of claims 1-2, wherein at least 60% by weight of the particles in the granular composition are granules having a particle size of from greater than 0.15 mm (100 mesh) to 4.8 mm (4 mesh).

**4.** The granular composition of claim 3, wherein at least 80% by weight of the particles in the granular composition are granules having a particle size of from greater than 0.15 mm (100 mesh) to 4.8 mm (4 mesh).

**5.** The granular composition of any one of claims 1-2, wherein at least 40% by weight of the particles in the granular composition are granules having a particle size of from greater than 0.15 mm (100 mesh) to 2 mm (10 mesh).

**6.** The granular composition of any one of claims 1-2, wherein at least 60% by weight of the particles in the granular composition are granules having a particle size of from greater than 0.6 mm (30 mesh) to 1.7 mm (12 mesh).

**7.** The granular composition of any one of claims 1-6, comprising plural granules, each granule comprising silica, mineral clay, glucan and mannans, the composition having (a) a mineral coefficient of variation of from 0% to 10%, (b) a proximate coefficient of variation of from 0% to 20%, or (c) a mineral coefficient of variation of from 0% to 10% and a proximate coefficient of variation of from 0% to 20%.

**8.** The granular composition of any one of claims 1-7, wherein the glucan and mannans are provided by yeast cell wall or an extract thereof.

**9.** The granular composition of any one of claims 1-8 comprising 1-40 wt% silica, 0.5-25 wt% glucan and mannans, and 40-92 wt% mineral clay, in amounts relative to each other.

**10.** The granular composition of any one of claims 1-9, comprising from 0.05 wt% endoglucanohydrolase to 5 wt% endoglucanohydrolase.

**11.** The granular composition of any one of claims 1-10, comprising 0.1-3 wt% β-1,3 (4)-endoglucanohydrolase, 1-40 wt% silica, 1-30 wt% yeast cell wall or an extract thereof, and 40-92 wt% mineral clay, in amounts relative to each other.

**12.** The granular composition of any one of claims 1-11 wherein:

the composition has a bulk density difference between a bulk density of a loose packed sample and a bulk density of a tapped or agitated sample of less than 240.3 kg/$m^3$ (15 lb/$ft^3$); or
the composition has a dispersion value of 15% or less at 5 minutes; or
the composition has a dispersion value of 10% or less at 10 minutes; or
each granule has a specific density of from 800.9 kg/$m^3$ to 2402.8 kg/$m^3$ (50 lb/$ft^3$ to 150 lb/$ft^3$); or
a combination thereof.

**13.** The granular composition of claim 1, each granule comprising a substantially homogenous blend of silica, mineral clay, glucan and mannans, the composition comprising from greater than 0% to 100% granules by weight and from 0% to no more than 20% particles by weight, the granules having at least one dimension between 0.15 mm and 2 mm , and the particles having at least one dimension of less than 0.15 mm, the granules having a size that when administered to an animal increases expression of interleukin 10 receptor β for a time period subsequent to administration to 28 days subsequent relative to an animal that does not receive the composition, wherein the composition has a mineral coefficient of variation of from 0% to 10% and a proximate coefficient of variation of from 0% to 20%.

**14.** The granular composition of any one of claims 1-13, wherein the composition further comprises one or more additional components selected from a metal carbonate, a copper species that provides a copper ion, a trace mineral, a bulking agent, yeast, a carrier, a colorant, a taste enhancer, a preservative, an oil, a vitamin, yucca, quillaja, a probiotic, allicin, alliin, allinase, algae, a polyphenol or plant material comprising polyphenol, or a sorbic acid or a salt thereof.

**15.** A granular composition according to any one of claims 1-14, for use for administration to an animal to have a beneficial effect on the animal,
wherein the beneficial effect comprises augmenting the animal's innate immune system, increasing the animal's milk production, treating or preventing an infectious disease, treating or preventing a non-infectious disease, treating or preventing stress, treating or preventing a stress-related condition or disease, helping increase longevity of the animal, and/or improve the animal's feed conversion rate.

**16.** The composition for the use of claim 15, wherein administering to the animal comprises:

administering an amount of the composition of from greater than zero to 500 grams per animal per day; or
administering an amount of the composition of from greater than zero to 1000 mgs per kilogram of the animal's bodyweight per day; or
administering in an amount of from greater than zero to 0.165 kg per kg of feed (150 kg per ton (2000 pounds) of feed).

**Patentansprüche**

**1.** Granulare Zusammensetzung, umfassend Kieselerde, Tonerde, Glucan und Mannane, wobei die granulare Zusammensetzung einen Dispersionswert von 20 % oder weniger bei 2 Minuten aufweist, wobei der Dispersionswert berechnet wird durch Besprühen der granularen Zusammensetzung mit Wasser unter Verwendung eines mechanischen Sprühkopfes, der über einem Sieb mit 500 Mesh (0,025 mm) positioniert ist, und Messen eines Prozentsatzes von Material, das nach 2 Minuten an dem Sieb bleibt,

wobei mindestens 40 Gew.-% Teilchen in der granularen Zusammensetzung Granulat mit einer Teilchengröße von größer als 0,15 mm (100 Mesh) bis 4,8 mm (4 Mesh) sind,
wobei ferner die Teilchengröße gemäß dem ANSI/ASAE-Standard S319.4 gemessen wird.

**2.** Granulare Zusammensetzung nach Anspruch 1, wobei jedes Granulat eine im Wesentlichen homogene Mischung aus Kieselerde, Tonerde, Glucan und Mannanen umfasst.

**3.** Granulare Zusammensetzung nach einem der Ansprüche 1-2, wobei mindestens 60 Gew.-% der Teilchen in der granularen Zusammensetzung Granulat mit einer Teilchengröße von größer als 0,15 mm (100 Mesh) bis 4,8 mm (4 Mesh) sind.

**4.** Granulare Zusammensetzung nach Anspruch 3, wobei mindestens 80 Gew.-% der Teilchen in der granularen Zusammensetzung Granulat mit einer Teilchengröße von größer als 0,15 mm (100 Mesh) bis 4,8 mm (4 Mesh) sind.

**5.** Granulare Zusammensetzung nach einem der Ansprüche 1-2, wobei mindestens 40 Gew.-% der Teilchen in der granularen Zusammensetzung Granulat mit einer Teilchengröße von größer als 0,15 mm (100 Mesh) bis 2 mm (10 Mesh) sind.

**6.** Granulare Zusammensetzung nach einem der Ansprüche 1-2, wobei mindestens 60 Gew.-% der Teilchen in der granularen Zusammensetzung Granulat mit einer Teilchengröße von größer als 0,6 mm (30 Mesh) bis 1,7 mm (12 Mesh) sind.

**7.** Granulare Zusammensetzung nach einem der Ansprüche 1-6, umfassend mehrere Granulate, wobei jedes Granulat Kieselerde, Tonerde, Glucan und Mannane umfasst, wobei die Zusammensetzung (a) einen Mineral-Variationskoeffizienten von 0 % bis 10 %, (b) einen proximalen Variationskoeffizienten von 0 % bis 20 % oder (c) einen Mineral-Variationskoeffizienten von 0 % bis 10 % und einen proximalen Variationskoeffizienten von 0 % bis 20 % aufweist.

**8.** Granulare Zusammensetzung nach einem der Ansprüche 1-7, wobei das Glucan und die Mannane durch Hefezellwand oder einen Extrakt davon bereitgestellt werden.

**9.** Granulare Zusammensetzung nach einem der Ansprüche 1-8, umfassend 1-40 Gew.-% Kieselerde, 0,5-25 Gew.-% Glucan und Mannane und 40-92 Gew.-% Tonerde, in Mengen relativ zueinander.

**10.** Granulare Zusammensetzung nach einem der Ansprüche 1-9, umfassend von 0,05 Gew.-% Endoglucanohydrolase

bis 5 Gew.-% Endoglucanohydrolase.

**11.** Granulare Zusammensetzung nach einem der Ansprüche 1-10, umfassend 0,1-3 Gew.-% β-1,3(4)-Endoglucanohydrolase, 1-40 Gew.-% Kieselerde, 1-30 Gew.-% Hefezellwand oder einen Extrakt davon, und 40-92 Gew.-% Tonerde, in Mengen relativ zueinander.

**12.** Granulare Zusammensetzung nach einem der Ansprüche 1-11, wobei:

die Zusammensetzung eine Schüttdichtendifferenz zwischen einer Schüttdichte einer lose verpackten Probe und einer Schüttdichte einer Abdreh- oder bewegten Probe von weniger als 240,3 kg/$m^3$ (15 lb/$ft^3$) aufweist; oder
die Zusammensetzung einen Dispersionswert von 15 % oder weniger bei 5 Minuten aufweist; oder
die Zusammensetzung einen Dispersionswert von 10 % oder weniger bei 10 Minuten aufweist; oder
jedes Granulat eine spezifische Dichte von 800,9 kg/$m^3$ bis 2402,8 kg/$m^3$ (50 lb/$ft^3$ bis 150 lb/$ft^3$) aufweist; oder eine Kombination davon.

**13.** Granulare Zusammensetzung nach Anspruch 1, wobei jedes Granulat eine im Wesentlichen homogene Mischung aus Kieselerde, Tonerde, Glucan und Mannanen umfasst, wobei die Zusammensetzung von mehr als 0 Gew.-% bis 100 Gew.-% Granulat und von 0 Gew.-% bis nicht mehr als 20 Gew.-% Teilchen umfasst, wobei die Granulate mindestens eine Abmessung zwischen 0,15 mm und 2 mm aufweisen und die Teilchen mindestens eine Abmessung von weniger als 0,15 aufweisen, wobei die Granulate eine Größe aufweisen, die, wenn sie einem Tier verabreicht werden, die Expression von Interleukin-10-Tezeptor-β für einen Zeitraum erhöht, anschließend an die Verabreichung zu 28 Tagen später relativ zu einem Tier, das die Zusammensetzung nicht erhält, wobei die Zusammensetzung einen Mineral-Variationskoeffizienten von 0 % bis 10 % und einen proximalen Variationskoeffizienten von 0 % bis 20 % aufweist.

**14.** Granulare Zusammensetzung nach einem der Ansprüche 1-13, wobei die Zusammensetzung ferner eine oder mehrere zusätzliche Komponenten umfasst, ausgewählt aus einem Metallcarbonat, einer Kupferspezies, die ein Kupferion bereitstellt, einem Spurenelement, einem Füllstoff, Hefe, einem Träger, einem Farbstoff, einem Geschmacksverstärker, einem Konservierungsmittel, einem Öl, einem Vitamin, Yucca, Quillaja, einem Probiotikum, Allicin, Alliin, Allinase, Algen, einem Polyphenol oder Pflanzenmaterial, umfassend Polyphenol, oder einer Sorbinsäure oder einem Salz davon.

**15.** Granulare Zusammensetzung nach einem der Ansprüche 1-14 zur Verwendung zur Verabreichung an ein Tier, um eine positive Wirkung auf das Tier zu haben, wobei die positive Wirkung das Erweitern des angebotenen Immunsystems des Tiers, das Erhöhen der Milchproduktion des Tiers, das Behandeln oder Verhindern einer Infektionskrankheit, das Behandeln oder Verhindern einer nicht-infektiösen Krankheit, das Behandeln oder Verhindern von Stress, das Behandeln oder Verhindern eines/einer stressbedingten Zustands oder Krankheit, das Helfen bei der Erhöhung der Langlebigkeit des Tiers und/oder beim Verbessern der Futterverwertung des Tiers umfasst.

**16.** Zusammensetzung zur Verwendung nach Anspruch 15, wobei das Verabreichen an das Tier Folgendes umfasst:

Verabreichen einer Menge der Zusammensetzung von mehr als null bis 500 Gramm pro Tier pro Tag; oder
Verabreichen einer Menge der Zusammensetzung von mehr als null bis 1000 mg pro Kilogramm des Körpergewichts des Tiers pro Tag; oder
Verabreichen in einer Menge von mehr als null bis 0,165 kg pro kg Futter (150 kg pro Tonne (2000 Pfund) Futter).

## Revendications

**1.** Composition granulaire comprenant de la silice, de l'argile minérale, du glucane et des mannanes, la composition granulaire ayant une valeur de dispersion de 20 % ou moins à 2 minutes, la valeur de dispersion étant calculée en pulvérisant la composition granulaire avec de l'eau à l'aide d'une tête de pulvérisation mécanique positionnée sur un tamis de 500 mailles (0,025 mm) et en mesurant un pourcentage de matériau qui reste sur le tamis après 2 minutes,

dans laquelle au moins 40 % en poids des particules dans la composition granulaire sont des granules ayant une taille de particule supérieure à 0,15 mm (100 mailles) à 4,8 mm (4 mailles),
en outre, dans laquelle la taille des particules est mesurée conformément à la norme ANSI/ASAE S319.4.

**2.** Composition granulaire selon la revendication 1, chaque granule comprenant un mélange sensiblement homogène de silice, d'argile minérale, de glucane et de mannanes.

**3.** Composition granulaire selon l'une quelconque des revendications 1 à 2, dans laquelle au moins 60 % en poids des particules dans la composition granulaire sont des granules ayant une taille de particule supérieure à 0,15 mm (100 mailles) à 4,8 mm (4 mailles).

**4.** Composition granulaire selon la revendication 3, dans laquelle au moins 80 % en poids des particules dans la composition granulaire sont des granules ayant une taille de particule supérieure à 0,15 mm (100 mailles) à 4,8 mm (4 mailles).

**5.** Composition granulaire selon l'une quelconque des revendications 1 à 2, dans laquelle au moins 40 % en poids des particules dans la composition granulaire sont des granules ayant une taille de particule supérieure à 0,15 mm (100 mailles) à 2 mm (10 mailles).

**6.** Composition granulaire selon l'une quelconque des revendications 1 à 2, dans laquelle au moins 60 % en poids des particules dans la composition granulaire sont des granules ayant une taille de particule supérieure à 0,6 mm (30 mailles) à 1,7 mm (12 mailles).

**7.** Composition granulaire selon l'une quelconque des revendications 1 à 6, comprenant plusieurs granules, chaque granule comprenant de la silice, de l'argile minérale, du glucane et des mannanes, la composition ayant (a) un coefficient de variation minéral de 0 % à 10 %, (b) un coefficient de variation proche de 0 % à 20 %, ou (c) un coefficient de variation minéral de 0 % à 10 % et un coefficient de variation proche de 0 % à 20 %.

**8.** Composition granulaire selon l'une quelconque des revendications 1 à 7, dans laquelle le glucane et les mannanes sont fournis par la paroi cellulaire de levure ou un extrait de celle-ci.

**9.** Composition granulaire selon l'une quelconque des revendications 1 à 8 comprenant 1 à 40 % en poids de silice, 0,5 à 25 % en poids de glucane et de mannanes, et 40 à 92 % en poids d'argile minérale, en quantités relatives le uns aux autres.

**10.** Composition granulaire selon l'une quelconque des revendications 1 à 9, comprenant de 0,05 % en poids d'endoglucanohydrolase à 5 % en poids d'endoglucanohydrolase.

**11.** Composition granulaire selon l'une quelconque des revendications 1 à 10, comprenant 0,1 à 3 % en poids de β-1,3 (4)-endoglucanohydrolase, 1 à 40 % en poids de silice, 1 à 30 % en poids de paroi cellulaire de levure ou d'un extrait de celle-ci, et 40 à 92 % en poids d'argile minérale, en quantités relatives les uns aux autres.

**12.** Composition granulaire selon l'une quelconque des revendications 1 à 11, dans laquelle :

la composition présente une différence de masse volumique apparente entre la masse volumique apparente d'un échantillon en vrac et la masse volumique apparente d'un échantillon tapoté ou agité inférieure à 240,3 $kg/m^3$ (15 $lb/ft^3$) ; ou
la composition a une valeur de dispersion de 15 % ou moins à 5 minutes ; ou
la composition a une valeur de dispersion de 10 % ou moins à 10 minutes ; ou
chaque granule a une densité spécifique de 800,9 $kg/m^3$ à 2402,8 $kg/m^3$ (50 25 $lb/ft^3$ à 150 $lb/ft^3$); ou
une combinaison de ceux-ci.

**13.** Composition granulaire selon la revendication 1, chaque granule comprenant un mélange sensiblement homogène de silice, d'argile minérale, de glucane et de mannanes, la composition comprenant de plus de 0 % à 100 % de granules en poids et de 0 % à pas plus de 20 % de particules en poids, les granules ayant au moins une dimension comprise entre 0,15 mm et 2 mm, et les particules ayant au moins une dimension inférieure à 0,15 mm, les granules ayant une taille qui, lorsqu'ils sont administrés à un animal, augmente l'expression du récepteur β de l'interleukine 10 pendant une période de temps postérieure à l'administration jusqu'à 28 jours postérieurs par rapport à un animal qui ne reçoit pas la composition, la composition ayant un coefficient de variation minéral de 0 % à 10 % et un coefficient de variation proche de 0 % à 20 %.

**14.** Composition granulaire selon l'une quelconque des revendications 1 à 13, dans laquelle la composition comprend

en outre un ou plusieurs composants supplémentaires choisis parmi un carbonate métallique, une espèce de cuivre qui fournit un ion de cuivre, un oligo-élément, un agent de charge, une levure, un support, un colorant, un exhausteur de goût, un conservateur, une huile, une vitamine, le yucca, le quillaja, un probiotique, l'allicine, l'alliine, l'allinase, les algues, un polyphénol ou une matière végétale comprenant du polyphénol, ou un acide sorbique ou un sel de celui-ci.

**15.** Composition granulaire selon l'une quelconque des revendications 1 à 14, destinée à être administrée à un animal pour avoir un effet bénéfique sur l'animal, l'effet bénéfique comprenant l'augmentation du système immunitaire inné de l'animal, l'augmentation de la production de lait de l'animal, le traitement ou la prévention d'une maladie infectieuse, le traitement ou la prévention d'une maladie non infectieuse, le traitement ou la prévention du stress, le traitement ou la prévention d'une condition ou d'une maladie liée au stress, l'aide à l'augmentation de la longévité de l'animal et/ou l'amélioration du taux de conversion alimentaire de l'animal.

**16.** Composition destinée à être utilisée selon la revendication 15, dans laquelle l'administration à l'animal comprend :

l'administration d'une quantité de la composition comprise entre plus de zéro et 500 grammes par animal et par jour ; ou
l'administration d'une quantité de la composition comprise entre plus de zéro et 1 000 mg par kilogramme de poids corporel de l'animal par jour ; ou
l'administration d'une quantité supérieure à zéro à 0,165 kg par kg d'aliment (150 kg par tonne (2 000 livres) d'aliment).

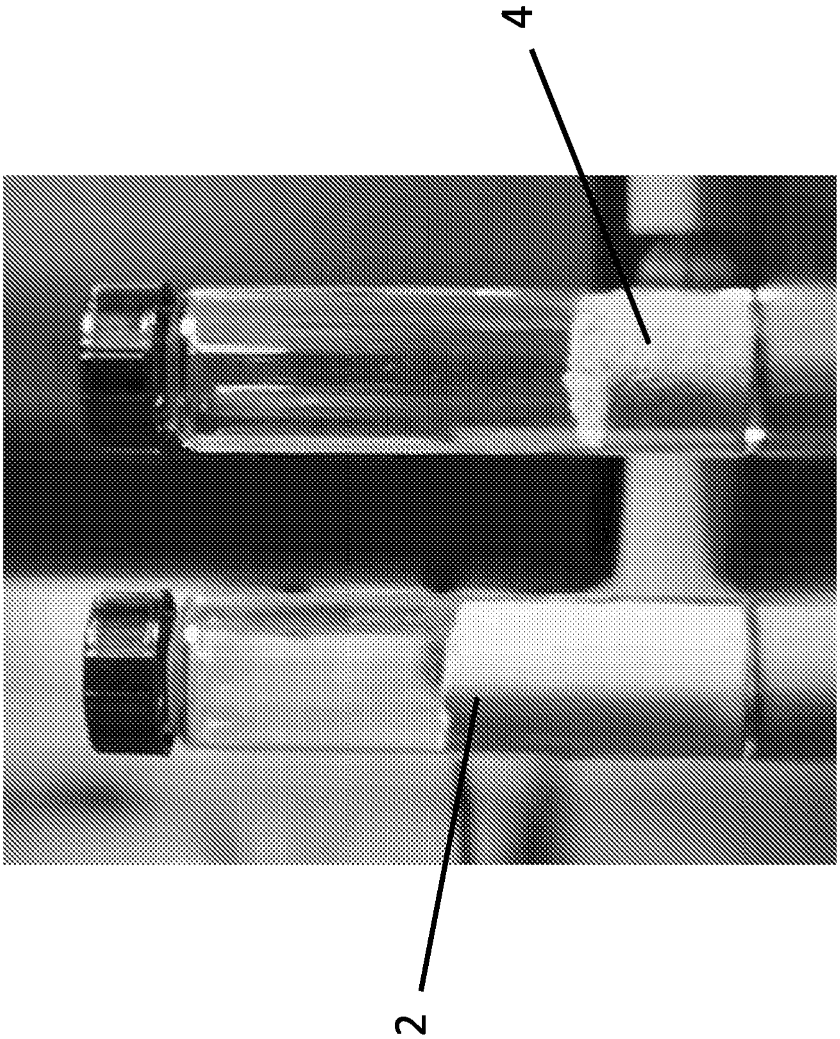


FIG. 1

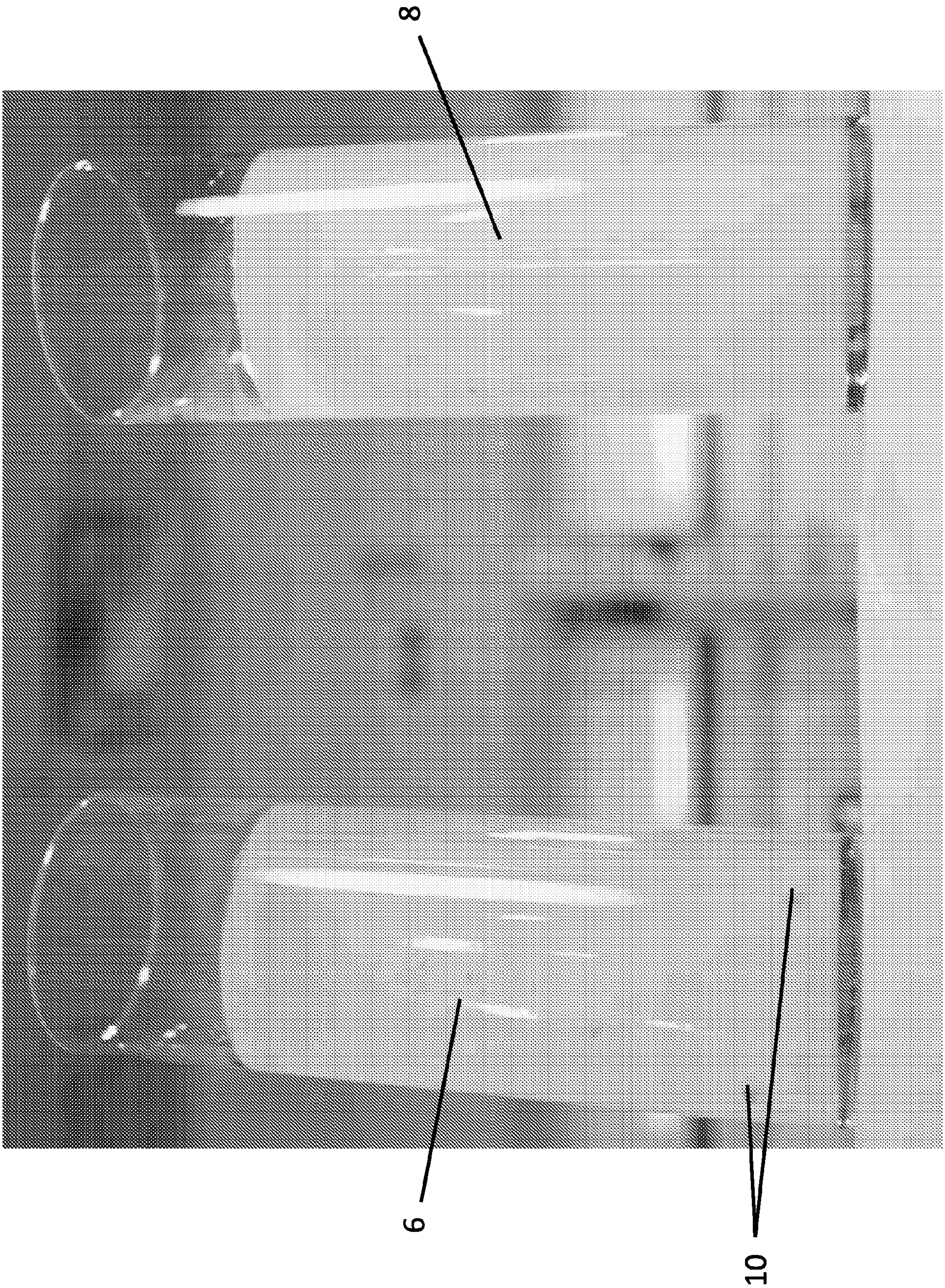


FIG. 2

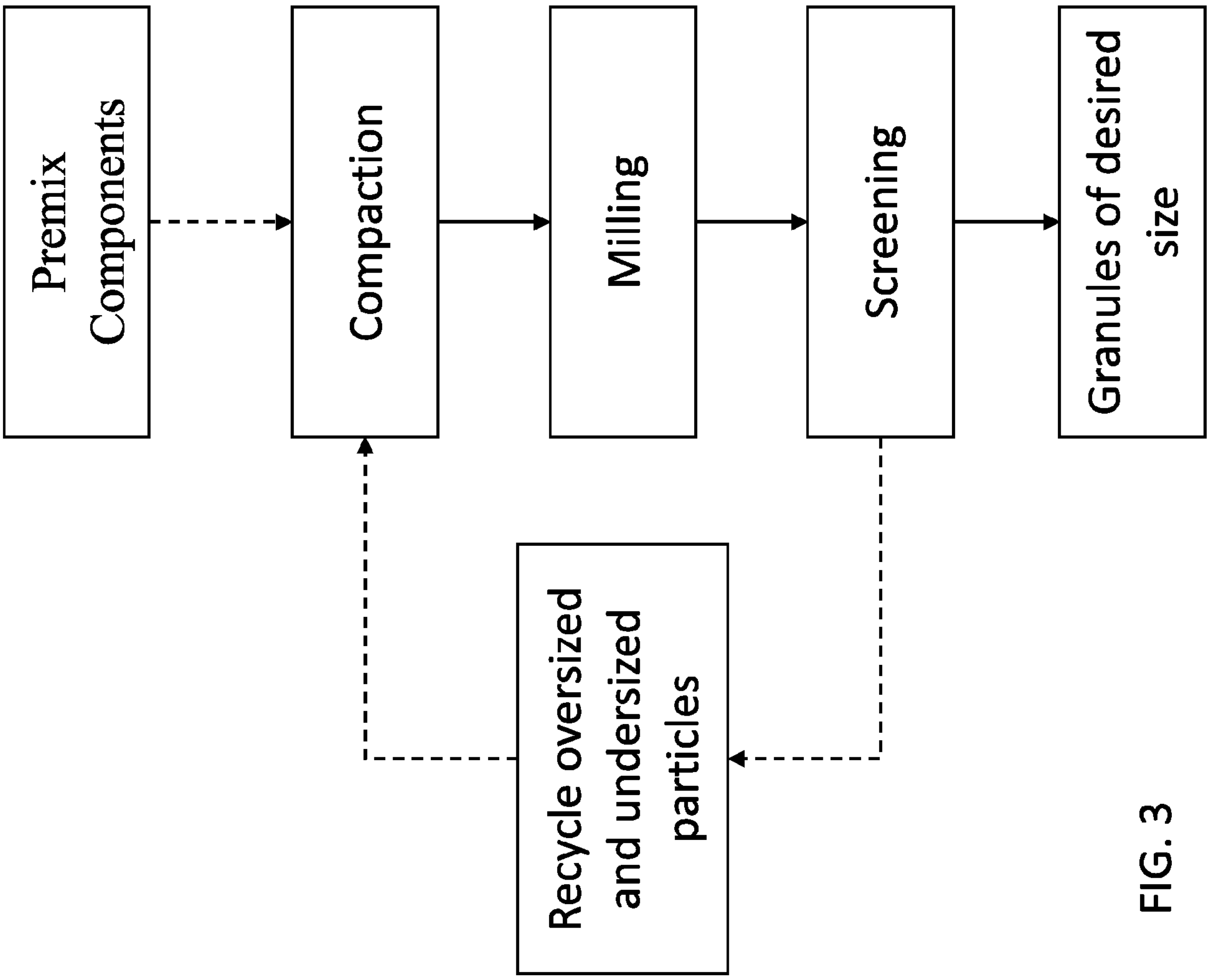
Premix Components
Compaction
Milling
Screening
Granules of desired size
Recycle oversized and undersized particles

FIG. 3

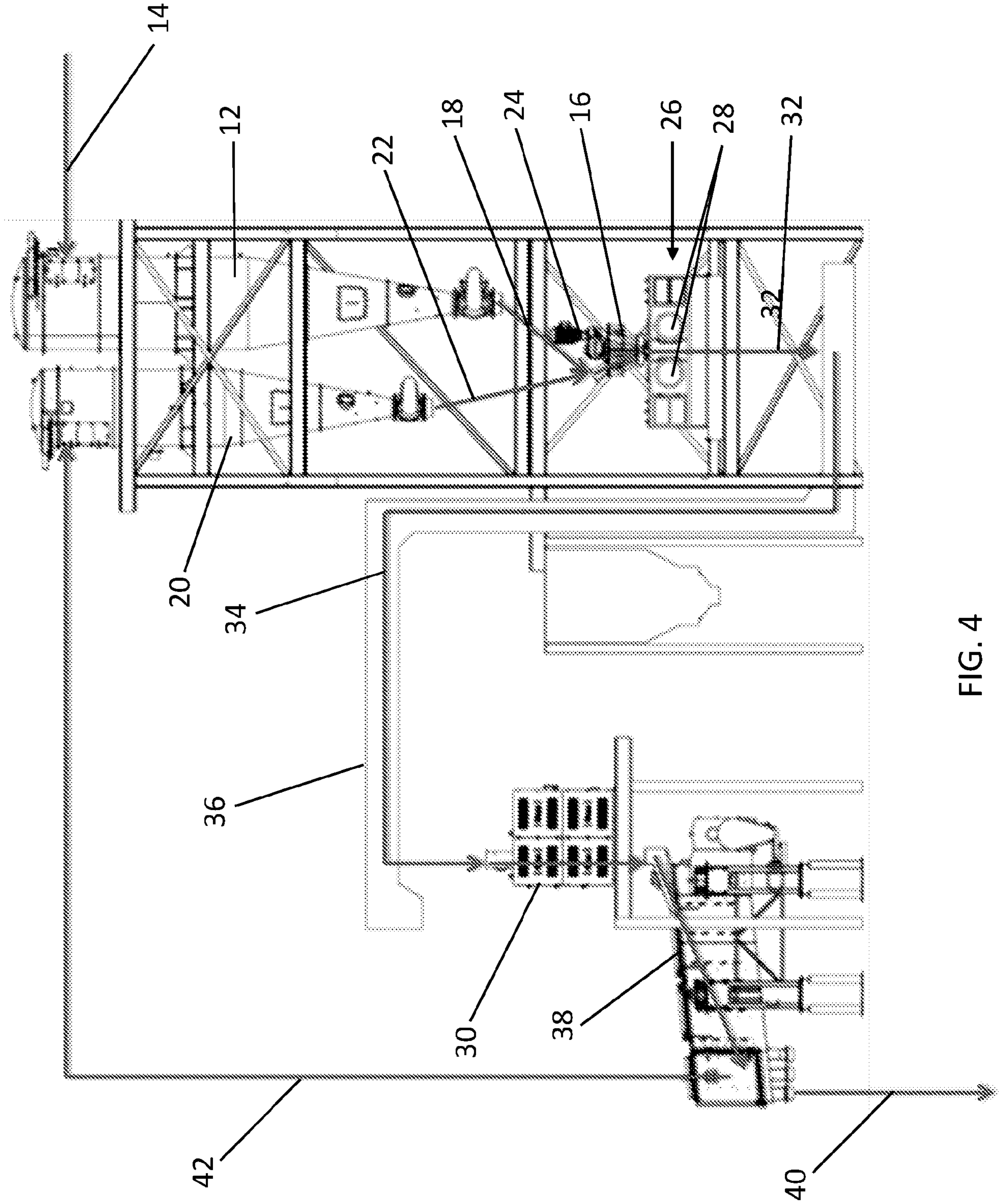


FIG. 4

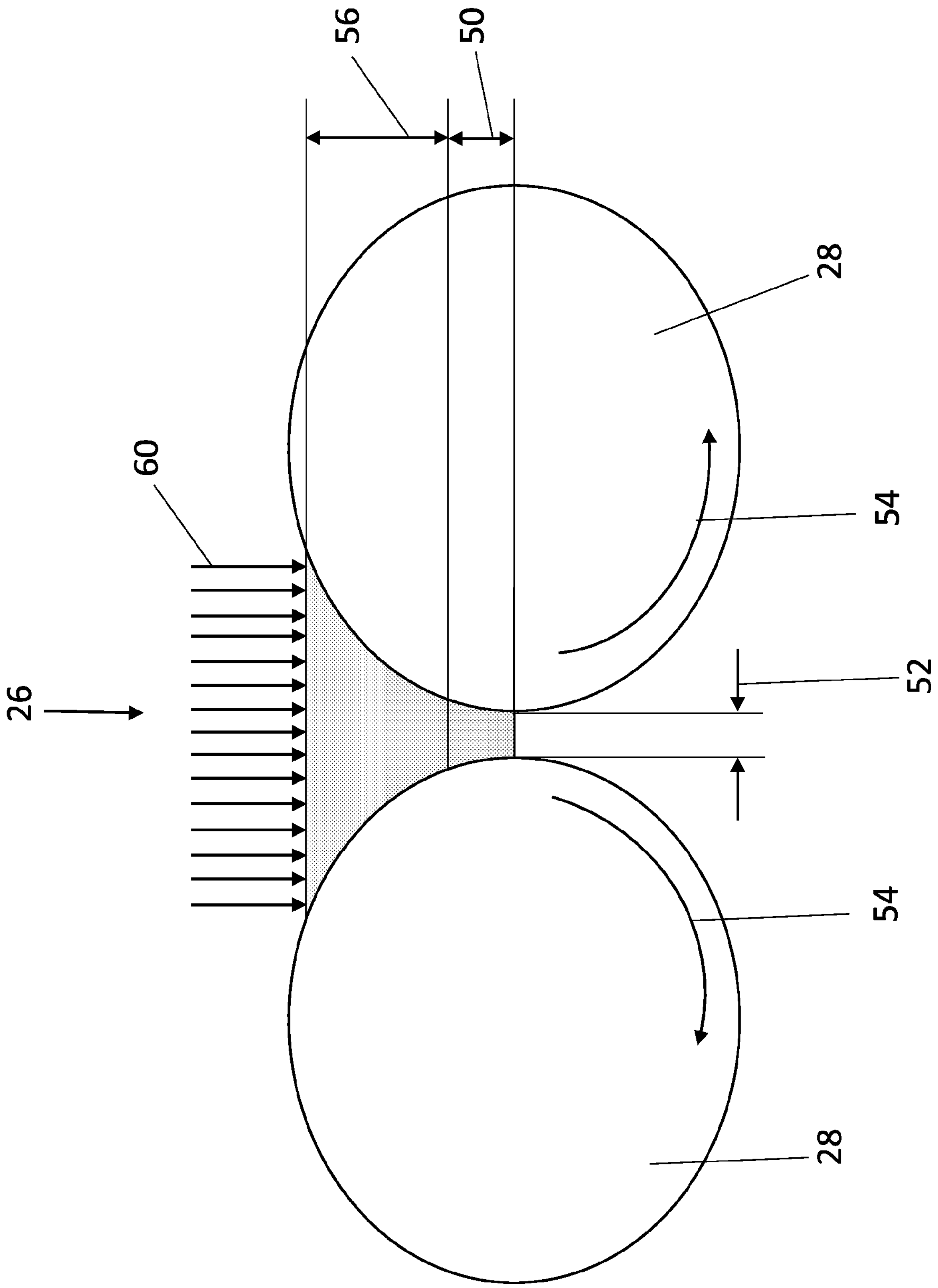


FIG. 5

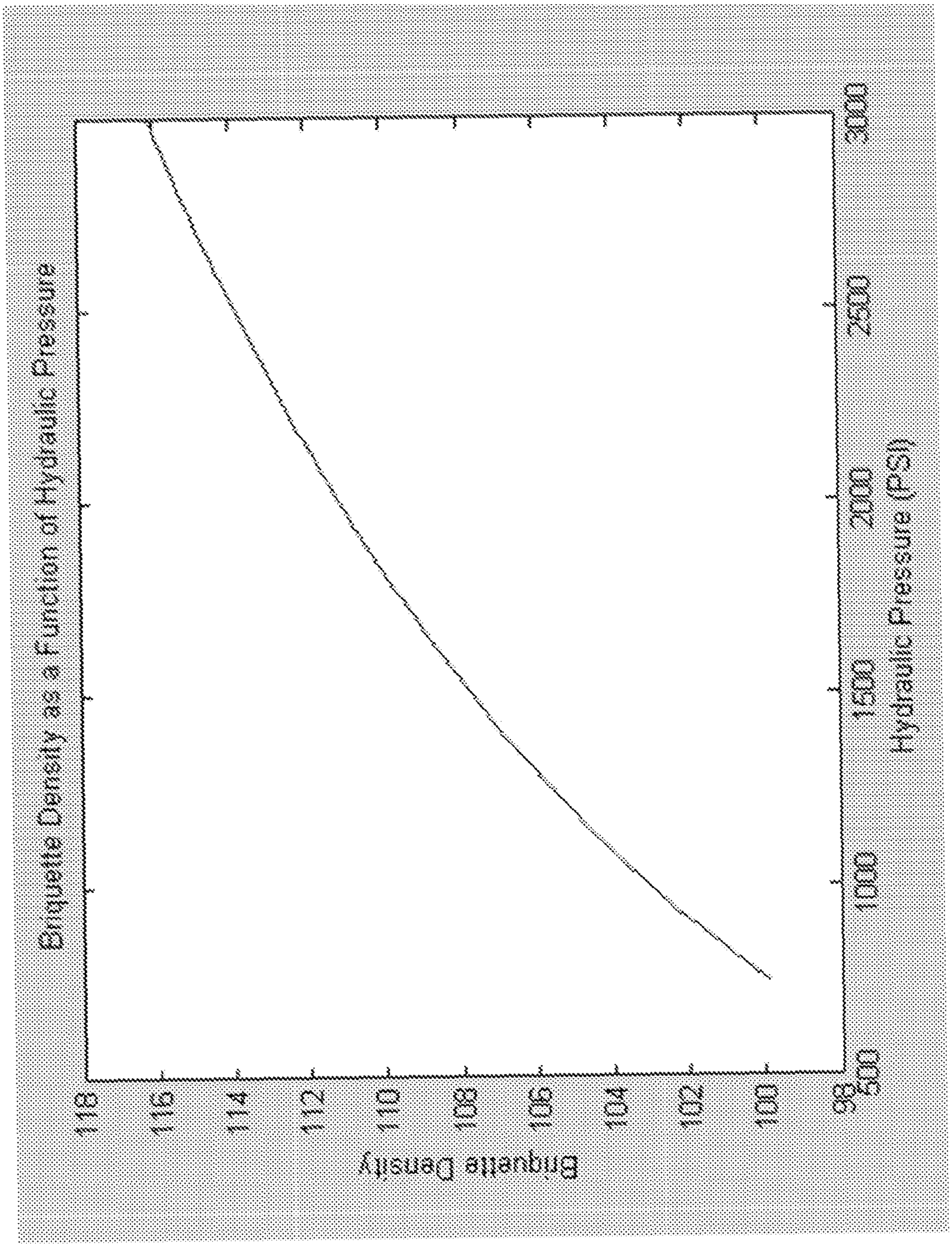
Briquette Density as a Function of Hydraulic Pressure
Briquette Density
118
116
114
112
110
108
106
104
102
100
98
500
1000
1500
2000
2500
3000
Hydraulic Pressure (PSI)

FIG. 6

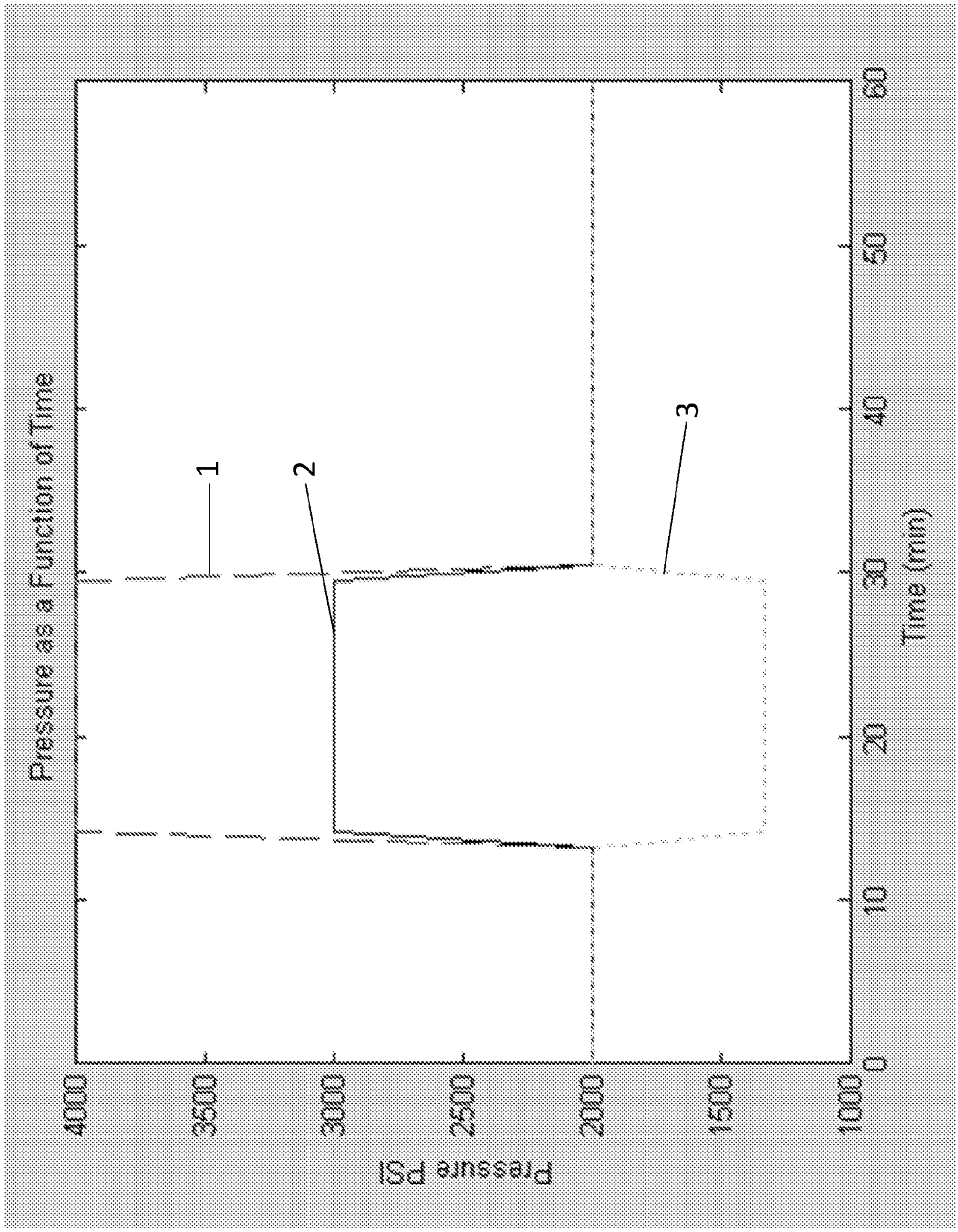
Pressure as a Function of Time
Pressure PSI
4000
3500
3000
2500
2000
1500
1000
0
10
20
30
40
50
60
Time (min)
1
2
3

FIG. 7

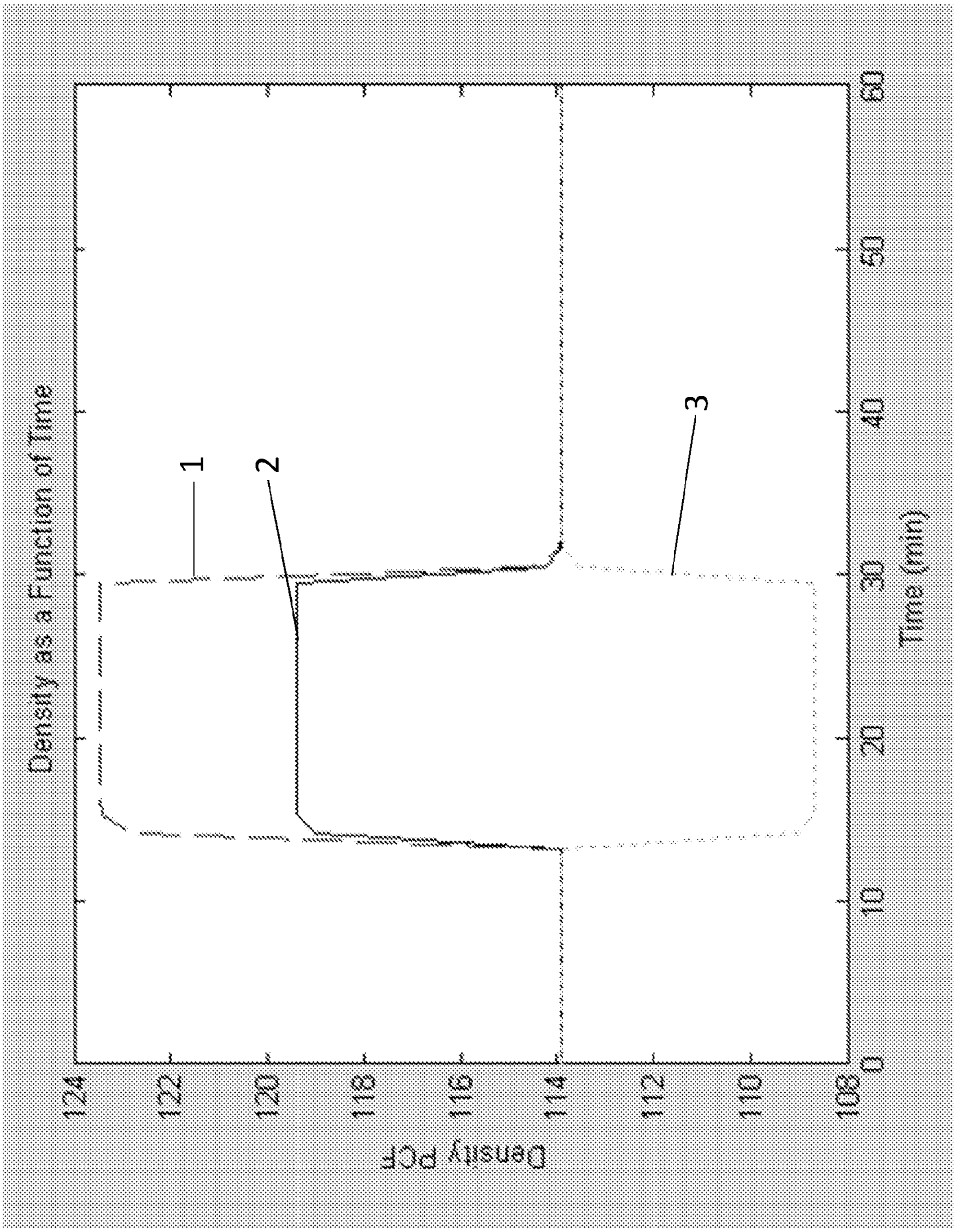
Density as a Function of Time
Density PCF
Time (min)
124
122
120
118
116
114
112
110
108
0
10
20
30
40
50
60
1
2
3

FIG. 8

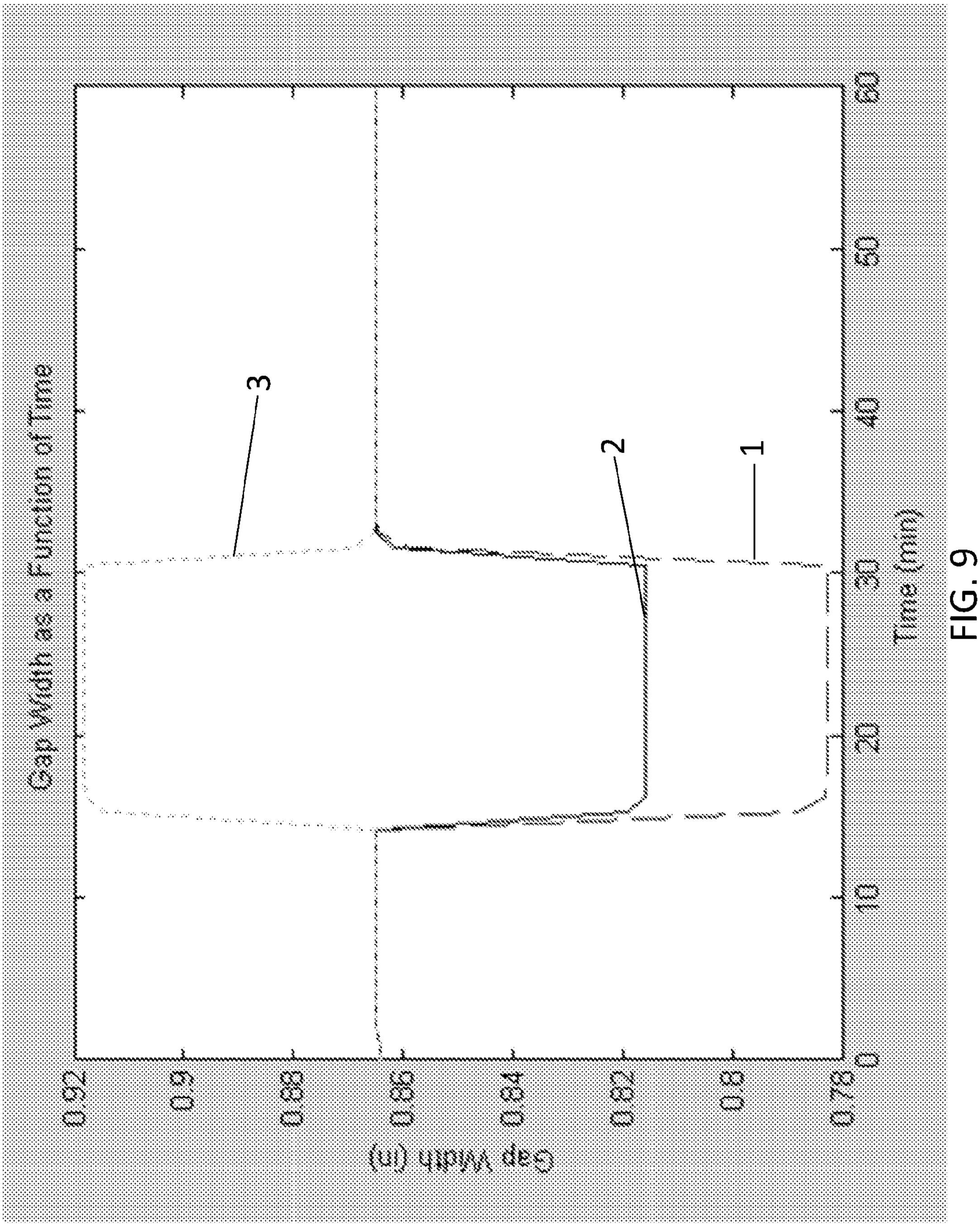
Gap Width as a Function of Time
Gap Width (in)
0.92
0.9
0.88
0.86
0.84
0.82
0.8
0.78
Time (min)
0
10
20
30
40
50
60
1
2
3

FIG. 9

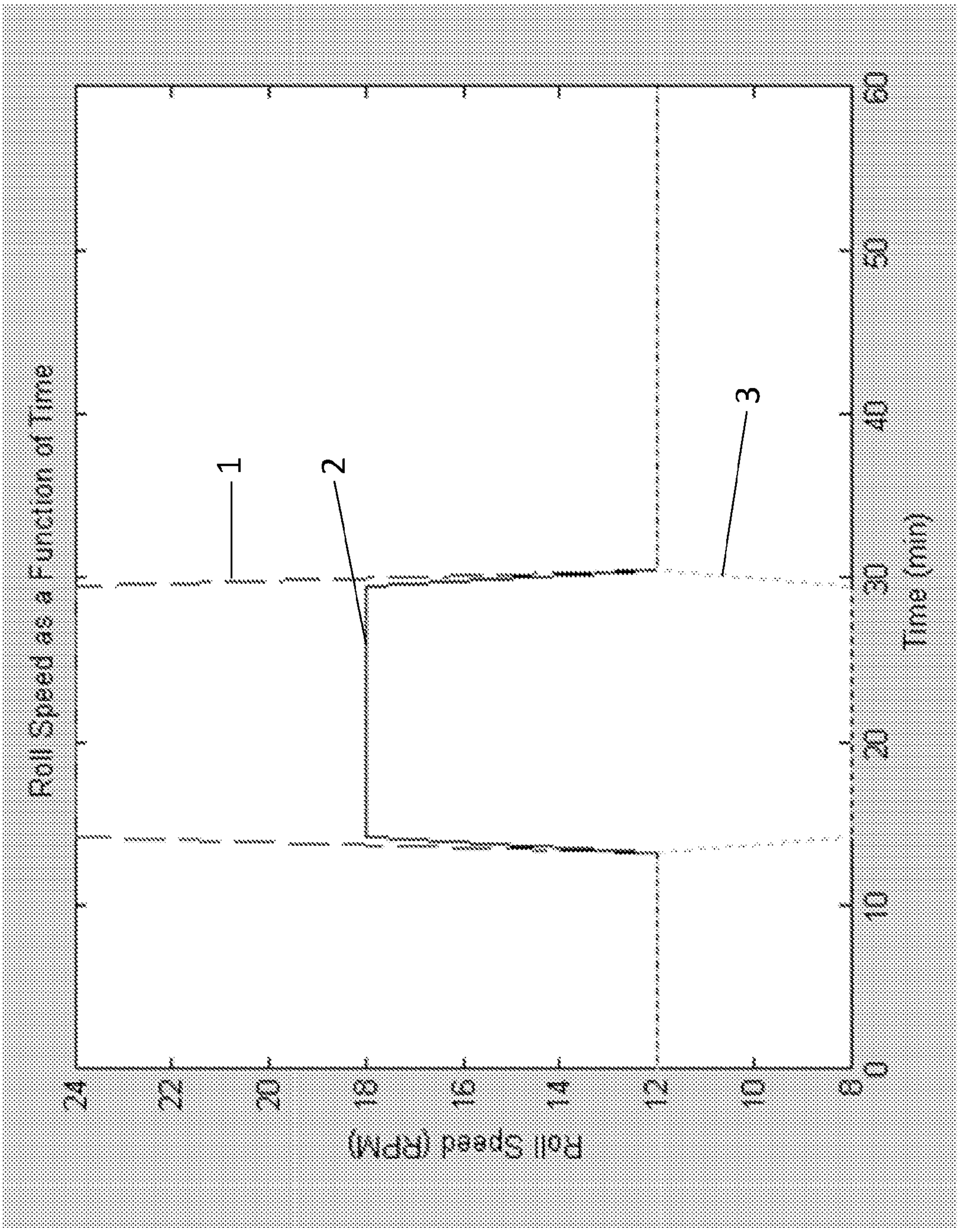
Roll Speed as a Function of Time
Roll Speed (RPM)
Time (min)
24
22
20
18
16
14
12
10
8
0
10
20
30
40
50
60
1
2
3

FIG. 10

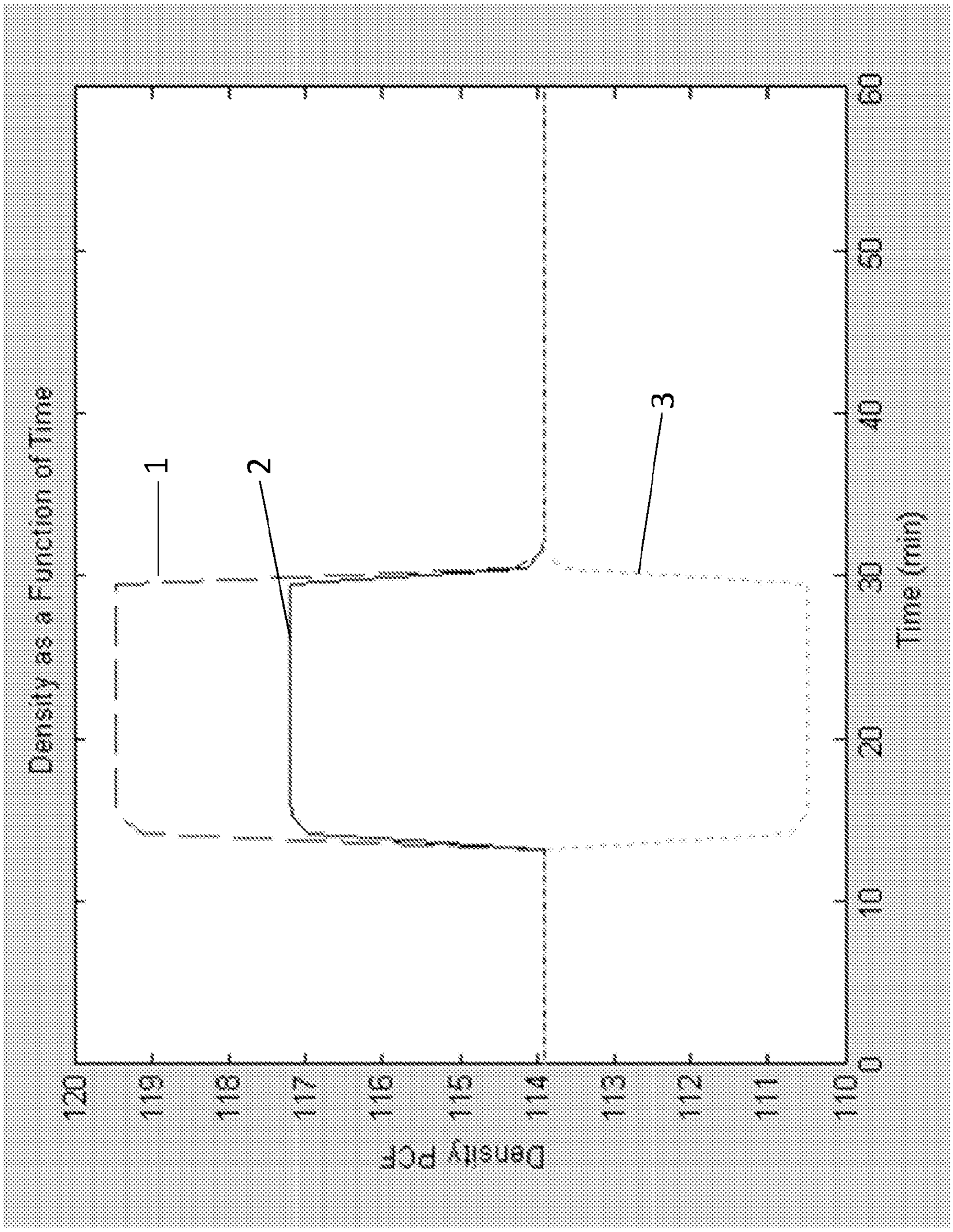
Density as a Function of Time
Density PCF
Time (min)
120
119
118
117
116
115
114
113
112
111
110
0
10
20
30
40
50
60
1
2
3

FIG. 11

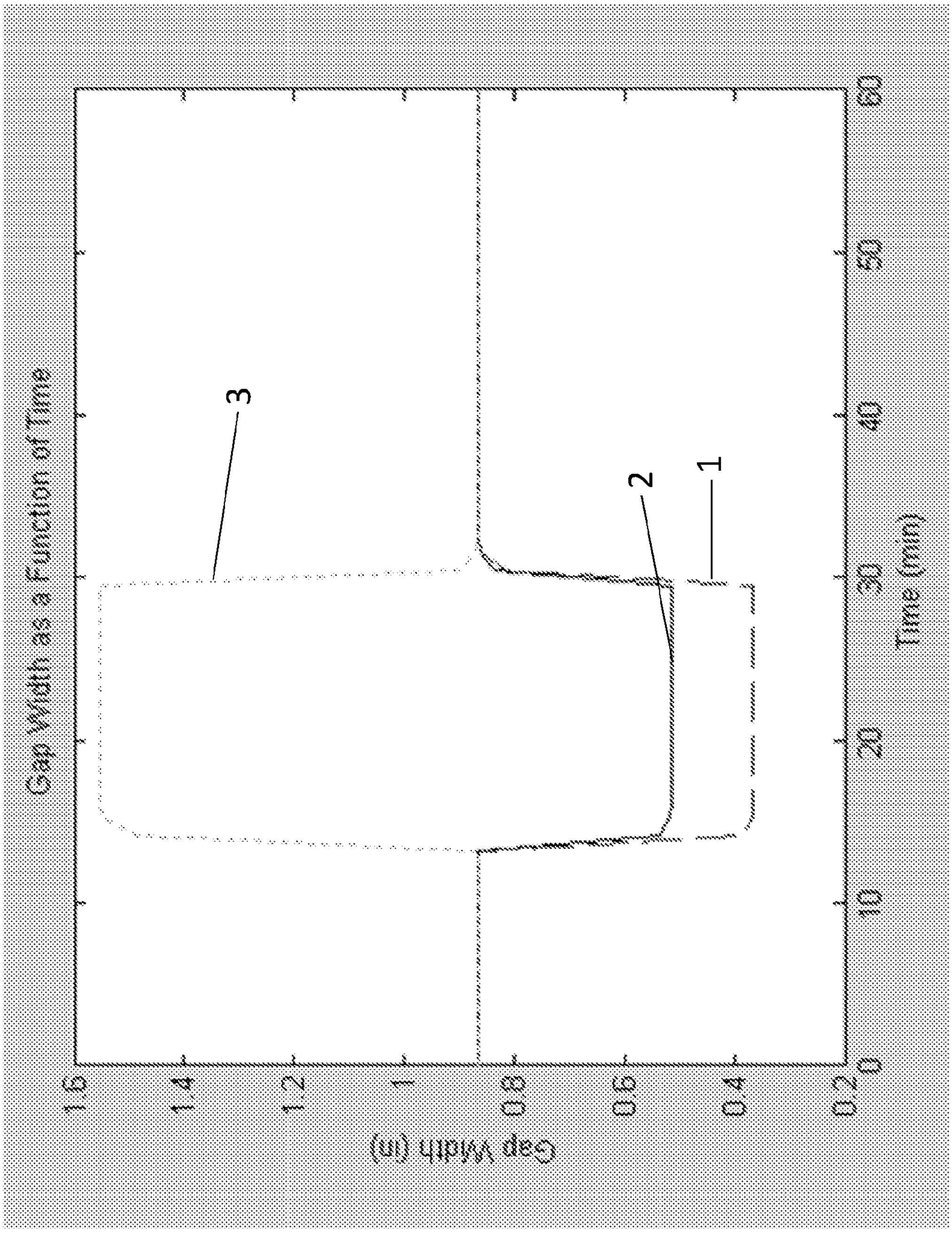
Gap Width as a Function of Time
Gap Width (in)
1.6
1.4
1.2
1
0.8
0.6
0.4
0.2
Time (min)
0
10
20
30
40
50
60
1
2
3

FIG. 12

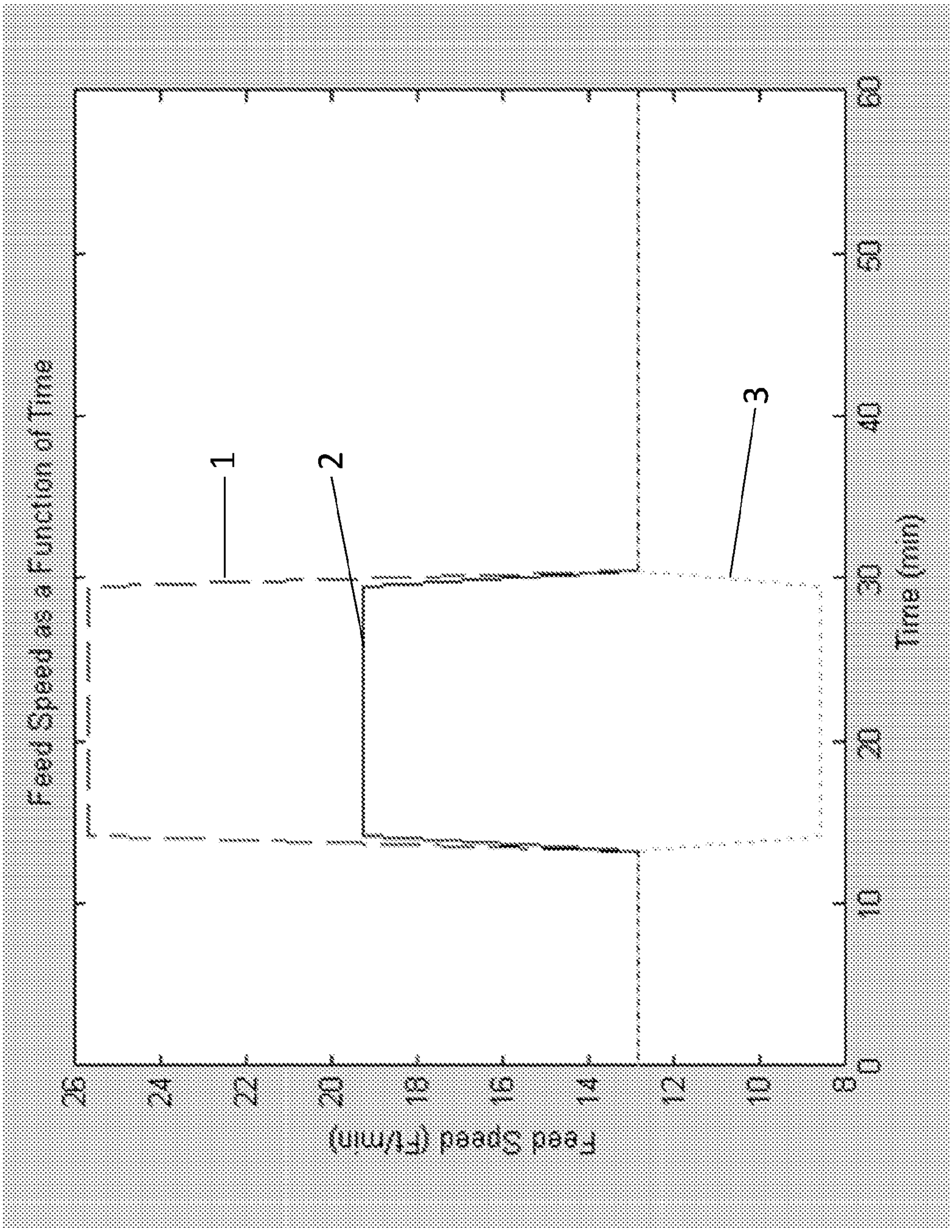
Feed Speed as a Function of Time
Feed Speed (Ft/min)
Time (min)
26
24
22
20
18
16
14
12
10
8
0
10
20
30
40
50
60
1
2
3

FIG. 13

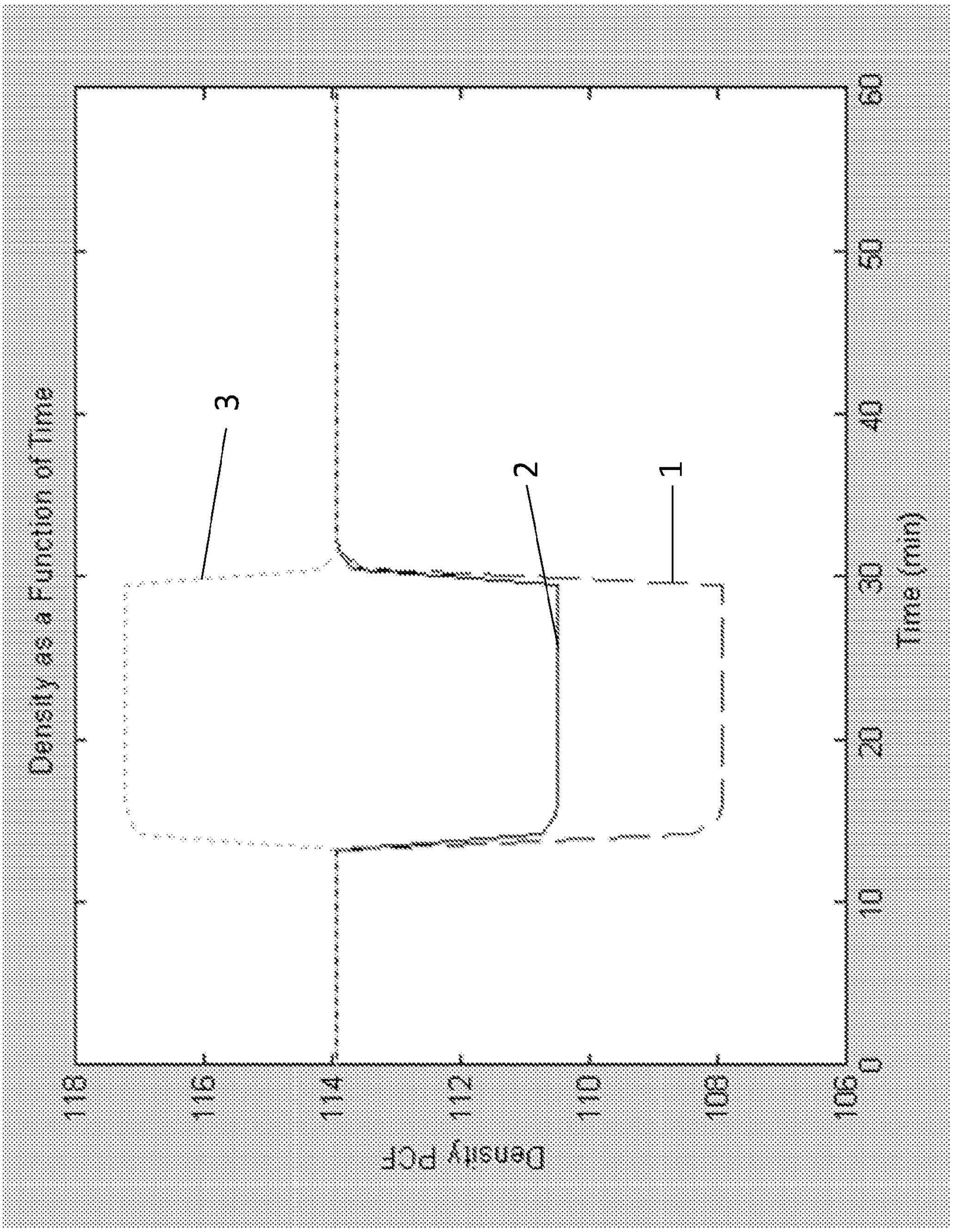
Density as a Function of Time
Density PCF
Time (min)
118
116
114
112
110
108
106
0
10
20
30
40
50
60
1
2
3

FIG. 14

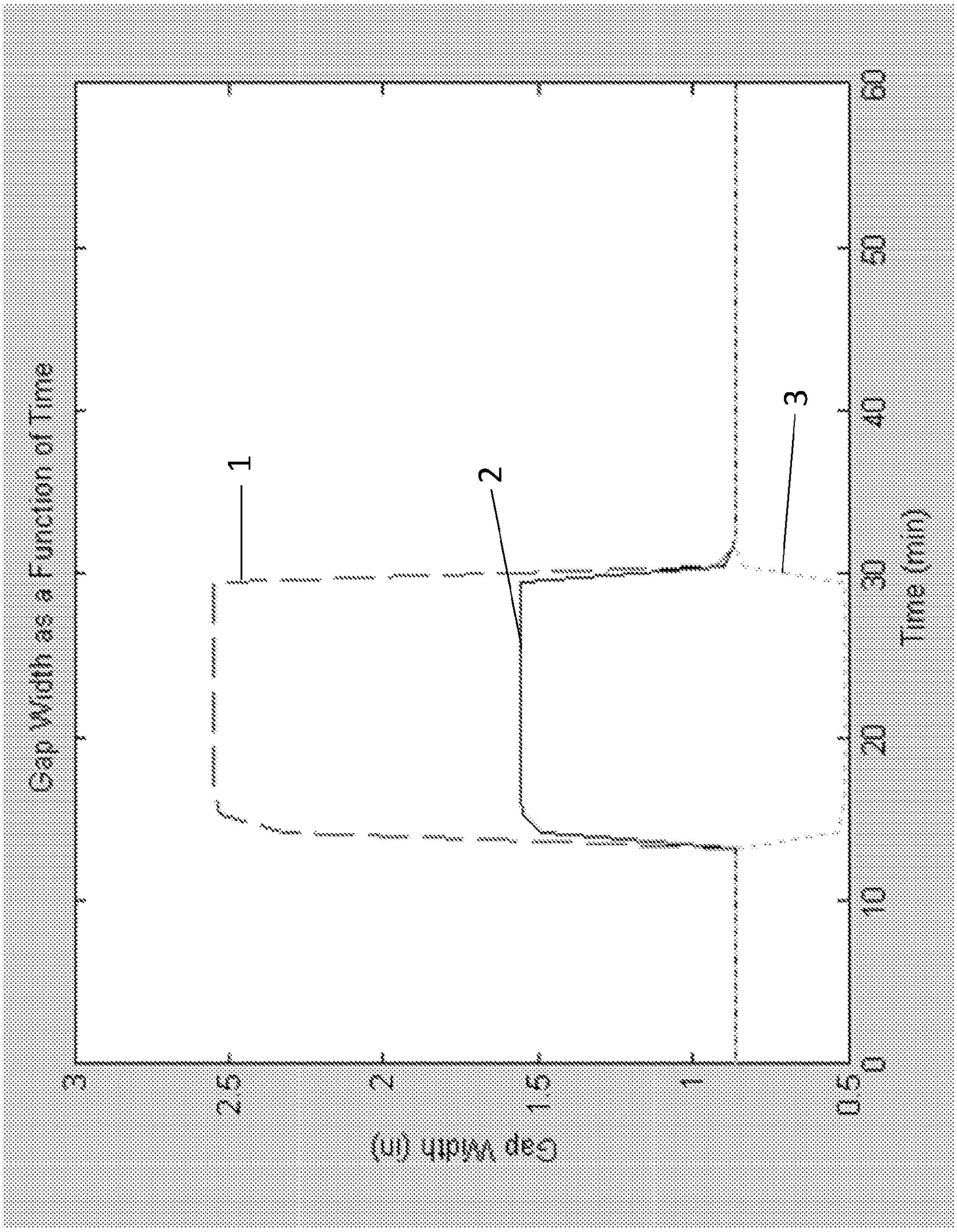
Gap Width as a Function of Time
Gap Width (in)
Time (min)
0.5
1
1.5
2
2.5
3
0
10
20
30
40
50
60
1
2
3

FIG. 15

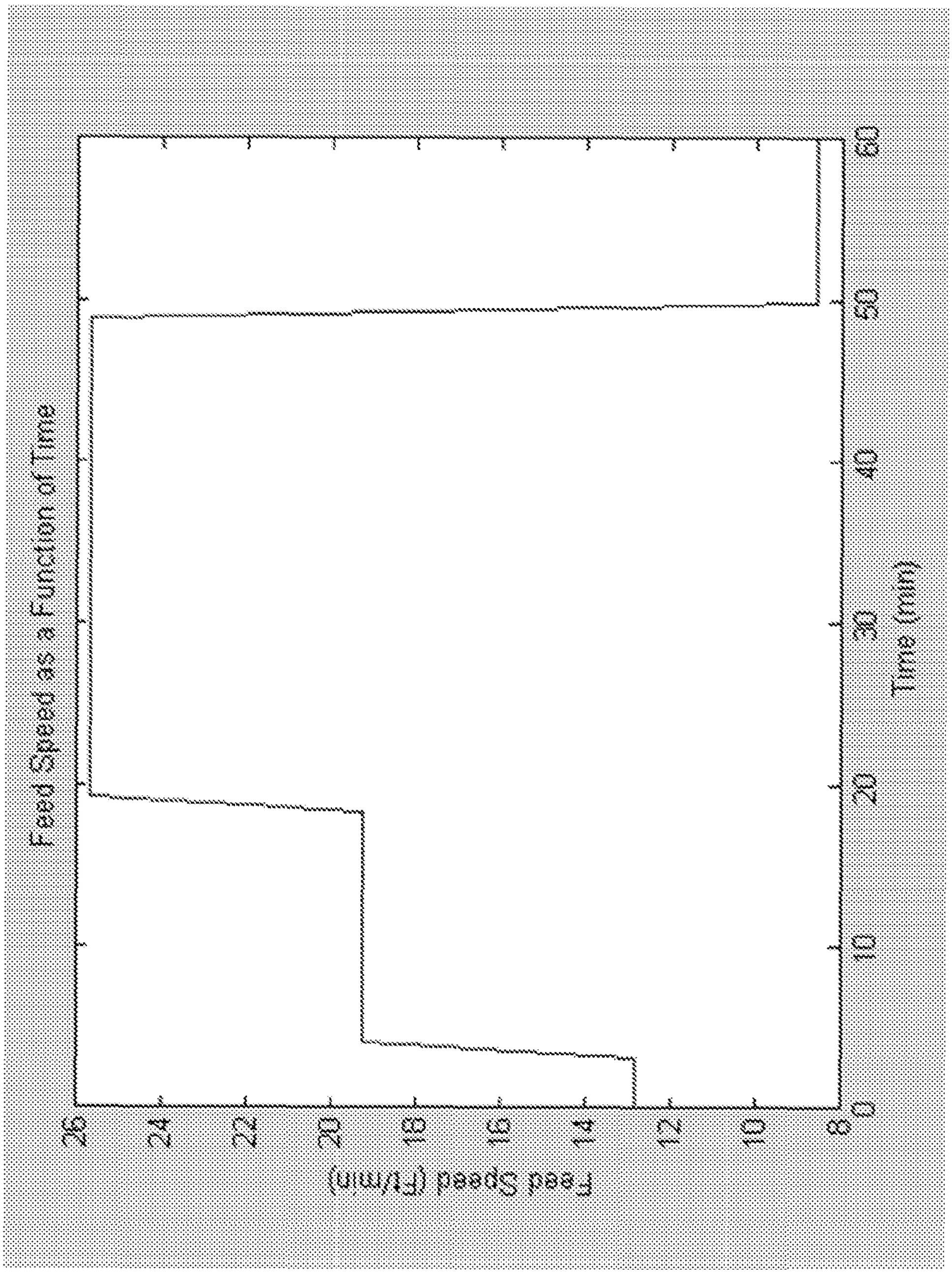
Feed Speed as a Function of Time
Feed Speed (Ft/min)
Time (min)
26
24
22
20
18
16
14
12
10
8
0
10
20
30
40
50
60

FIG. 16

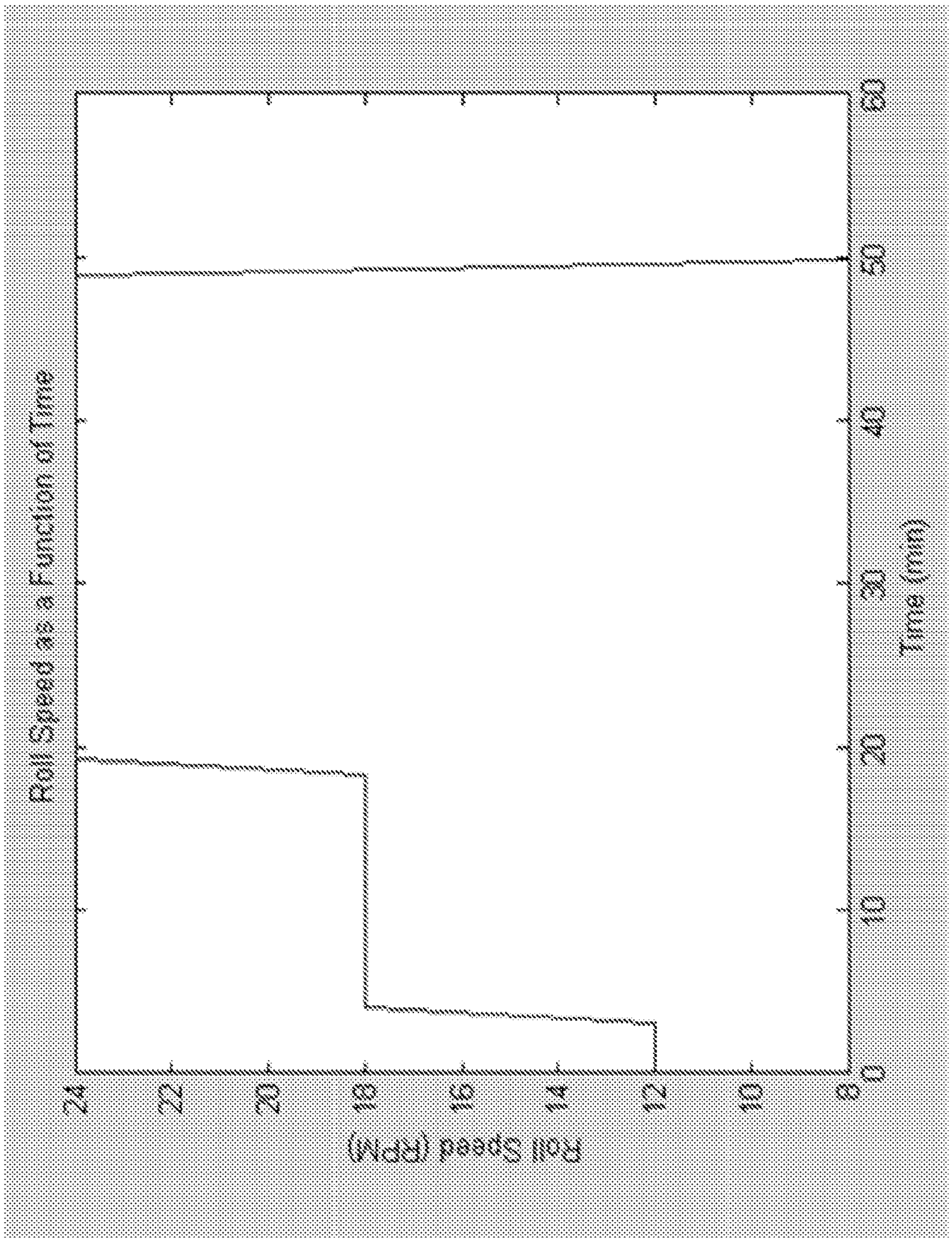
Roll Speed as a Function of Time
Roll Speed (RPM)
24
22
20
18
16
14
12
10
8
0
10
20
30
40
50
60
Time (min)

FIG. 17

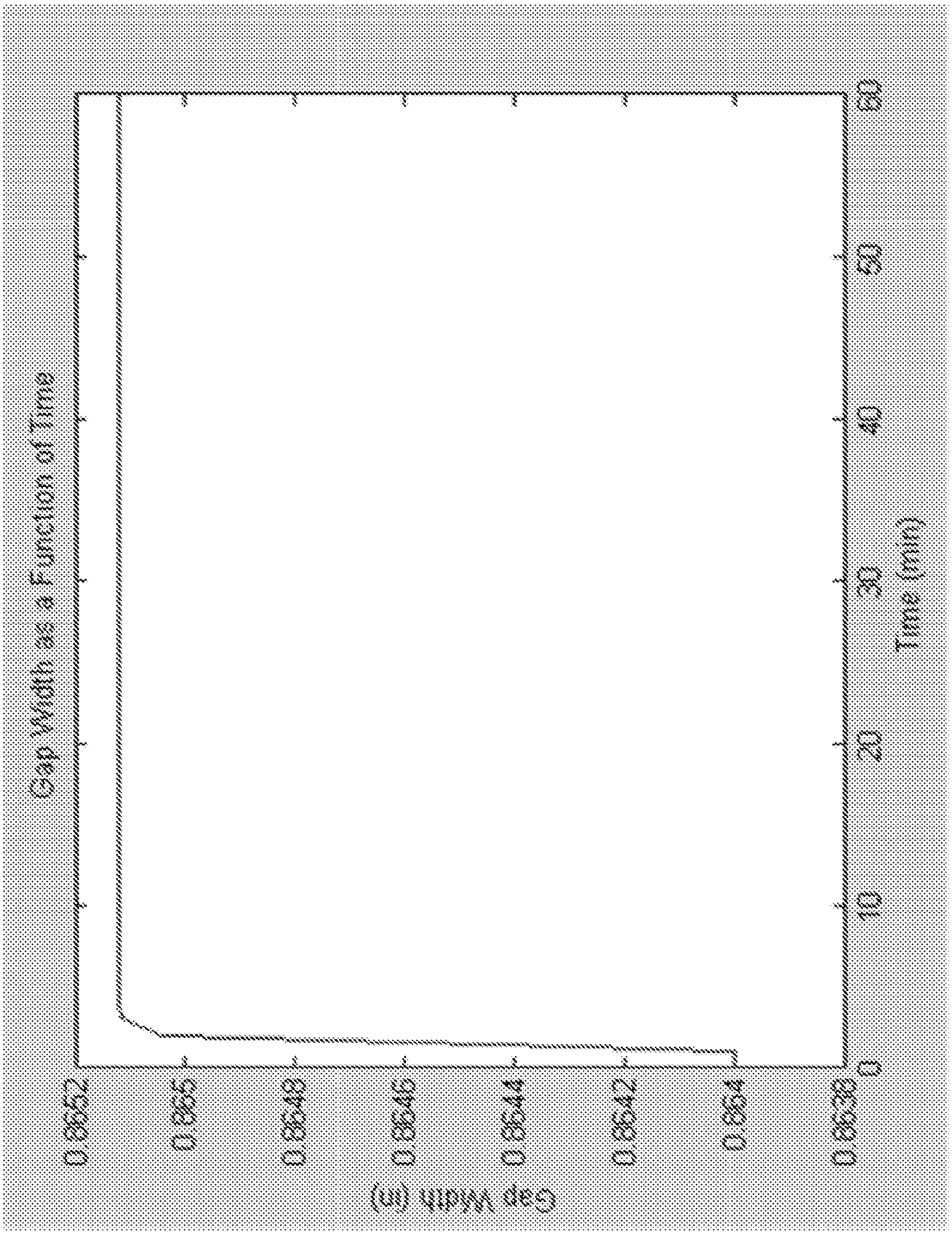
Gap Width as a Function of Time
Gap Width (in)
Time (min)
0.8652
0.865
0.8648
0.8646
0.8644
0.8642
0.864
0.8638
0
10
20
30
40
50
60

FIG. 18

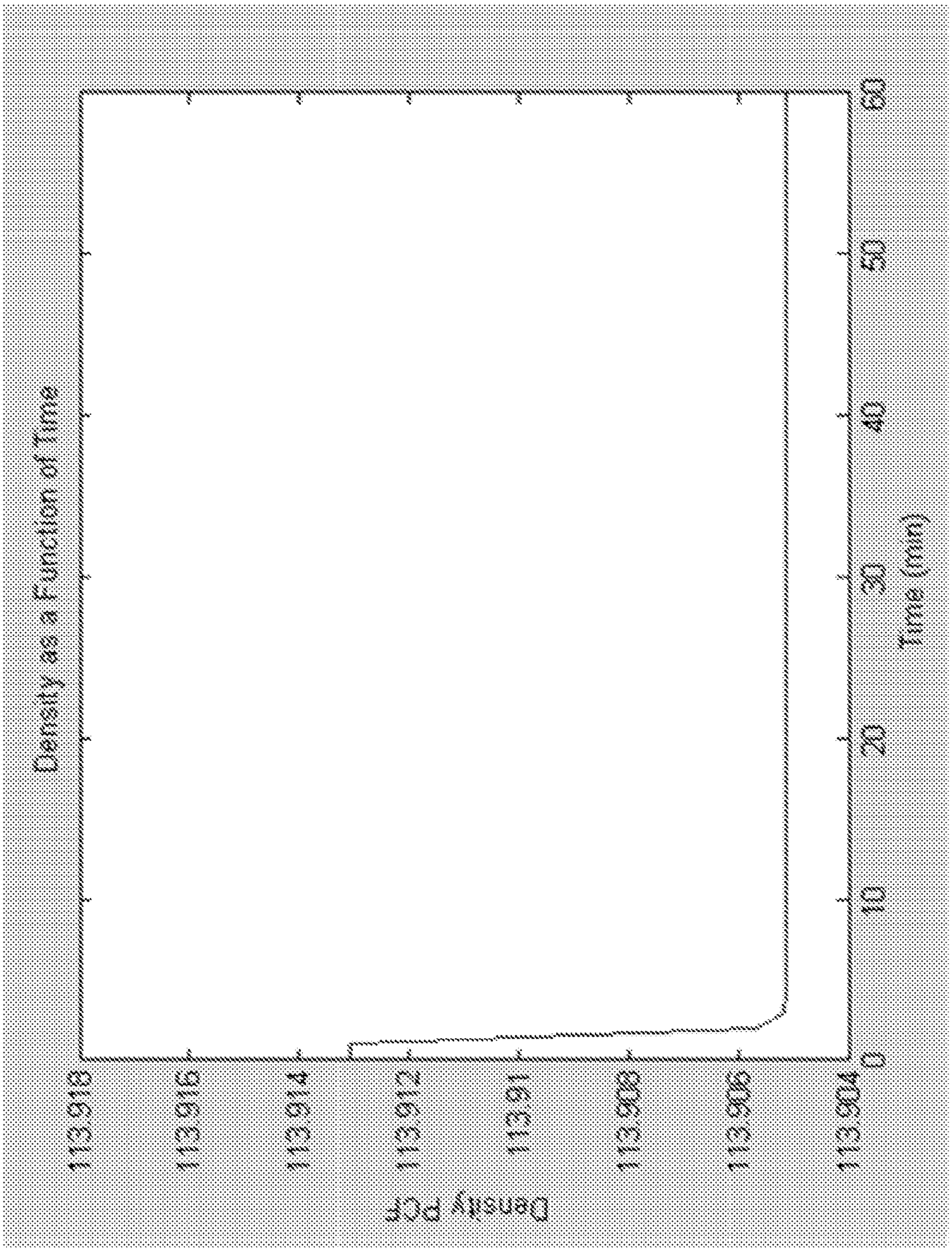
Density as a Function of Time
Density PCF
113.918
113.916
113.914
113.912
113.91
113.908
113.906
113.904
0
10
20
30
40
50
60
Time (min)

FIG. 19

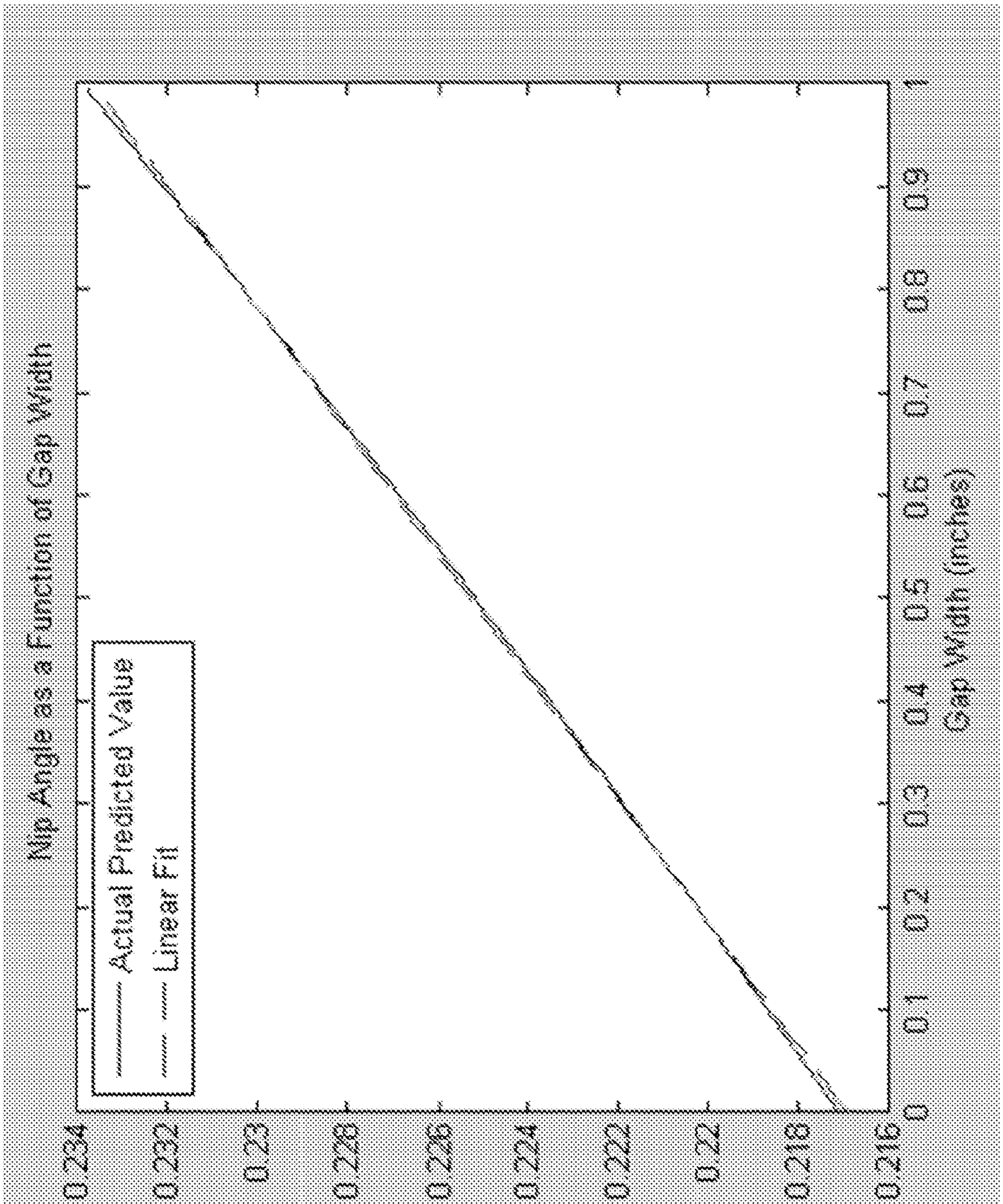
Nip Angle as a Function of Gap Width
Actual Predicted Value
Linear Fit
Nip angle (rad)
0.234
0.232
0.23
0.228
0.226
0.224
0.222
0.22
0.218
0.216
Gap Width (inches)
0
0.1
0.2
0.3
0.4
0.5
0.6
0.7
0.8
0.9
1

FIG. 20

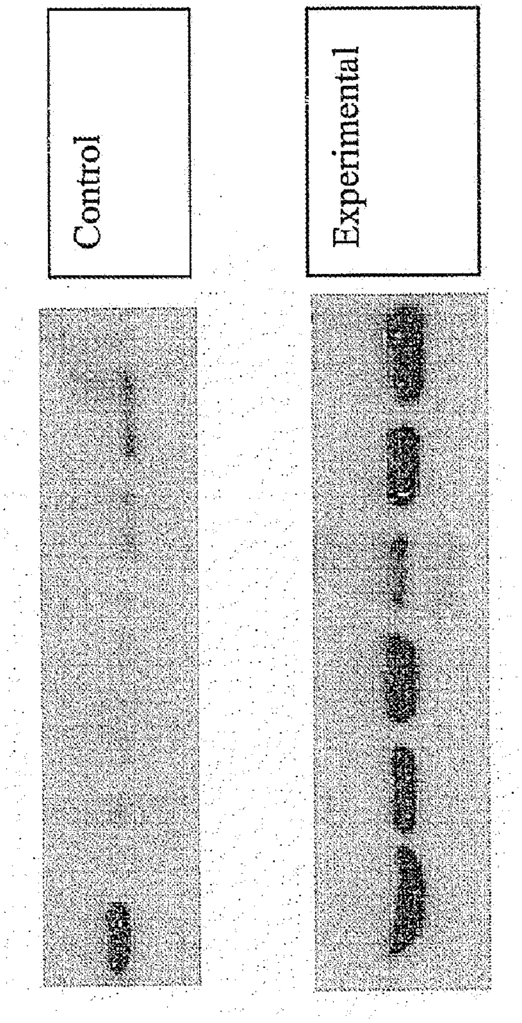


FIG. 21

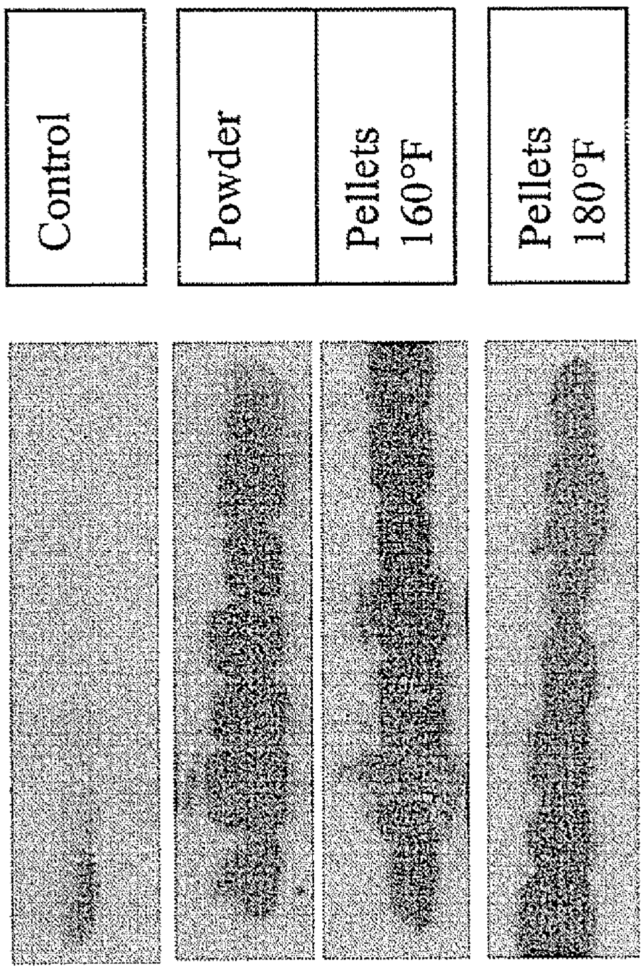


FIG. 22

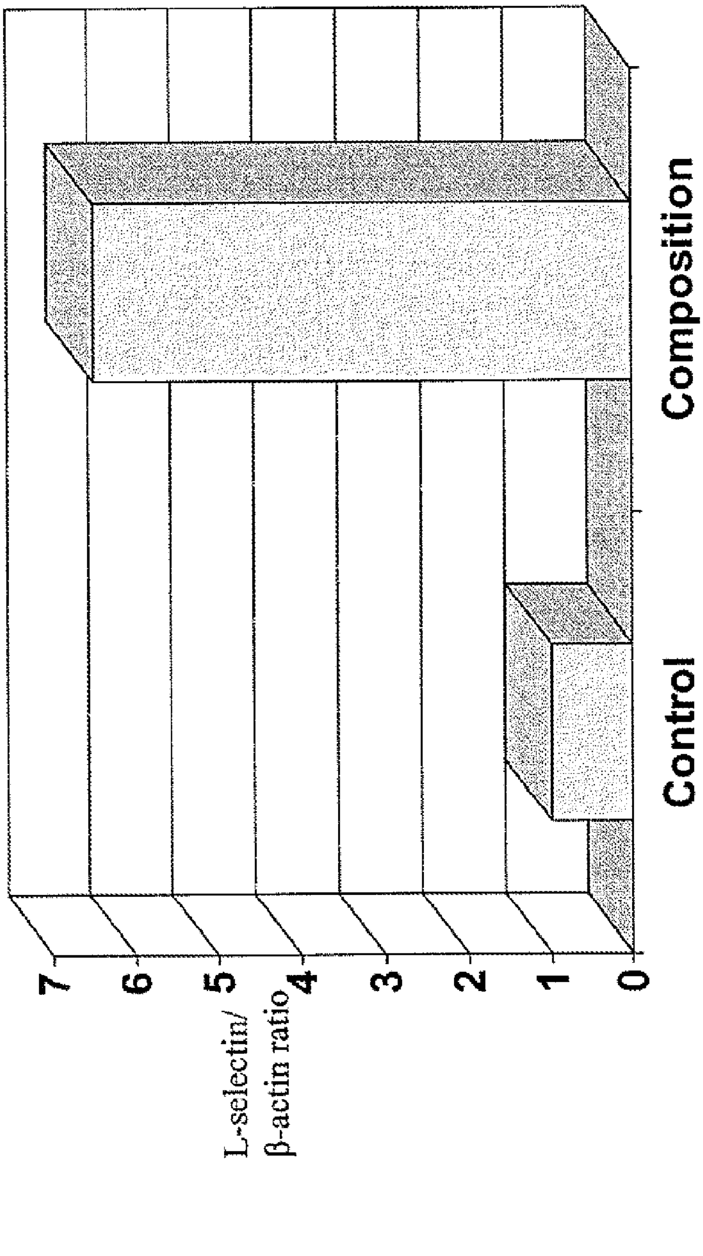


FIG. 23

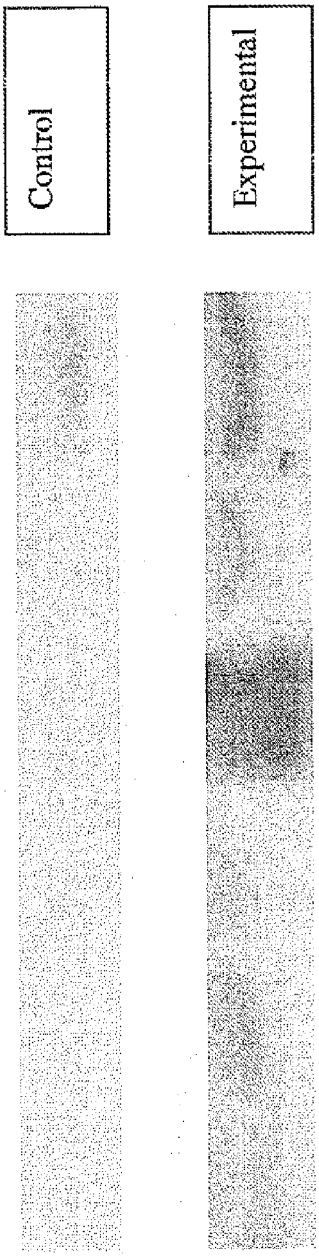


FIG. 24

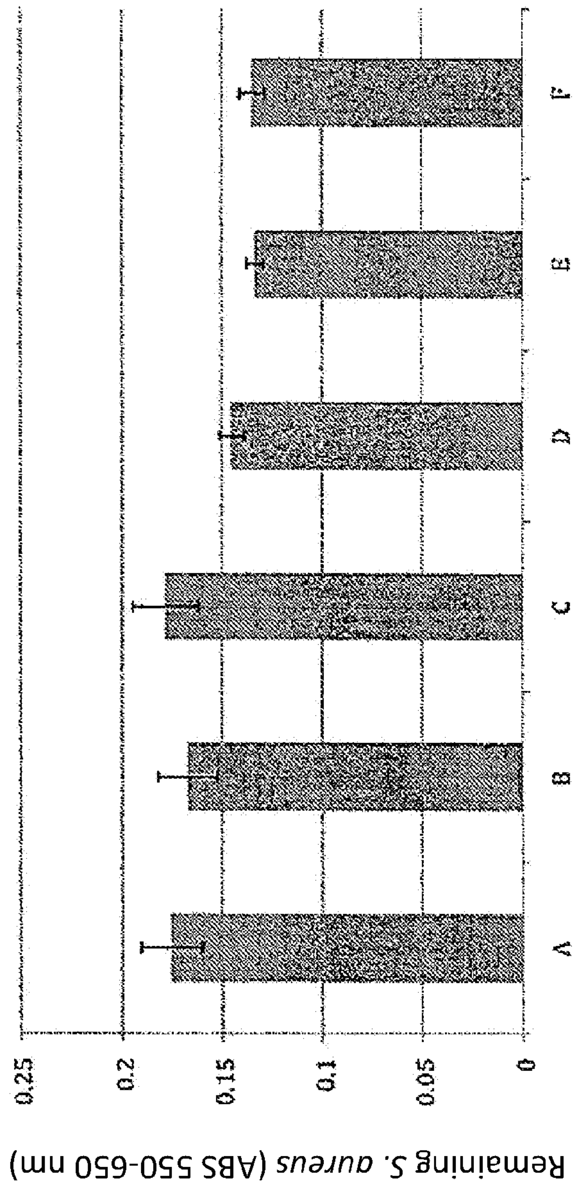


FIG. 25

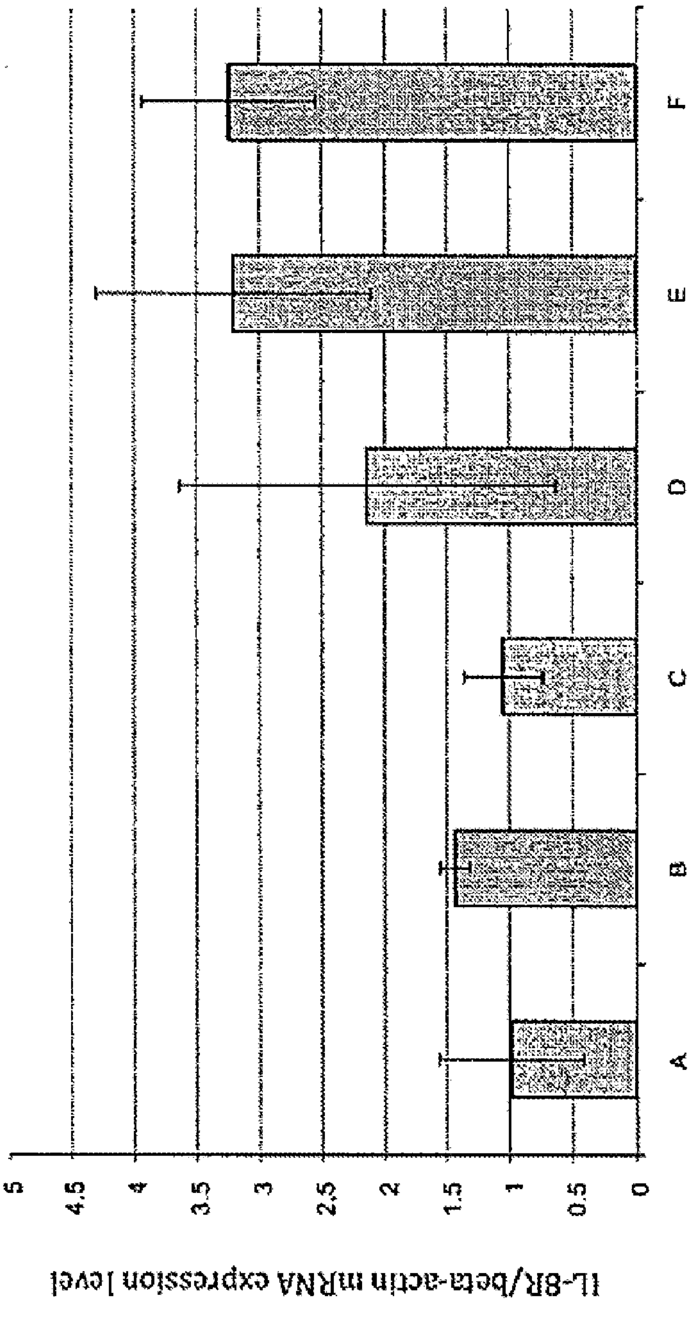
IL-8R/beta-actin mRNA expression level
0
0.5
1
1.5
2
2.5
3
3.5
4
4.5
5
A
B
C
D
E
F

FIG. 26

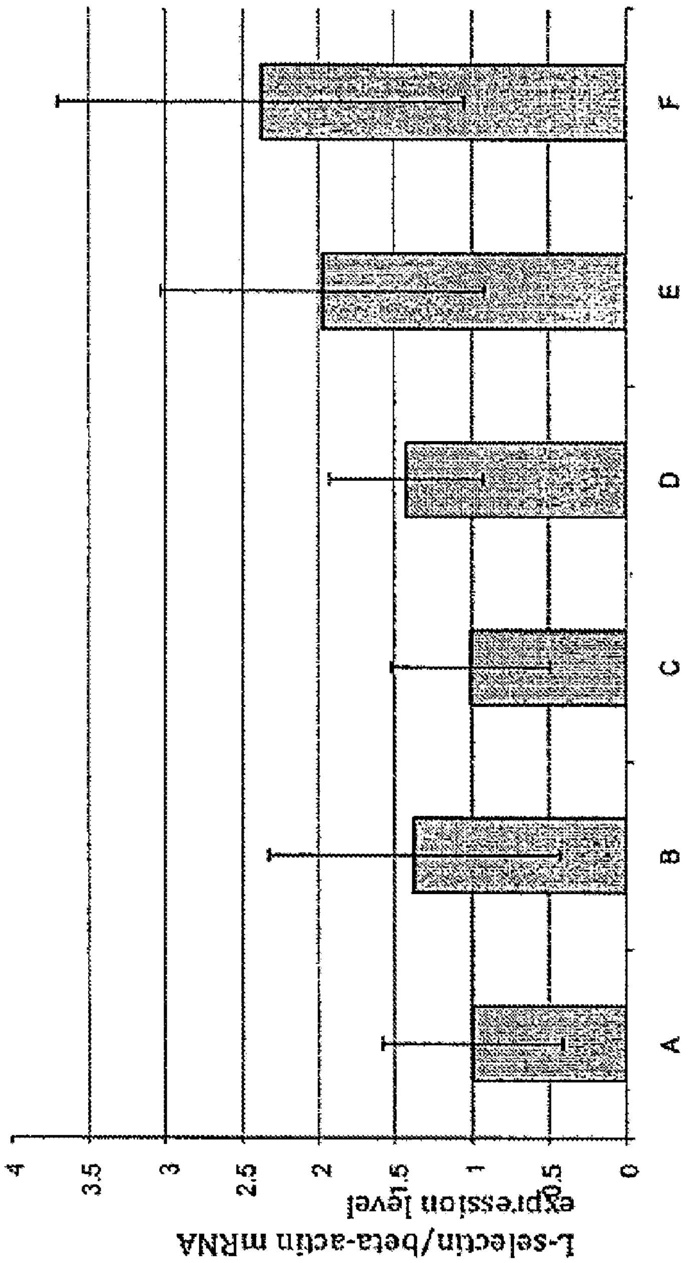
L-selectin/beta-actin mRNA expression level
0
0.5
1
1.5
2
2.5
3
3.5
4
A
B
C
D
E
F

FIG. 27

| | Method 1 | Method 2 | Method 3 | Method 4 | Method 5 | Method 6 | Method 7 | Method 8 |
|---|---|---|---|---|---|---|---|---|
| | | | | | | | | |
| + 12 mesh | 0.0 | 6.7 | 0.0 | 0.0 | 0.0 | **40.2** | **11.8** | 0.0 |
| 12 x 16 mesh | 0.0 | 19.1 | 28.1 | 37.6 | 0.0 | 14.4 | 9.1 | 23.6 |
| 16 x 20 mesh | 0.1 | 15.6 | 36.2 | 23.5 | 0.5 | 13.9 | 10.1 | 26.9 |
| 20 x 40 mesh | 0.5 | 17.6 | 32.9 | 20.9 | 40.3 | 21.8 | 8.4 | 27.3 |
| 40 x 60 mesh | 1.0 | 6.8 | 0.5 | 11.7 | 28.8 | 6.4 | 3.5 | 14.0 |
| 60 x 100 mesh | 14.2 | 23.2 | 0.4 | 5.1 | 11.4 | 1.1 | 5.8 | 6.5 |
| - 100 mesh | **84.2** | **10.9** | 1.8 | 1.2 | **19.0** | 2.2 | **51.4** | 1.7 |

FIG. 28

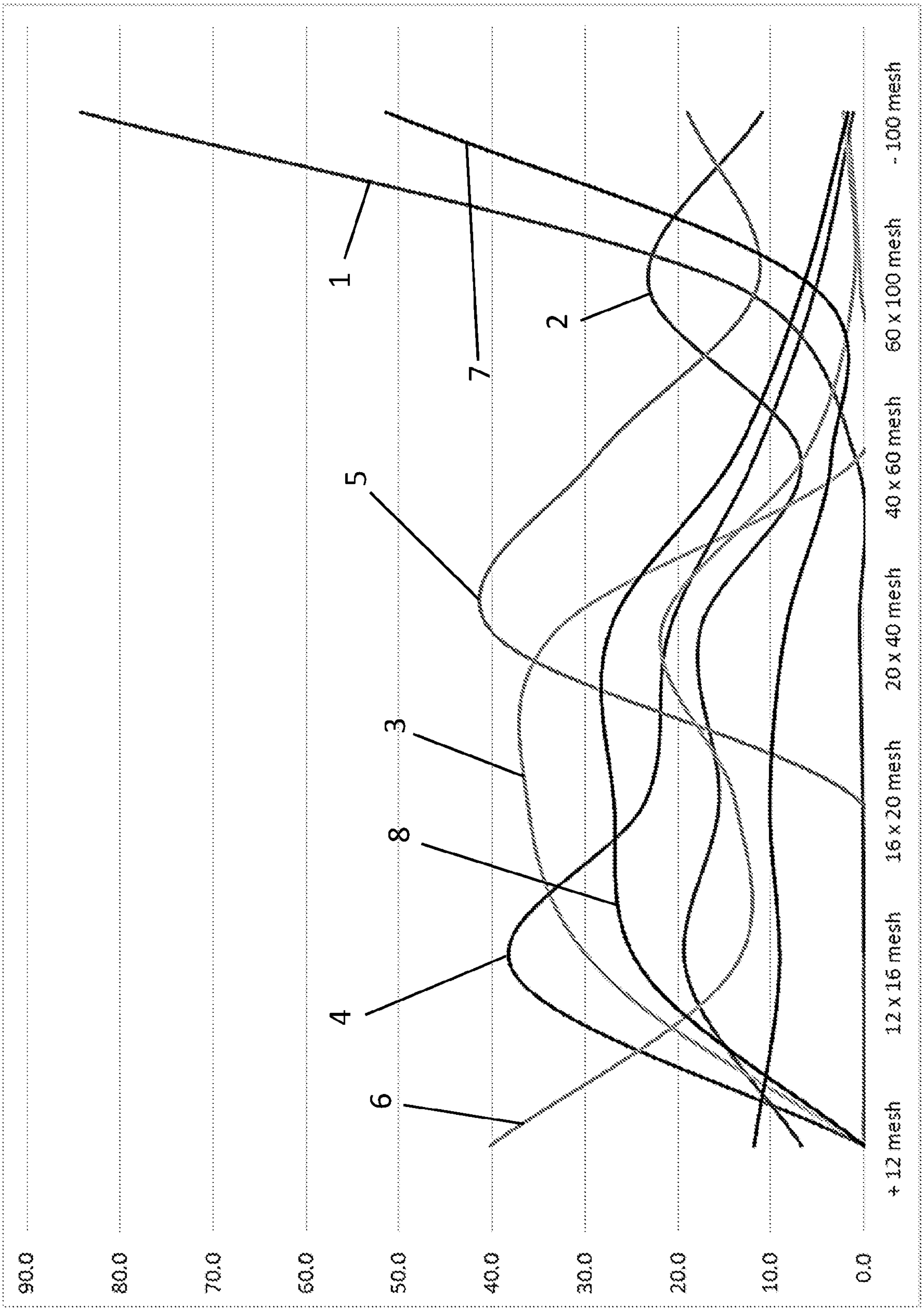
90.0
80.0
70.0
60.0
50.0
40.0
30.0
20.0
10.0
0.0
+ 12 mesh
12 x 16 mesh
16 x 20 mesh
20 x 40 mesh
40 x 60 mesh
60 x 100 mesh
- 100 mesh
1
2
3
4
5
6
7
8

FIG. 29

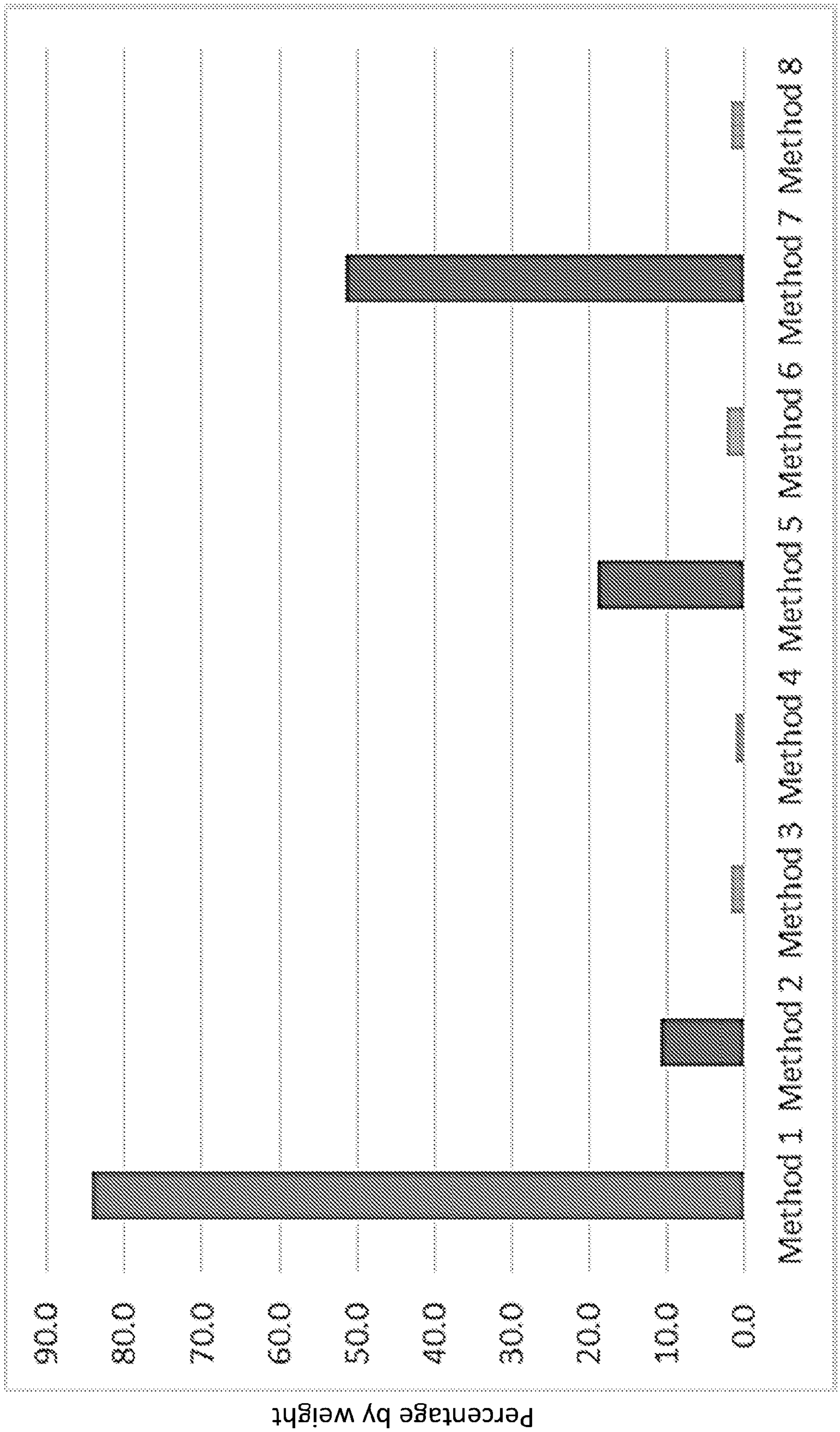
Percentage by weight
90.0
80.0
70.0
60.0
50.0
40.0
30.0
20.0
10.0
0.0
Method 1
Method 2
Method 3
Method 4
Method 5
Method 6
Method 7
Method 8

FIG. 30

| | **Method 1** | **Method 2** | **Method 3** | **Method 4** | **Method 5** | **Method 6** | **Method 7** | **Method 8** |
|---|---|---|---|---|---|---|---|---|
| Loose Density ($lb/ft^3$) | 26.3 | 44.7 | 54.3 | 60.1 | 48.4 | 52.7 | 39.7 | 59.9 |
| Tapped Density ($lb/ft^3$) | 55.1 | 58.6 | 59.7 | 72.0 | 69.9 | 56.5 | 57.0 | 71.5 |
| Density Difference ($lb/ft^3$) | 28.8 | 13.9 | 5.4 | 11.9 | 21.5 | 3.8 | 17.3 | 11.6 |

FIG. 31

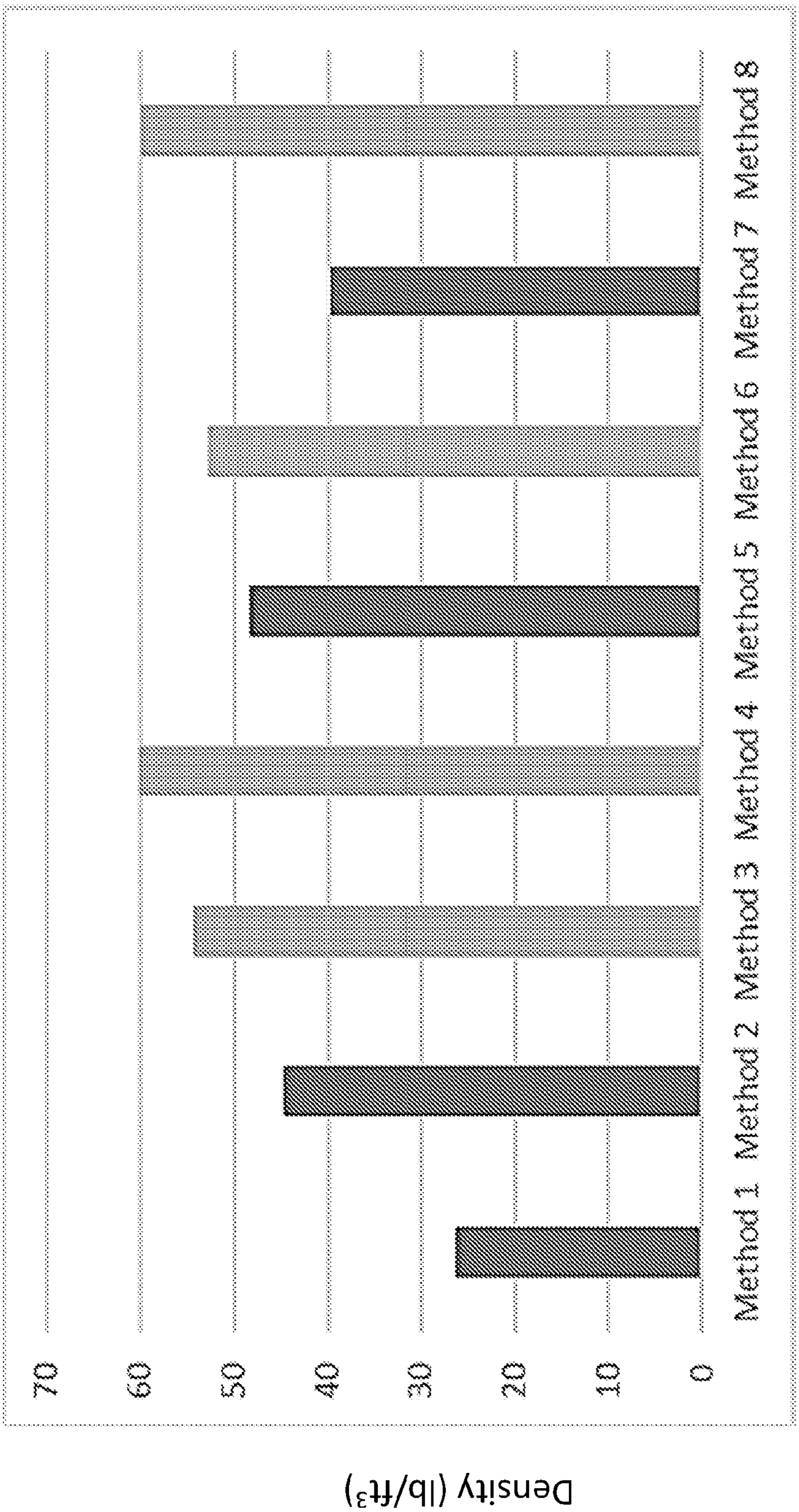
Density (lb/ft³)
70
60
50
40
30
20
10
0
Method 1
Method 2
Method 3
Method 4
Method 5
Method 6
Method 7
Method 8

FIG. 32

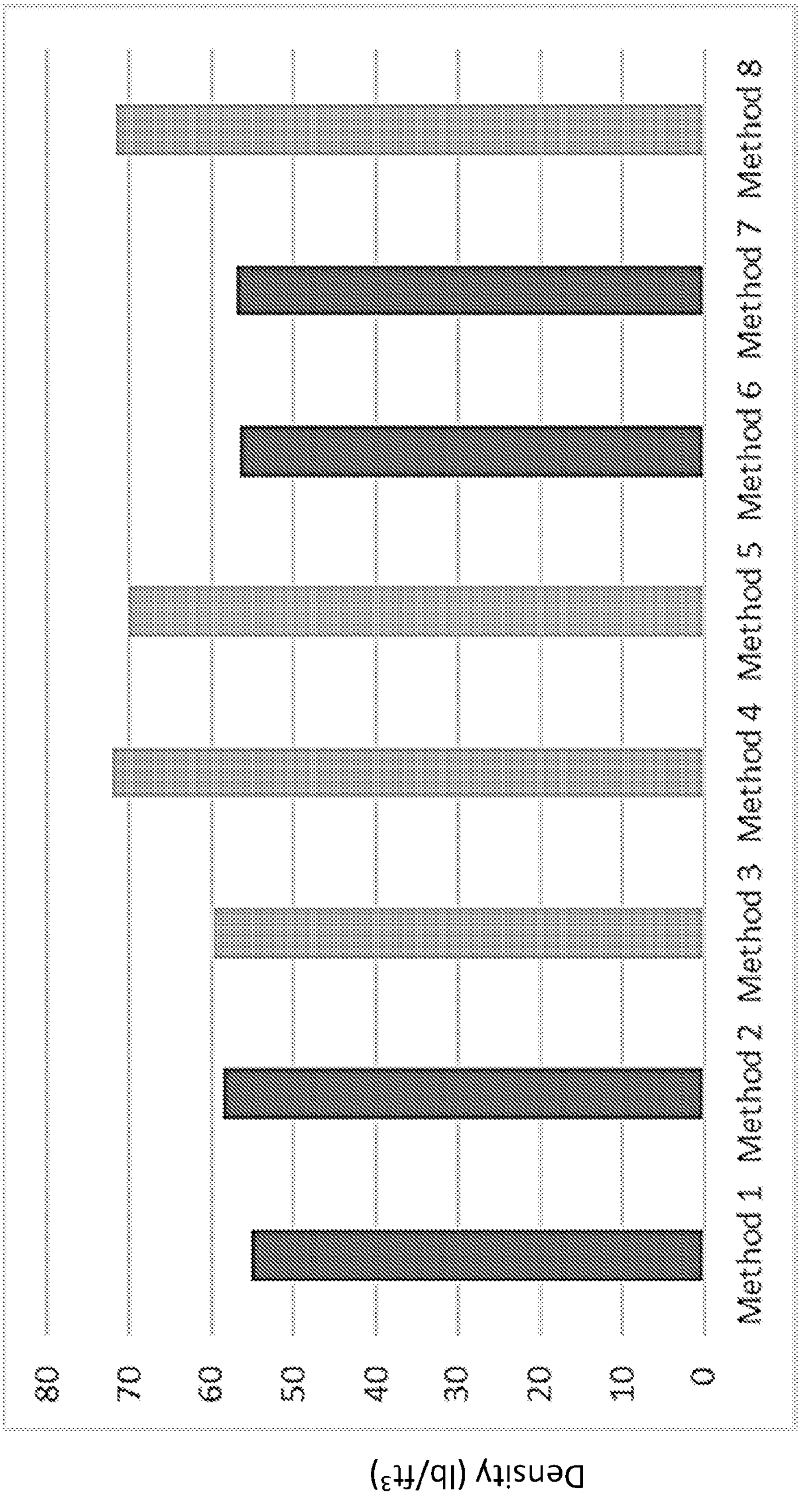
Density (lb/ft3)
0
10
20
30
40
50
60
70
80
Method 1
Method 2
Method 3
Method 4
Method 5
Method 6
Method 7
Method 8

FIG. 33

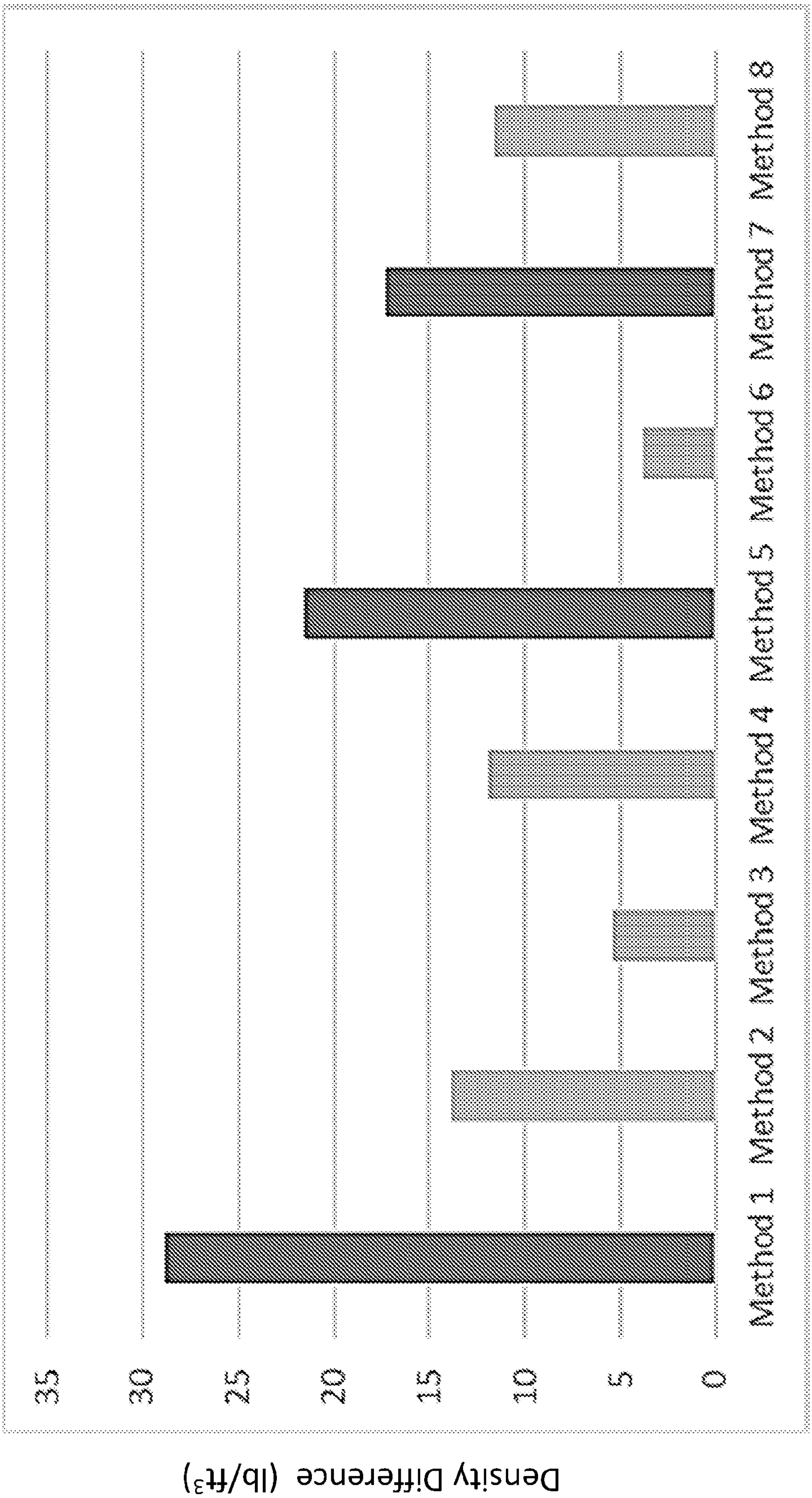

Density Difference (lb/ft³)
0
5
10
15
20
25
30
35
Method 1
Method 2
Method 3
Method 4
Method 5
Method 6
Method 7
Method 8


FIG. 34

| | Method 1 | Method 2 | Method 3 | Method 4 | Method 5 | Method 6 | Method 7 | Method 8 |
|---|---|---|---|---|---|---|---|---|
| Attrition (20 x 40) on 50 mesh (% remaining) | 0 | 5.9 | 15.2 | 7.6 | 75.7 | 1.9 | 20.2 | 12.4 |
| Dispersion (2 min) (% not dispersed) | 16.1 | 31.1 | 12.6 | 16.1 | 21.9 | 64.6 | 51.5 | 13.4 |
| Dispersion (5 min) (% not dispersed) | 16.6 | 24.7 | 7.8 | 10.7 | 13.2 | 44.7 | 29.1 | 9.2 |
| Dispersion (10 min) (% not dispersed) | 8.4 | 24.3 | 6.2 | 6.3 | 15.7 | 33.0 | 31.9 | 6.2 |

FIG. 35

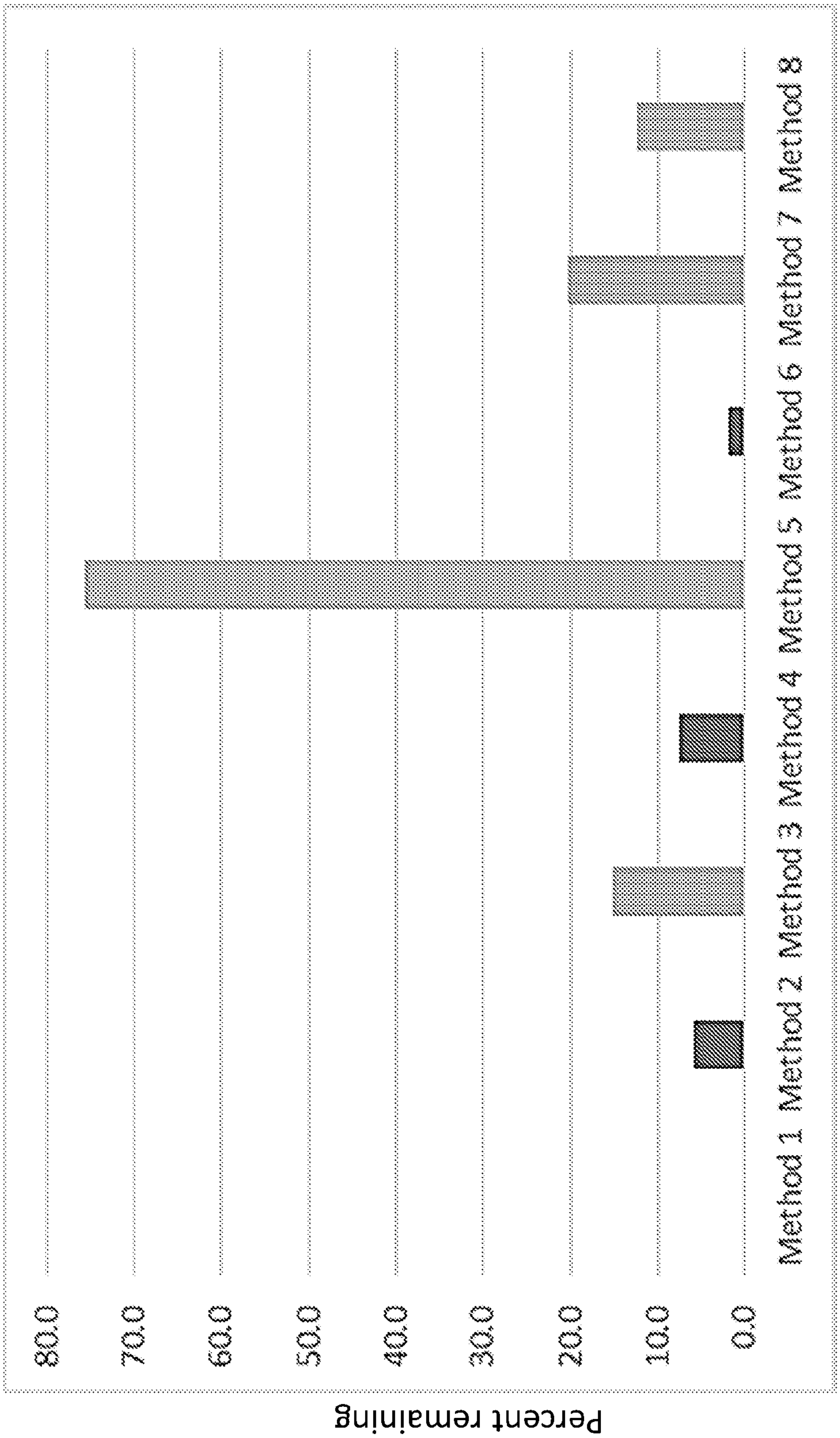
Percent remaining
80.0
70.0
60.0
50.0
40.0
30.0
20.0
10.0
0.0
Method 1
Method 2
Method 3
Method 4
Method 5
Method 6
Method 7
Method 8

FIG. 36

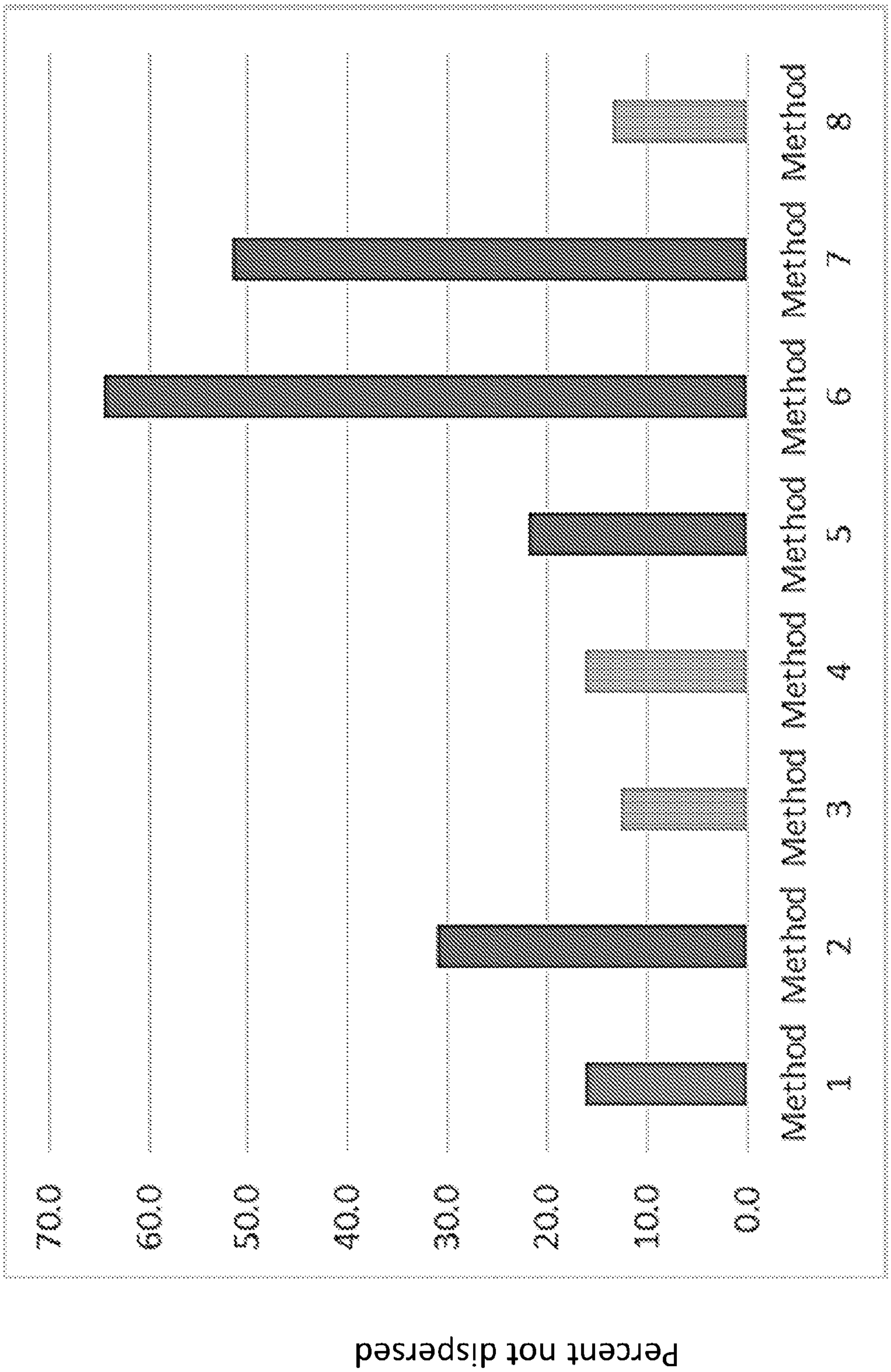
Percent not dispersed
70.0
60.0
50.0
40.0
30.0
20.0
10.0
0.0
Method 1
Method 2
Method 3
Method 4
Method 5
Method 6
Method 7
Method 8

FIG. 37

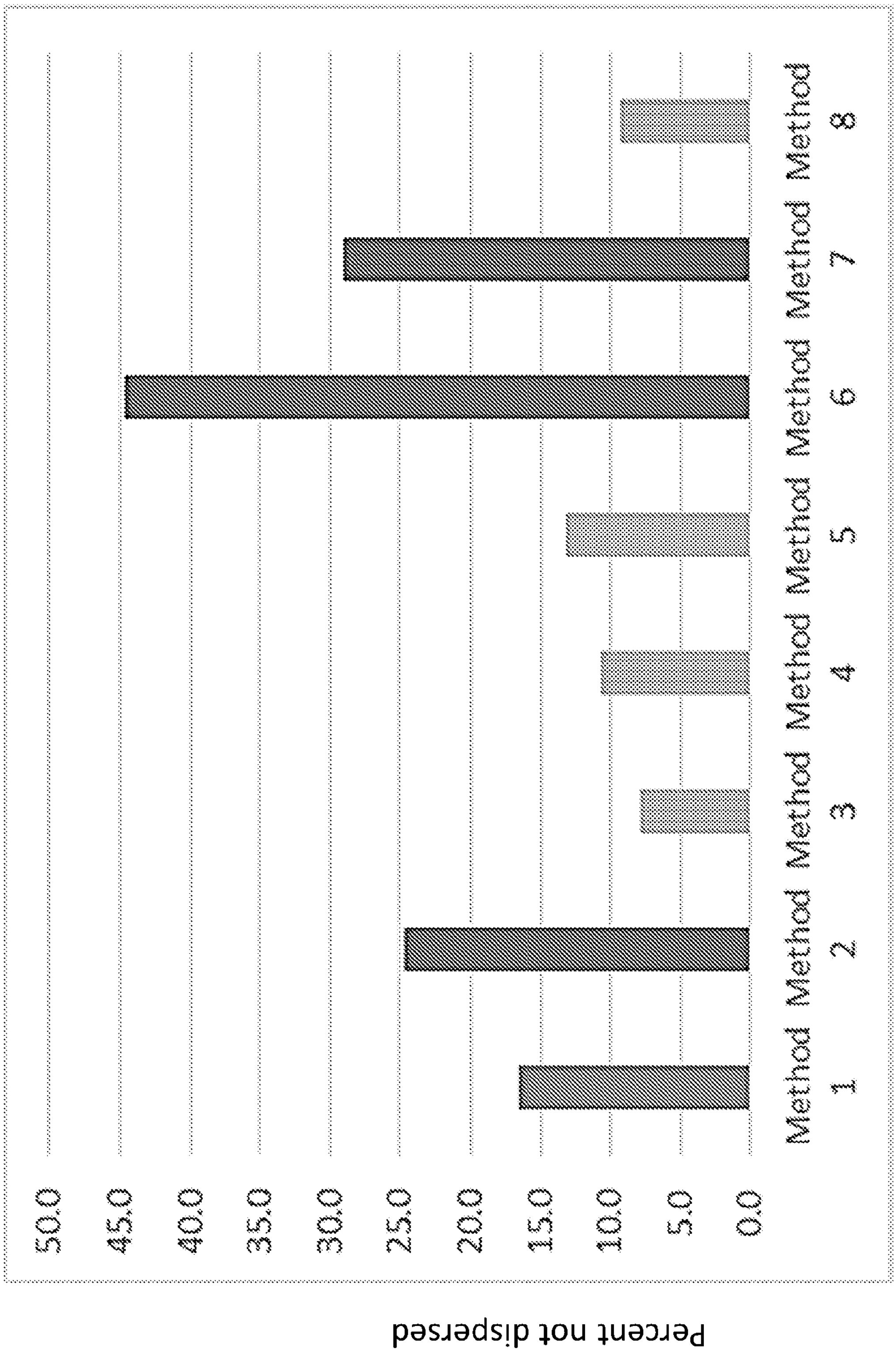
Percent not dispersed
50.0
45.0
40.0
35.0
30.0
25.0
20.0
15.0
10.0
5.0
0.0
Method 1
Method 2
Method 3
Method 4
Method 5
Method 6
Method 7
Method 8

FIG. 38

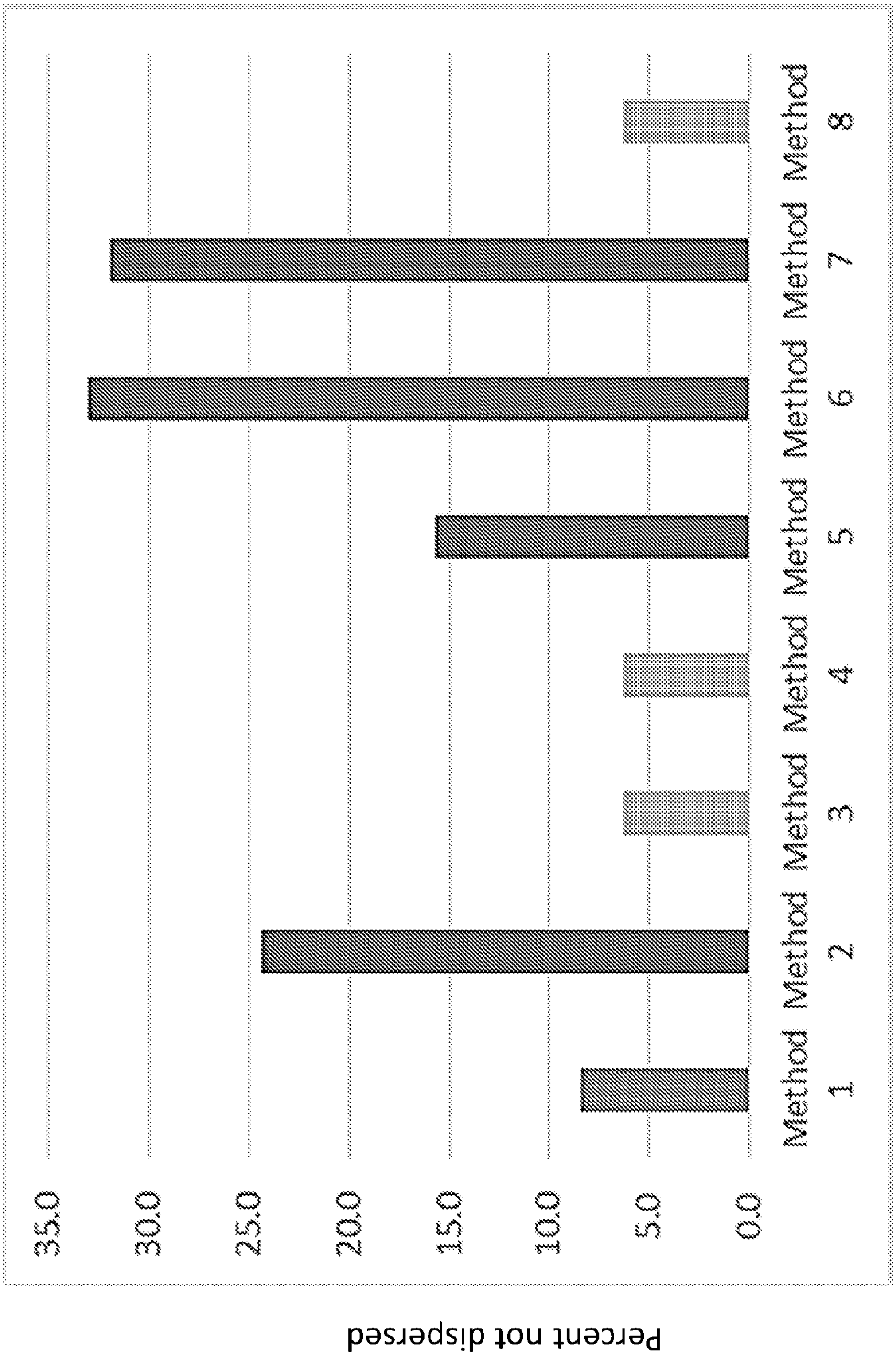
Percent not dispersed
35.0
30.0
25.0
20.0
15.0
10.0
5.0
0.0
Method 1
Method 2
Method 3
Method 4
Method 5
Method 6
Method 7
Method 8

FIG. 39

| | Method 1 | Method 2 | Method 3a | Method 3b | Method 4 | Method 5 | Method 6 | Method 7 | Method 8 |
|---|---|---|---|---|---|---|---|---|---|
| Ca (+ 12 mesh) | na | 0.91 | 1.84 | 2.27 | 1.86 | na | 10.6 | 3.12 | 0 |
| Ca (12 x 35 mesh) | na | 0.76 | 1.84 | 2.36 | 1.90 | 1.83 | 11.4 | 3.15 | 1.91 |
| Ca (35 x 100 mesh) | 1.72 | 0.53 | 1.82 | 2.69 | 2.14 | 1.93 | 10.9 | 4.43 | 2.05 |
| Ca (- 100 mesh) | 2.13 | 0.39 | 2.18 | 2.17 | 1.99 | 1.47 | 11.6 | 3.98 | 1.95 |
| Mineral C.V. | 15% | 36% | 9% | 10% | 6% | 14% | 4% | 18% | 4% |
| Protein (+ 12 mesh) | na | 0.524 | 4.82 | 4.04 | 4.75 | na | 3.89 | 9.962 | 0 |
| Protein (12 x 35 mesh) | na | 0.747 | 4.69 | 4.04 | 4.75 | 5.03 | 3.79 | 8.753 | 4.627 |
| Protein (35 x 100 mesh) | 6.36 | 5.42 | 5.84 | 3.62 | 4.08 | 4.21 | 4.26 | 6.086 | 4.205 |
| Protein (- 100 mesh) | 2.74 | 12.6 | 3.87 | 4.80 | 5.96 | 6.84 | 3.98 | 5.923 | 5.854 |
| Proximate C.V. | 56% | 117% | 17% | 12% | 16% | 25% | 5% | 26% | 17% |

FIG. 40

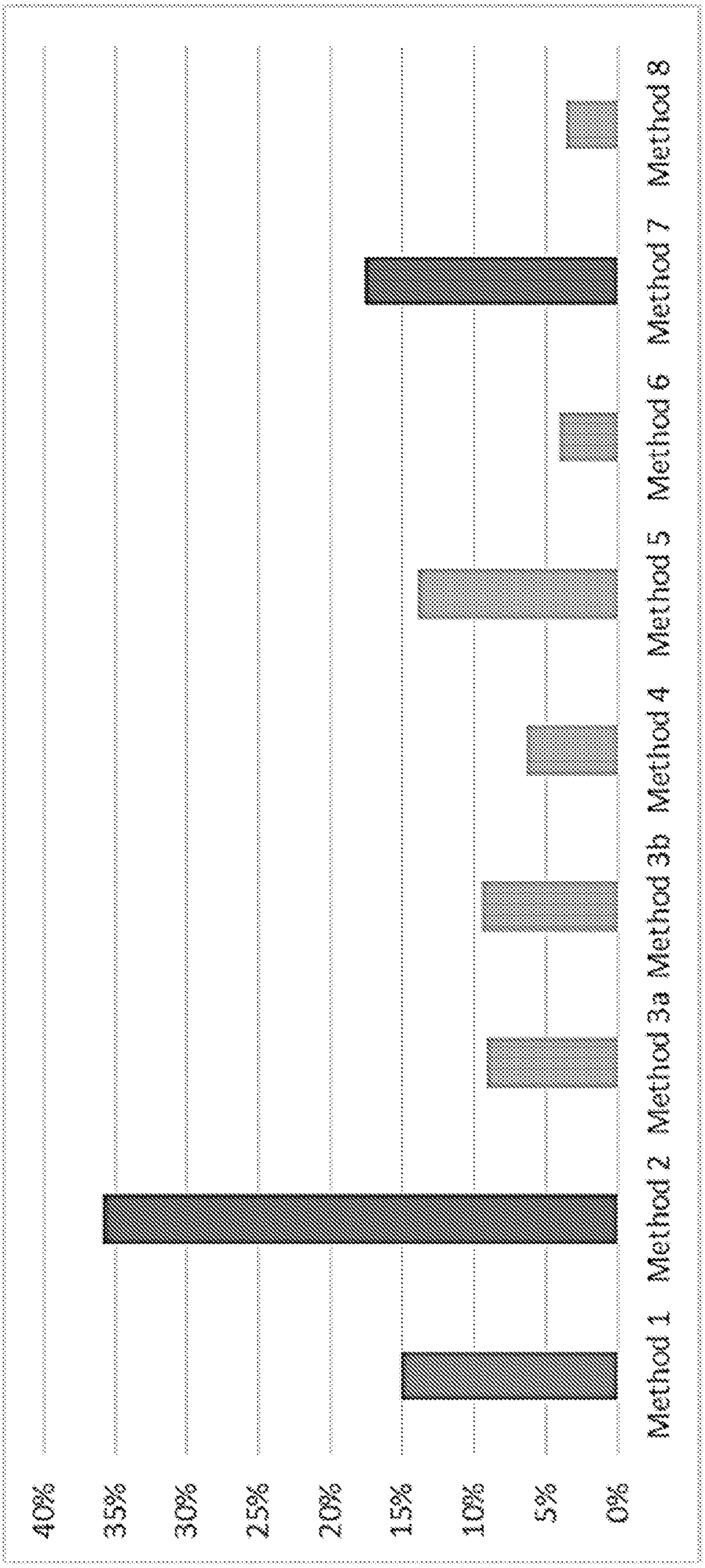
40%
35%
30%
25%
20%
15%
10%
5%
0%
Method 1
Method 2
Method 3a
Method 3b
Method 4
Method 5
Method 6
Method 7
Method 8

FIG. 41

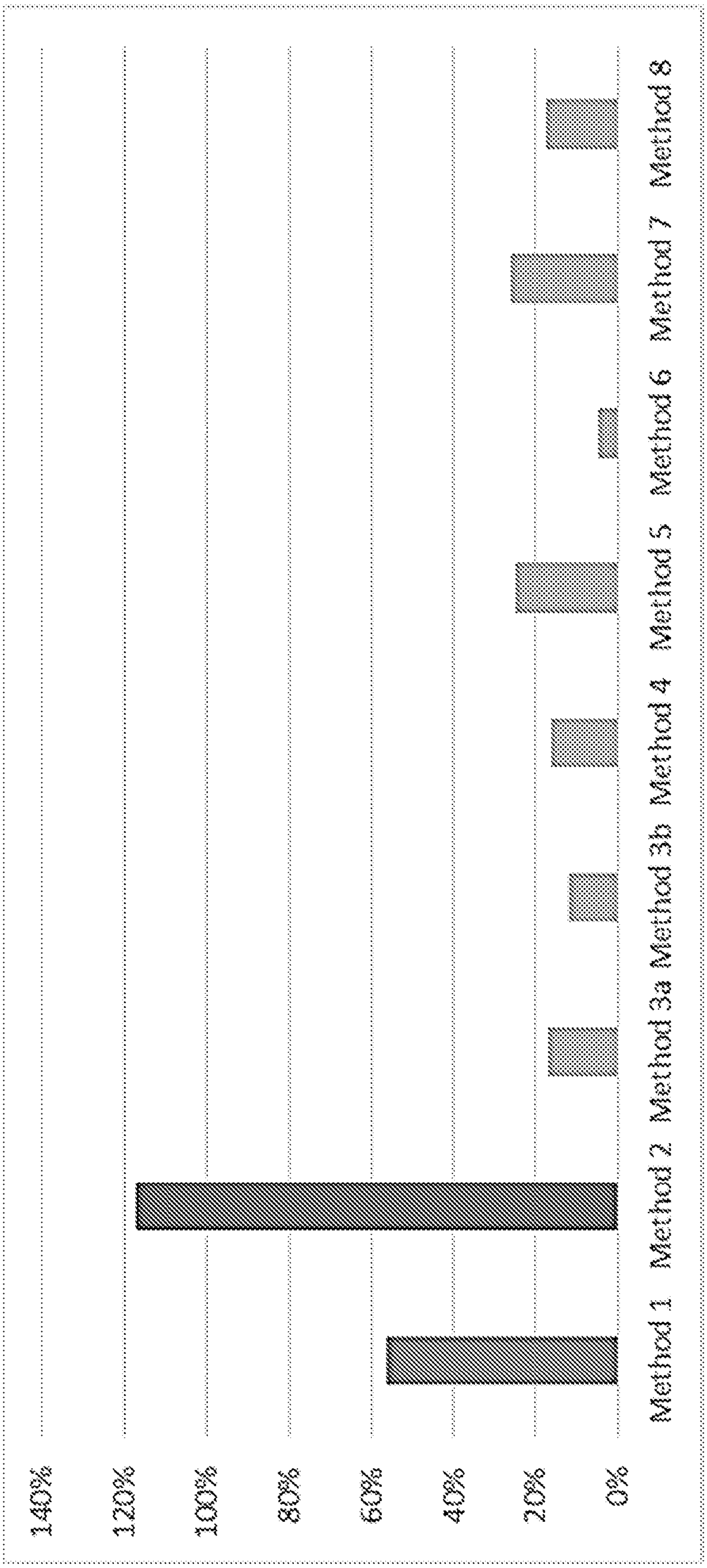
140%
120%
100%
80%
60%
40%
20%
0%
Method 1
Method 2
Method 3a
Method 3b
Method 4
Method 5
Method 6
Method 7
Method 8

FIG. 42

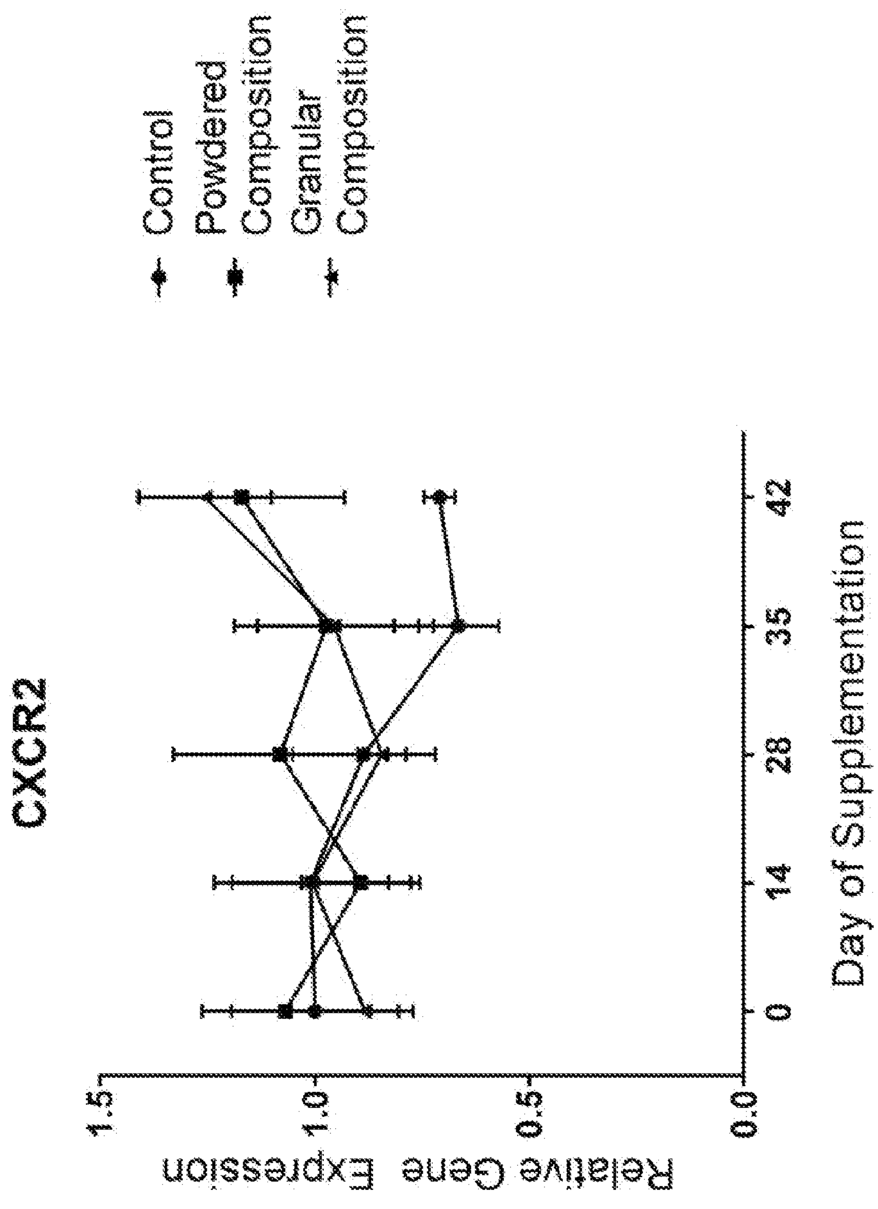
CXCR2
Relative Gene Expression
1.5
1.0
0.5
0.0
0
14
28
35
42
Day of Supplementation
Control
Powdered Composition
Granular Composition

FIG. 43

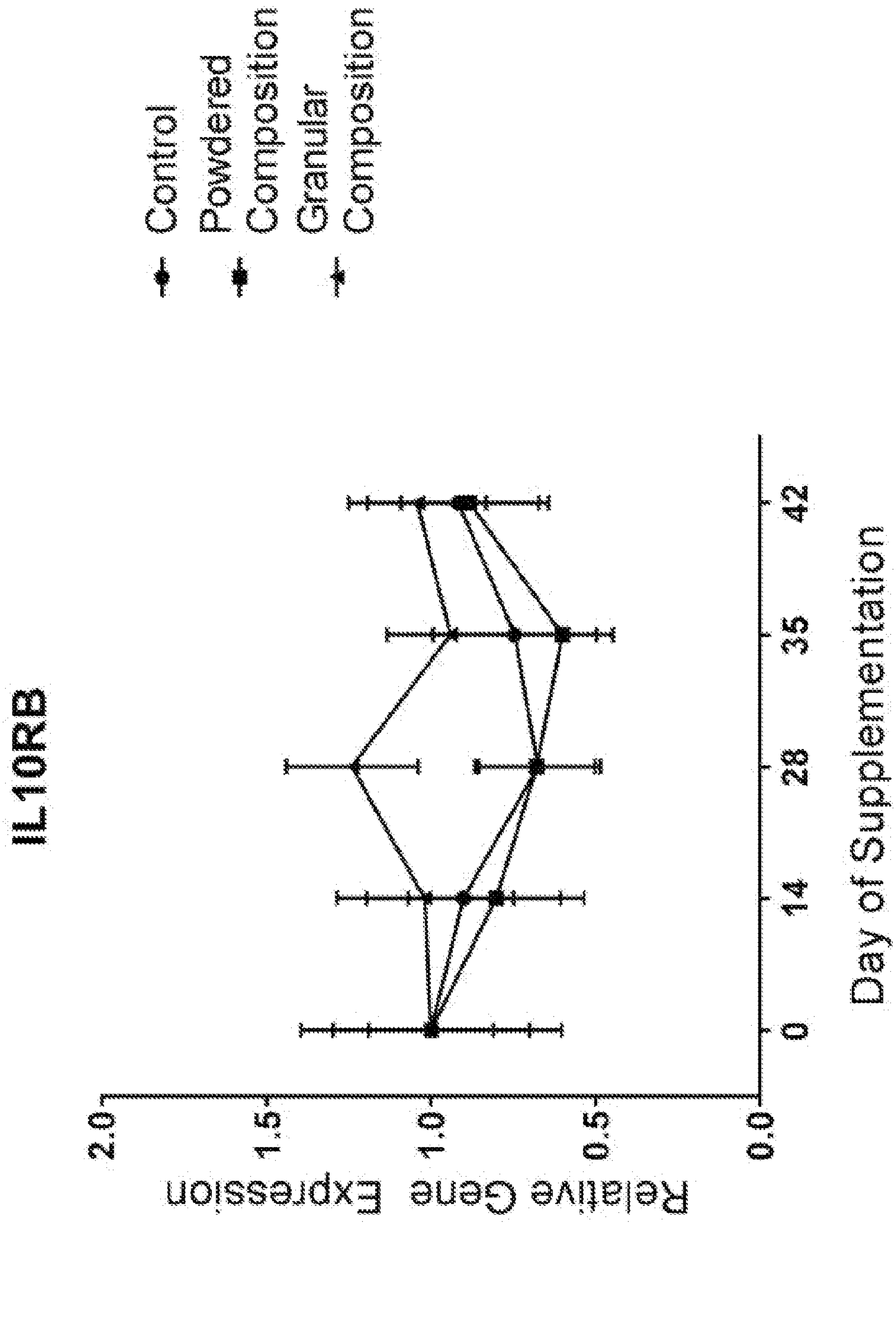
IL10RB
Relative Gene Expression
2.0
1.5
1.0
0.5
0.0
0
14
28
35
42
Day of Supplementation
Control
Powdered Composition
Granular Composition

FIG. 44

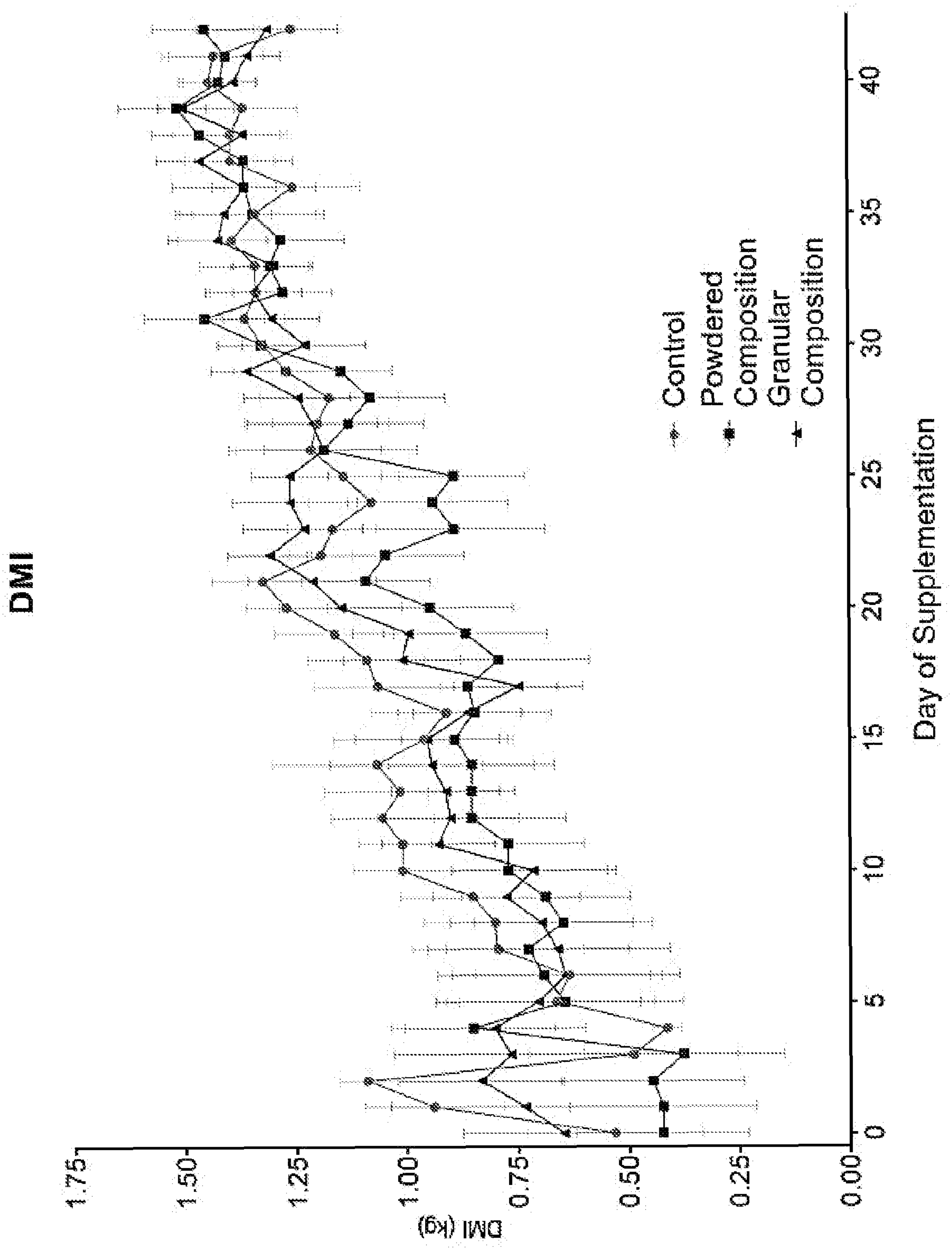
DMI
DMI (kg)
0.00
0.25
0.50
0.75
1.00
1.25
1.50
1.75
0
5
10
15
20
25
30
35
40
Day of Supplementation
Control
Powdered Composition
Granular Composition

FIG. 45

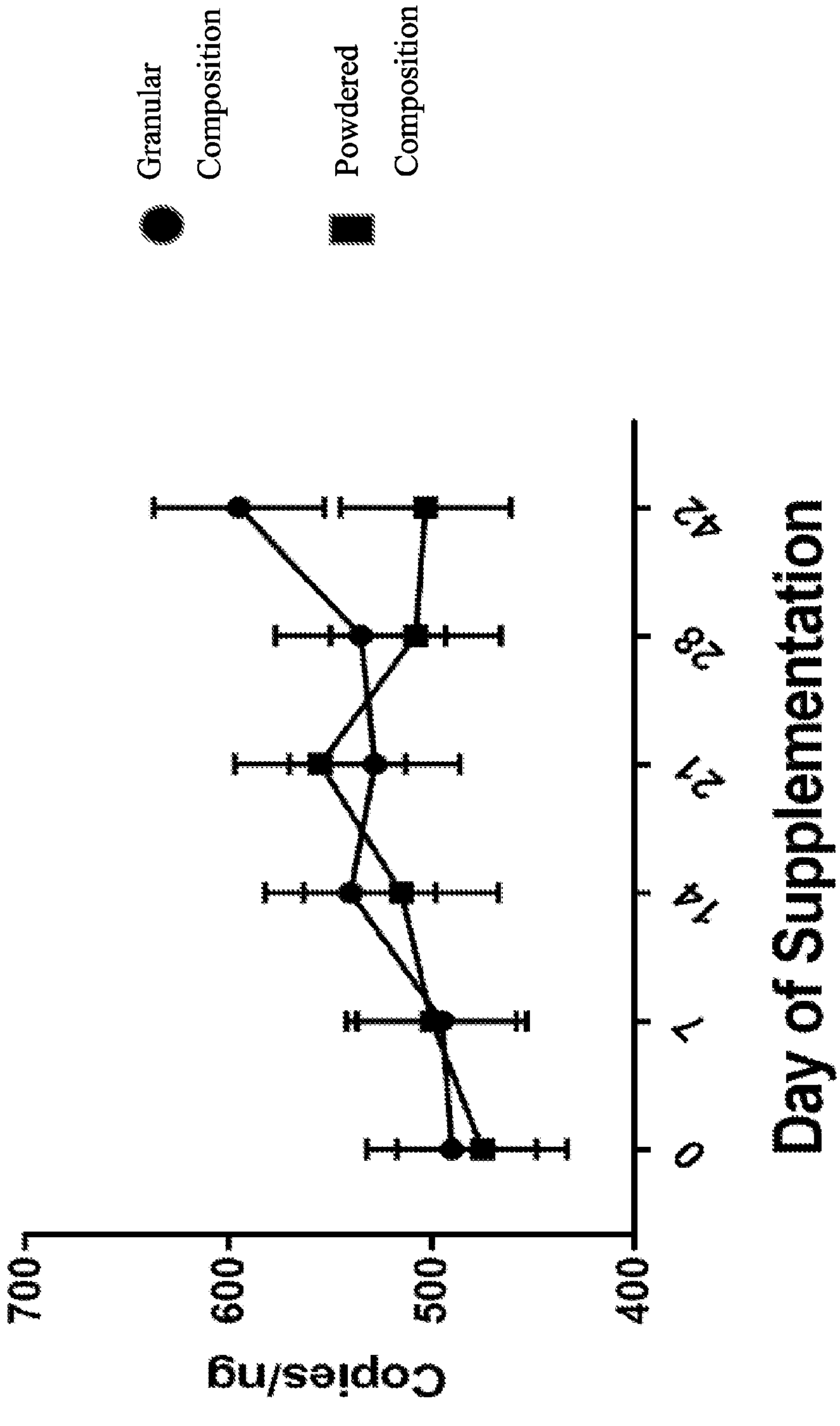
Copies/ng
700
600
500
400
0
7
14
21
28
42
Day of Supplementation
Granular Composition
Powdered Composition

FIG. 46

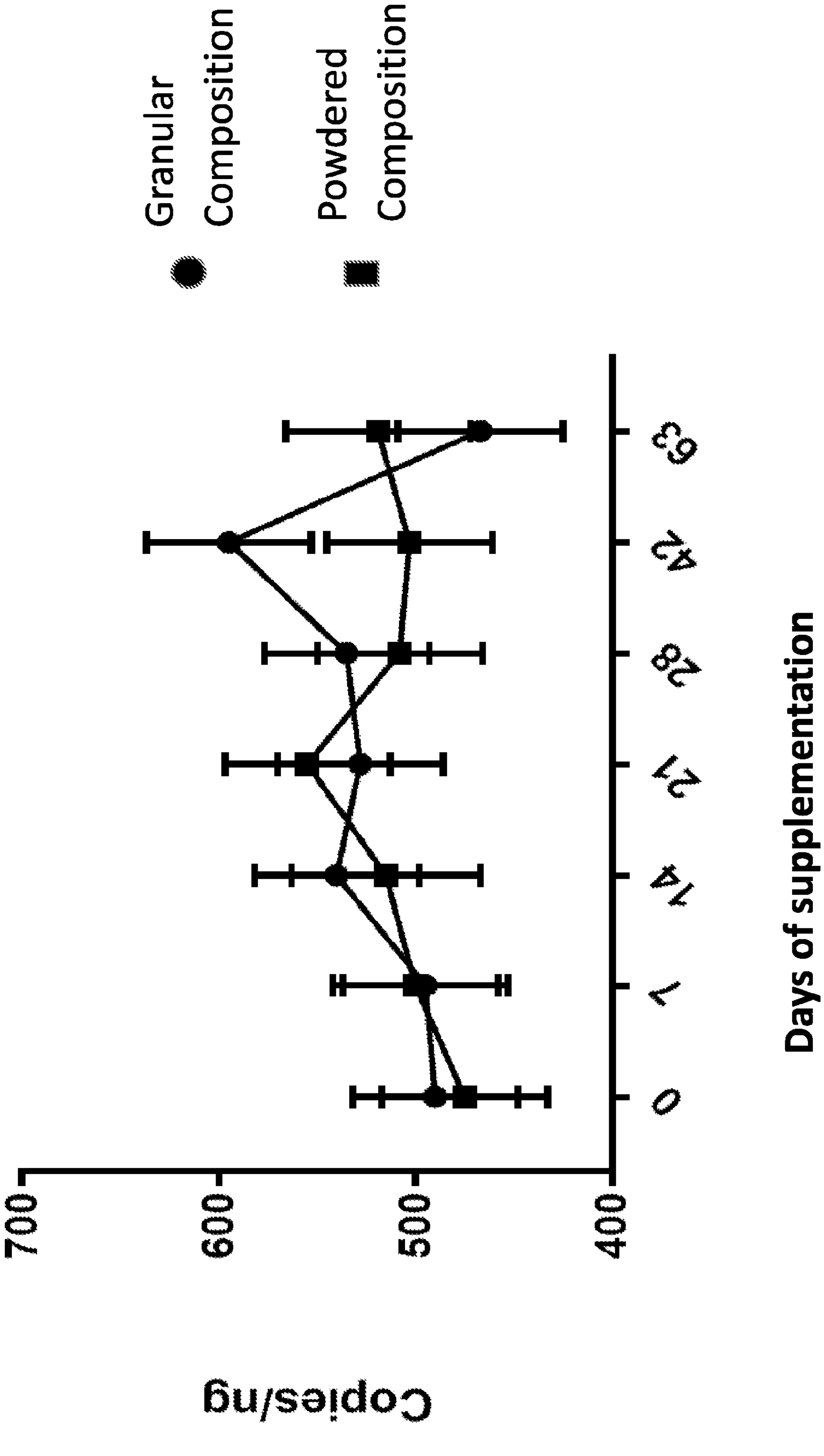
Granular Composition
Powdered Composition
Copies/ng
700
600
500
400
0
7
14
21
28
42
63
Days of supplementation

FIG. 47

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015017336 A1
- WO 2015123456 A1
- WO 2007021262 A1
- US 7598061 B
- US 7939066 B
- US 8568715 B
- US 8663644 B
- US 9497981 B
- AU 2011201420
- US 2015053439 W
- US 359342 A
- US 14699740 B
- US 14606862 B
- US 8142798 B